# FASCICULE DE BREVET EUROPEEN

(11) **EP 1 817 319 B1**
(45) Date de publication et mention de la délivrance du brevet: **03.07.2013**
(21) Numéro de dépôt: 05824048.2
(22) Date de dépôt: 02.12.2005
(51) Int. Cl.: C07F 9/17

(54) **DERIVES DE L'INOSITOL-PHOSPHATE ET PROCEDE DE DETECTION DE L'INOSITOL-1-PHOSPHATE**
INOSITPHOSPHATDERIVATE UND VERFAHREN ZUM NACHWEIS VON INOSIT-1-PHOSPHAT
INOSITOL-PHOSPHATE DERIVATIVES AND METHOD OF DETECTING INOSITOL-1-PHOSPHATE

(30) Priorité: 02.12.2004 FR 0412797
(43) Date de publication de la demande: 15.08.2007
(73) Titulaire: CIS BIO INTERNATIONAL, 91400 Saclay (FR)
(72) Inventeur: BAZIN, Hervé, F-30400 Villeneuve Les Avignon (FR); ANSANAY, Hervé, F-34000 Montpellier (FR); TRINQUET, Eric, F-30130 Pont Saint Esprit (FR); MATHIS, Gérard, F-30200 Bagnols Sur Ceze (FR)
(74) Mandataire: Gillard, Marie-Louise
(86) Numéro de dépôt international: PCT/FR2005/051032
(87) Numéro de publication internationale: WO 2006/059052

(56) Documents cités:
- WO-A-01/85740
- WO-A-03/087109
- US-A1- 2001 056 072
- US-A1- 2004 106 158
- ESSEN L-O ET AL: "STRUCTURAL ANALYSIS OF THE CATALYSIS AND MEMBRANE ASSOCIATION OF PLC-DELTA1" ACS SYMPOSIUM SERIES, WASHINGTON, DC, US, vol. 718, 1999, pages 121-136, XP009051572 ISSN: 0097-6156
- COTTAZ S ET AL: "Parasite glycoconjugates. Part 3. Synthesis of substrate analogues of early intermediates in the biosynthetic pathway of glycosylphosphatidylinositol membrane anchors" JOURNAL OF THE CHEMICAL SOCIETY, PERKIN TRANSACTIONS 1, CHEMICAL SOCIETY. LETCHWORTH, GB, 1995, pages 1673-1678, XP002176135 ISSN: 0300-922X
- BERLIN ET AL: "Glycosylinositol derivatives. III. Synthesis of hexosamine inositol phosphates related to putative insulin mediators" TETRAHEDRON, ELSEVIER SCIENCE PUBLISHERS, AMSTERDAM, NL, vol. 47, no. 1, 1991, pages 1-20, XP002088795 ISSN: 0040-4020
- KRAUTER, TOBIAS ET AL: "Phospholipids as modulators of KATP channels: distinct mechanisms for control of sensitivity to sulphonylureas, K+ channel openers, and ATP" MOLECULAR PHARMACOLOGY , 59(5), 1086-1093 CODEN: MOPMA3; ISSN: 0026-895X, 2001, XP002341241
- CHEN, JIAN ET AL: "Asymmetric Total Synthesis of Phosphatidylinositol 3-Phosphate and 4-Phosphate Derivatives" JOURNAL OF ORGANIC CHEMISTRY , 63(19), 6511-6522 CODEN: JOCEAH; ISSN: 0022-3263, 1998, XP002341242
- COBB, JEFF E. ET AL: "Synthesis of 6-O-(2-aminoethyl)-D,L-myo-inositol 1,2-cyclic phosphate: a model of a putative insulin second messenger" TETRAHEDRON ( 1991 ), 47(1), 21 - 30 CODEN: TETRAB; ISSN: 0040-4020, 1991, XP002387812
- FALCK J R ET AL: "Concise syntheses of l-alpha-phosphatidyl-d-myo-inositol 3-phosphate (3-PIP), 5-phosphate (5-PIP), and 3,5-bisphosphate (3,5-PIP2)" TETRAHEDRON LETTERS, ELSEVIER, AMSTERDAM, NL, vol. 41, no. 22, juin 2000 (2000-06), pages 4271-4275, XP004205551 ISSN: 0040-4039

## Description

La présente invention a pour objet des dérivés de l'inositol-phosphate et fournit de nouveaux outils permettant l'étude du cycle des inositols-phosphates et donc, indirectement, l'étude des récepteurs à sept domaines transmembranaires (récepteurs 7TM) couplés à la phospholipase C (PLC), des récepteurs ayant une activité de tyrosine-kinase, et de manière générale des enzymes impliquées dans les variations de la concentration intracellulaire d'IP1.

Le terme "inositol-phosphate" désigne un composé de la famille des cyclitols de type cyclohexane comportant un groupe hydroxyle sur chaque carbone (1,2,3,4,5,6-hexahydroxy-cyclohexanes). Le composé naturel le plus représenté est le *myo*-inositol, dont les groupes hydroxyles dans les positions 1, 2, 3 et 5 sont situés sur une des faces du cycle cyclohexane et les deux groupes hydroxyles dans les positions 4 et 6 sont situés sur l'autre face. Les composés naturels produits au cours du cycle des inositol-phosphates sont des D-*myo*-inositol phosphates, dont le phosphate se trouve en position 1, 3, 4 ou 5 du cycle de l'inositol. Ces composés sont généralement appelés « IP1 », par opposition par exemple à l'IP2 (inositol bisphosphate) ou IP3 (inositol trisphosphate). Dans la suite du texte, ces composés seront respectivement désignés par les acronymes suivants : IP1(1), IP1(3), IP1(4), IP1(5) et ont pour formules :

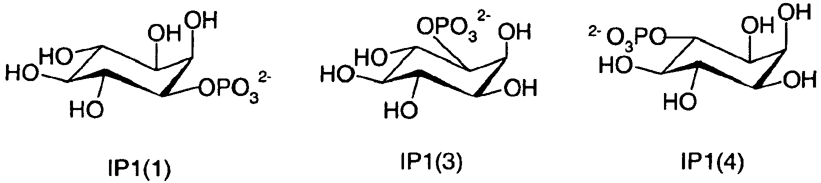

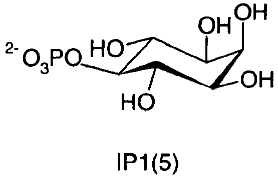

L'IP1(1) et l'IP1(4) sont les intermédiaires les plus étudiés.

Des dérivés de l'inositol-phophate ont déjà été décrits dans les documents de l'art antérieur ci-après :
- Essen et al., ACS SYMPOSIUM SERIES, WASHINGTON DC, US, (1999), vol. 718, pages 121-136 ;
- Cottaz et al., JOURNAL OF THE CHEMICAL SOCIETY, PERKIN TRANSACTIONS 1, CHEMICAL SOCIETY, LETCHWORTH, GB, (1995), pages 1673-1678 ;
- Berlin et al., TETRAHEDRON, ELSEVIER SCIENCE PUBLISHERS, AMSTERDAM, NL, (1991), vol. 47, n°1, pages 1-20 ;
- Krauter et al., MOLECULAR PHARMACOLOGY, (2001), 59(5), pages 1086-1093 ;
- Chen et al., JOURNAL OF ORGANIC CHEMISTRY, (1998), 63(19), pages 6511-6522 ;
- Cobb et al., TETRAHEDRON (1991), 47(1), pages 21-30 ;
- Falck et al., TETRAHEDRON LETTERS, ELSEVIER, AMSTERDAM, NL, juin 2000, vol. 41, n°22, pages 4271-4275 ;
- WO 01/85740 A ;
- WO 03/087109 A ;
- US 2004/106158 A1.

Aucun de ces documents ne décrit ou suggère les analogues de l'IP1 de la présente invention tels que définis ci-après.

Les récepteurs à sept domaines transmembranaires couplés aux protéines G (GPCR, 7 TM) sont impliqués dans de nombreux processus pathologiques. Ils ont notamment pour fonction de transmettre les signaux du milieu extracellulaire vers le milieu intracellulaire à travers la membrane cellulaire. Les molécules jouant un rôle de messager dans l'organisme telles que les hormones, les facteurs de croissance, les cytokines ou encore les neurotransmetteurs, vont se lier à ces récepteurs, et déclencher une cascade d'événements à l'intérieur de la cellule.

L'étude du comportement de ces récepteurs en présence de composés susceptibles d'être utilisés comme médicaments est l'une des méthodes de choix permettant de découvrir de nouveaux traitements. L'une des voies largement utilisée pour étudier l'activation ou la désactivation de ces récepteurs consiste à mesurer les variations de concentration des messagers intracellulaires lors de la liaison de médicaments potentiels à ces récepteurs. Les outils permettant de mesurer les variations de ces messagers intracellulaires sont donc très précieux dans la recherche pharmaceutique, mais également dans les travaux de recherche fondamentale visant à mieux comprendre les mécanismes de signalisation inter/intra-cellulaire.

La liaison d'un ligand agoniste à un récepteur 7TM va modifier la structure tertiaire du récepteur qui induit à son tour une modification de conformation d'une protéine G couplée au récepteur. L'activation de cette protéine G va à son tour provoquer, suivant les cas, soit l'activation soit l'inhibition d'un effecteur qui produira un second messager intracellulaire comme l'AMPc ou l'IP3.

L'un de ces effecteurs est la phospholipase C (PLC) qui induit l'hydrolyse du phosphatidylinositol 4,5-biphosphate (PIP2) membranaire en diacylglycérol (DAG) et en inositol trisphosphate (IP₃). L'IP₃ à son tour provoque une augmentation de la concentration en Ca²⁺ intracellulaire par l'activation de récepteurs de l'IP₃ présents sur le réticulum endoplasmique. Cet IP₃ a un temps de demi-vie très rapide (moins d'une minute) car il est soit immédiatement phosphorylé sur sa position 3 en donnant l'inositol 1,3,4,5-tetrakis phosphate (IP₄) soit dégradé en IP2 par une phosphatase spécifique. L'IP4 et l'IP2 sont ensuite rapidement dégradés par une série d'enzymes (5-, 3-, 4- ou 1-PPASEs) pour donner majoritairement de l'IP1(1) et l'IP1(4) mais également de l'IP1(3) et de l'IP1(5). Ces inositol monophosphates ont tendance à s'accumuler avant d'être dégradés en inositol par l'action de l'inositol monophosphatase (IMPase). Cette dernière dégradation peut être artificiellement ralentie par l'utilisation de sels de lithium inhibiteurs de l'IMPase [Parthasarathy et al. Life Sci. (1994), 54, 1127-1142] ce qui permet une accumulation d'IP1 dans la cellule et facilite le dosage éventuel de cet intermédiaire. L'ensemble des transformations de ces dérivés de l'inositol est appelé cycle de l'inositol. L'IP1 produit par l'activation du cycle de l'inositol est l'un de ces messagers intracellulaires et son dosage permet de détecter la modulation de la voie de signalisation impliquant la phospholipase C.

Les dosages d'IP1 décrits dans la littérature sont basés principalement sur des méthodes radio-isotopiques [Berridge et al. Biochem J. (1983) 212, 473-82]. Des cellules sont incubées en présence d'inositol tritié (48h) et de chlorure de lithium pour éviter la dégradation enzymatique de l'IP1 formé. Les cellules sont traitées avec un agent stimulant les récepteurs membranaires (neuromédiateur agoniste) puis sont lysées et l'inositol ainsi que l'ensemble des inositols phosphates (IP3, IP2, IP4, IP1) de la fraction cytosolique sont déposés sur une colonne échangeuse d'anions et cette colonne est éluée par un gradient de formiate d'ammonium; l'IP1 marqué au tritium est collecté à une force ionique donnée, la radioactivité mesurée permet ainsi d'estimer la quantité d'IP1 formée par la stimulation des cellules. Cette technique, assez difficile à maîtriser, a l'inconvénient d'utiliser des radioisotopes et ne permet pas une quantification absolue de l'IP1 formé ; de plus cette méthode ne permet pas un grand nombre de dosages simultanés. Néanmoins elle a pu être miniaturisée [Chengalvala et al. J Biochem. Biophys. Methods (1999), 38, 163-170] pour répondre partiellement aux besoins, tels que le criblage à haut débit de molécules.

D'autres techniques utilisant les inositides tritiés [Zheng W et al. J Biomol Screen. (2004) 9(2):132-40], [Brandish P.E. et al. Anal. Biochem. (2003) 313, 311-318] et [Liu JJ et al. Anal Biochem. 2003 Jul 1; 318(1):91-9] ont été proposées; la différence avec la technique isotopique précédente réside essentiellement au niveau de la mesure. Dans ces techniques on utilise un test de scintillation de proximité, connu sous la dénomination anglaise « Scintillation Proximity assay » (SPA) mettant en jeu une phase solide recouverte d'un complexe métallique possédant une affinité pour les groupes phosphate [Liu et al, Anal Biochem (2003)]. Dans ce cas tous les intermédiaires phosphorylés (IP1, IP2, IP3 etc.) sont dosés ensemble et la sélectivité n'est possible qu'entre l'inositol et les inositol - phosphates. Cette technique est mieux adaptée au criblage à haut débit et permet de réaliser de nombreux dosages simultanés mais bien évidemment manque de sélectivité et ne permet pas de doser l'IP1 seul.

Pour pouvoir mettre en oeuvre un dosage non-radioactif de l'IP1 il faut disposer d'un analogue fonctionnalisé de l'IP1 de stéréochimie définie. Le *myo-*inositol étant une molécule possédant un plan de symétrie, n'est donc pas optiquement active (composé dit "meso" dont l'activité optique est détruite par l'existence d'une symétrie), sa phosphorylation peut conduire par exemple à deux énantiomères possibles qui sont le D-*myo-*inositol-1-phosphate et le L-*myo*-inositol-1-phosphate, l'énantiomère D étant produit dans la cellule par le cycle de l'inositol. Les dérivés de l'IP3 décrits dans la littérature [Prestwich et al. J. Amer. Chem. Soc. (1991)] sont fonctionnalisés sur le phosphate en position 1 ; de ce fait ils sont peu adaptés pour générer des anticorps spécifiques de l'IP1.

Les inventeurs ont développé des dérivés de l'IP1 permettant de surmonter les obstacles et inconvénients rencontrés lors de la mise en oeuvre des méthodes de dosage de l'IP1 de l'art antérieur.

### Description de l'invention

L'invention fournit des analogues fonctionnels de l'IP1(1), IP1(3), IP1(4) et IP1(5), substitués par un groupe réactionnel G ou une substance ou molécule conjuguée M, ledit groupe réactionnel G ou substance ou molécule M étant lié à l'IP1 via un groupe de liaison L. Les composés selon l'invention sont des analogues fonctionnels de l'IP1 dans la mesure où ils possèdent les mêmes propriétés biologiques que ce dernier mais ont en plus l'avantage de pouvoir être conjugués à une molécule ou substance.

L'invention fournit en particulier des dérivés de l'IP1, avantageusement substitués sur l'un quelconque des carbones du cycle inositol ne portant pas le groupe phosphate par un ou deux groupements réactionnels G, ou bien par une ou deux substances ou molécules M, lesdits groupes réactionnels, substances ou molécules étant éventuellement liés à l'IP1 via un groupe de liaison L.

La substance ou molécule M, conjuguée avec un dérivé de l'IP1 de l'invention substitué par un groupement réactionnel G, peut être un marqueur permettant de détecter l'IP1 dans un milieu de mesure complexe. Ces marqueurs peuvent par exemple être des radio-isotopes, des composés fluorescents ou luminescents ou encore des enzymes dont l'activité en présence de leur substrat est aisément mesurable. La substance ou molécule M peut également être une étiquette (couramment dénommée en langue anglaise TAG), qui sera par exemple reconnue par un anticorps spécifiquement dirigé contre cette étiquette.

Les dérivés selon l'invention peuvent être par ailleurs liés à un support solide, et ce de manière covalente au niveau d'un carbone du cycle inositol ne portant pas le groupe phosphate.

L'invention fournit également des dérivés de l'IP1 immunogènes, permettant de fabriquer des anticorps spécifiques de l'IP1. Ces immunogènes sont constitués par les analogues selon l'invention liés de manière covalente, au niveau d'un carbone du cycle inositol ne portant pas le groupe phosphate, à une molécule porteuse.

L'invention fournit en outre des ligands reconnaissant de manière spécifique l'IP1, et en particulier des anticorps spécifiques de l'IP1, dits anticorps anti-IP1.

L'invention fournit par ailleurs des méthodes de détection de l'IP1, ces méthodes mettant en oeuvre les analogues de l'IP1 selon l'invention ou les ligands spécifiques de l'IP1 selon l'invention, ainsi que des trousses contenant les éléments nécessaires à la mise en oeuvre de ces procédés.

Enfin, l'invention fournit des procédés de synthèse d'analogues de l'IP1.

Les analogues fonctionnels de l'IP1 selon l'invention ont pour formule générale : 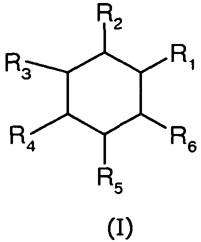 dans laquelle :
les substituants R₁, R₂, R₃, R₄, R₅, R₆ sont choisis parmi : -OH, -OPO₃²⁻, -OPO(OH)₂ ou OPO(OH)O⁻, -(OCONH)q-L-G ou -(OCONH)q-L-M, à la condition que l'un des substituants R₁ à R₆ soit un groupe -OPO₃²⁻, -OPO(OH)₂ ou OPO(OH)O⁻ et un des autres substituants R₁ à R₆ soit l'un des groupes -(OCONH)_{q}-L-G ou -(OCONH)_{q}-L-M, les autres substituants R₁ à R₆ étant des groupes -OH ;
où :
   q est égal à 1,
   L est un groupe de liaison,
   G est un groupe réactionnel,
   M est une substance ou molécule conjuguée choisie parmi le groupe suivant : un traceur, un immunogène, un support solide, un membre d'un couple de partenaires de liaison choisi parmi les membres des couples suivants :
      avidine ou streptavidine / biotine, haptène / anticorps comme par exemple 6HIS /anticorps anti-6HIS, FLAG / anticorps anti-FLAG, DNP / anticorps anti-DNP, GST / anticorps anti-GST, Cmyc / anticorps anti-Cmyc, HA / anticorps anti-HA, oligonucléotide simple brin / oligonucléotide simple brin complémentaire.

Les familles préférées de composés selon l'invention sont des dérivés du *myo-*inositol de formule (II) : 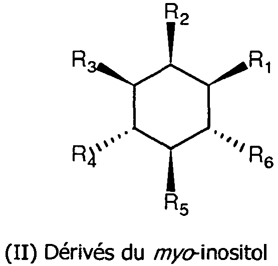 dans laquelle :
l'un des substituants R₁, R₃, R₄ ou R₅ est choisi parmi les groupes -OPO₃²⁻, -OPO(OH)₂ ou -OPO(OH)O⁻,
un des autres substituants R₁-R₆ est choisi parmi les groupes -(OCONH)q-L-G ou -(OCONH)q-L-M,
les autres substituants sont des groupes OH,
où :
   q est égal à 1 ;
   L est un groupe de liaison ;
   G est un groupe réactionnel ;
   M est une substance ou molécule conjuguée choisie parmi le groupe suivant : un traceur, un immunogène, un support solide, un membre d'un couple de partenaires de liaison choisi parmi les membres des couples tels que définis ci-dessus pour les composés de formule (I).

L'invention concerne également les dérivés du *chiro-, néo-, scyllo-* et *épi*-inositol ayant la même stéréochimie que les dérivés de *myo*-inositol sauf sur les carbones portant les substituants (OCONH)q-L-G ou -(OCONH)_{q}-L-M.

Les dérivés de *chiro-*inositol selon l'invention comportent un groupe phosphate en position 1, 4 ou 5 et sont fonctionnalisés en position 3. Ces dérivés répondent à la formule (III): 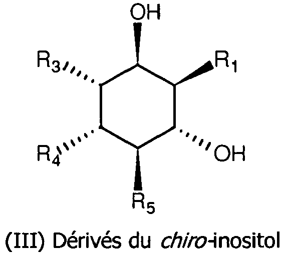 dans laquelle :
l'un des substituants R₁, R₄, R₅ est choisi parmi : -OPO₃²⁻, -OPO(OH)₂ ou -OPO(OH)O⁻,
R₃ est choisi parmi : -(OCONH)q-L-G ou -(OCONH)q-L-M,
les autres substituants R₁, R₄ et R₅ sont des groupes -OH,
   où :
   q est égal à 1 ;
   L est un groupe de liaison ;
   G est un groupe réactionnel ;
   M est une substance ou molécule conjuguée choisie parmi le groupe suivant : un traceur, un immunogène, un support solide, un membre d'un couple de partenaires de liaison choisi parmi les membres des couples tels que définis ci-dessus pour les composés de formule (I).

Les dérivés du *néo*-inositol selon l'invention comportent un groupe phosphate en position 1, 3 ou 5 et sont fonctionnalisés en position 4. Ces dérivés répondent à la formule (IV) : 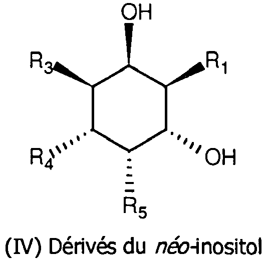 dans laquelle :
l'un des substituants R₁, R₃, R₄ est choisi parmi : -OPO₃²⁻, -OPO(OH)₂ ou -OPO(OH)O⁻,
R₅ est choisi parmi : -(OCONH)q-L-G ou -(OCONH)q-L-M,
les deux autres substituants R₁, R₃ et R₄ sont des groupes -OH,
où :
   q est égal à 1 ;
   L est un groupe de liaison ;
   G est un groupe réactionnel ;
   M est une substance ou molécule conjuguée choisie parmi le groupe suivant : un traceur, un immunogène, un support solide, un membre d'un couple de partenaires de liaison choisi parmi les membres des couples tels que définis ci-dessus pour les composés de formule (I).

Les dérivés du *scyllo*-inositol selon l'invention comportent un groupe phosphate en position 1, 3, 4 ou 5 et sont fonctionnalisés en position 2. Ces dérivés répondent à la formule (V) : 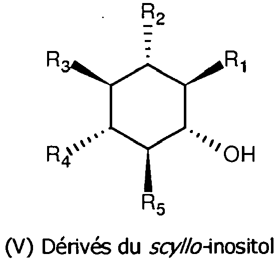 dans laquelle :
l'un des substituants R₁, R₃, R₄, R₅ est choisi parmi : -OPO₃²⁻, -OPO(OH)₂ ou -OPO(OH)O⁻,
R₂ est choisi parmi : -(OCONH)q-L-G ou -(OCONH)q-L-M,
les autres substituants R₁, R₃, R₄ et R₅ sont des groupes -OH ;
où :
   q est égal à 1 ;
   L est un groupe de liaison ;
   G est un groupe réactionnel ;
   M est une substance ou molécule conjuguée choisie parmi le groupe suivant : un traceur, un immunogène, un support solide, un membre d'un couple de partenaires de liaison choisi parmi les membres des couples tels que définis ci-dessus pour les composés de formule (I).

Enfin, les dérivés de l'*épi*-inositol selon l'invention comportent un groupe phosphate en position 1, 3 ou 5 et sont fonctionnalisés en position 4. Ces dérivés répondent à la formule (VI): 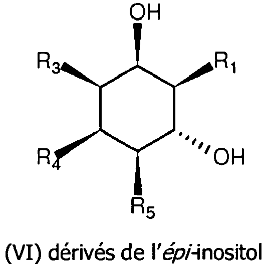 dans laquelle :
l'un des substituants R₁, R₃, R₅ est choisi parmi : -OPO₃²⁻, -OPO(OH)₂ ou -OPO(OH)O⁻.
R₄ est choisi parmi : -(OCONH)q-L-G ou -(OCONH)q-L-M,
les autres substituants R₁, R₃ et R₅ sont des groupes OH,
où :
   q est égal à 1 ;
   L est un groupe de liaison ;
   G est un groupe réactionnel ;
   M est une substance ou molécule conjuguée choisie parmi le groupe suivant : un traceur, un immunogène, un support solide, un membre d'un couple de partenaires de liaison choisi parmi les membres des couples tels que définis ci-dessus pour les composés de formule (I).

Les composés de formules (I) à (IV) selon l'invention dans lesquels l'un des substituants est un groupe phosphate -OPO₃²⁻ ou -OPO(OH)O⁻ sont éventuellement neutralisés par un cation Z monovalent ou divalent quelconque.

Des exemples de cations appropriés aux fins de l'invention sont les cations Li⁺, Na⁺, K⁺, (CH₃CH₂)₃NH⁺, (C₆H₁₁)-NH₃⁺, Ca²⁺ et Ce²⁺.

Une famille de composés préférés selon l'invention est constituée des composés de formules (I) à (VI) dans lesquelles R₁ est choisi parmi les groupes -OPO₃²⁻, -OPO(OH)₂ ou -OPO(OH)O⁻.

Une autre famille de composés préférés selon l'invention est constituée des composés de formules (I) à (V) dans lesquels R₄ est choisi parmi les groupes -OPO₃²⁻, -OPO(OH)₂ ou -OPO(OH)O⁻.

Parmi les composés de formules (I) à (VI), on préfère tout particulièrement :
1) les composés de formule (I) dans laquelle :
   - R₁ est un groupement -OPO₃Z₂, -OPO(OH)₂ ou -OPO(OH)OZ ;
   - R₂, R₃, R₄, R₅, R₆ sont choisis parmi : -OH, -(OCONH)_{q}-L-G ou -(OCONH)q-L-M, quatre des substituants R₂ à R₆ étant des groupes OH ;
2) les composés de formule (II) dans laquelle :
   - R₁ est un groupement -OPO₃Z₂, -OPO(OH)₂ ou -OPO(OH)OZ ;
   - R₂, R₃, R₄, R₅, R₆ sont choisis parmi : -OH, -(OCONH)_{q}-L-G ou -(OCONH)q-L-M, quatre des substituants R₂ à R₆ étant des groupes OH ;
3) les composés de formule (III) dans laquelle :
   - R₁ est un groupement -OPO₃Z₂, -OPO(OH)₂ ou -OPO(OH)OZ ;
   - R₃ est choisi parmi : -(OCONH)q-L-G ou -(OCONH)_{q}-L-M ;
4) les composés de formule (IV) dans laquelle :
   - R₁ est un groupement -OPO₃Z₂, -OPO(OH)₂ ou -OPO(OH)OZ ;
   - R₅ est choisi parmi : -(OCONH)_{q}-L-G ou -(OCONH)_{q}-L-M ;
5) les composés de formule (V) dans laquelle :
   - R₁ est un groupement -OPO₃Z₂, -OPO(OH)₂ ou -OPO(OH)OZ ;
   - R₂ est choisi parmi : -(OCONH)q-L-G ou -(OCONH)_{q}-L-M ;
6) les composés de formule (VI) dans laquelle :
   - R₁ est un groupement -OPO₃Z₂, -OPO(OH)₂ ou -OPO(OH)OZ ;
   - R₄ est choisi parmi : -(OCONH)_{q}-L-G ou -(OCONH)q-L-M.

Dans chacune des définitions ci-dessus, L, M et q sont tels que définis précédemment pour les composés de formule (I) et Z est un cation choisi parmi Li⁺, Na⁺, K⁺, (CH₃CH₂)₃NH⁺, (C₆H₁₁)-NH₃⁺.

Les analogues d'IP1 contenant un groupe réactionnel G peuvent être liés à de nombreuses molécules organiques ou inorganiques qui contiennent naturellement, ou dans lesquelles ont été introduits, des groupes fonctionnels susceptibles de réagir avec le groupe réactionnel G, permettant ainsi la liaison covalente de la substance ou molécule M à l'IP1, éventuellement via le groupe de liaison L.

### 1. Groupe réactionnel G :

Par groupe réactionnel G, on entend un groupe capable de réagir avec un groupe fonctionnel présent sur une autre substance ou molécule, pour former une liaison covalente. En l'occurrence, le groupe réactionnel G réagira avec un groupe fonctionnel présent sur la substance ou la molécule que l'on souhaite conjuguer à l'IP1.

Typiquement, le groupe réactionnel est un groupe électrophile ou nucléophile qui peut former une liaison covalente lorsqu'il est mis en présence d'un groupe nucléophile ou électrophile approprié, respectivement. La réaction de conjugaison entre l'analogue d'IP1 et la substance ou molécule à conjuguer M entraîne la formation d'une liaison covalente comportant un ou plusieurs atomes du groupe réactionnel. A titre d'exemples, les couples de groupes électrophiles / nucléophiles et le type de liaison covalente formée lorsqu'ils sont mis en présence sont listés ci-dessous :

| Groupe électrophile | Groupe nucléophile | Type de liaison |
|---|---|---|
| acrylamides | thiols | thioéthers |
| halogénures d'acyle | amines/anilines | carboxamides |
| aldéhydes | amines/anilines | imines |
| aldéhydes ou cétones | hydrazines | hydrazones |
| aldéhydes ou cétones | hydroxylamines | oximes |
| alkyl sulfonates | thiols | thioéthers |
| anhydrides | amines/anilines | carboxamides |
| halogénure d'aryle | thiols | thiophénols |
| halogénure d'aryle | amines | aryl amines |
| aziridines | thiols | thioéthers |
| carbodiimides | acides carboxyliques | N-acylurées ou anhydrides |
| esters activés* | amines/anilines | carboxamides |
| haloacetamides | thiols | thioéthers |
| halotriazines | amines/anilines | Aminotriazines |
| imido esters | amines/anilines | amidines |
| isocyanates | amines/anilines | urées |
| isothiocyanates | amines/anilines | thiourées |
| maleimides | thiols | thioéthers |
| sulfonate esters | amines/anilines | alkyl amines |
| halogénures de sulfonyle | amines/anilines | sulfonamides |

| | | |
|---|---|---|
| * : par ester activé, on entend des groupes de formule COY, ou Y est : • un groupe partant choisi parmi les groupes succinimidyloxy (-C₄H₄NO₂), sulfo succinimidyloxy (-C₄H₃O₂-SO₃H) ; • un groupe aryloxy substitué ou non par au moins un substituant électro-attracteur tel que les groupes nitro, fluoro, chloro, cyano, trifluoromethyl, formant ainsi un aryl ester activé ; • un acide carboxylique activé par un groupe carbodiimide, formant ainsi un anhydride mixte -OCORₐ ou -OCNRₐNHR_{b}, dans lesquels Rₐ et R_{b} sont identiques ou différents et sont choisis parmi les groupes alkyles en C₁-C₆, perfluoroalkyles en C₁-C₆, alkoxy en C₁-C₆, cyclohexyle, • 3-diméthylaminopropyle, N-morpholinoéthyle. | | |

A titre d'exemple non limitatif, la substance ou molécule à conjuguer M comprend au moins un des groupes fonctionnels suivants, avec lequel réagira le groupe réactionnel G : amines, amides, thiols, aldéhydes, cétones, hydrazines, hydroxylamines, amines secondaires, halogénures, époxides, esters de carboxylate, acides carboxyliques, des doubles liaisons, ou une combinaison de ces groupes fonctionnels.

Le groupement fonctionnel porté par la molécule M qui réagira avec le groupe réactionnel G sera par exemple un groupe amine, thiol, alcool, aldéhyde ou cétone. De manière préférée le groupement réactionnel G réagira avec un groupe fonctionnel amine ou thiol.

Des méthodes d'introduction de ces groupes fonctionnels sont notamment décrites dans C. Kessler, Nonisotopic probing, Blotting and Sequencing, 2nd edition, L.J. Kricka (1995), Ed. Academic press Ltd., Londres, p. 66-72.

De préférence, le groupement réactionnel G est un groupe dérivé d'un des composés ci-après : un acrylamide, une amine activée (par exemple une cadavérine ou une éthylènediamine), un ester activé, un aldéhyde, un halogénure d'alkyle, un anhydride, une aniline, un azide, une aziridine, un acide carboxylique, un diazoalcane, une haloacétamide, une halotriazine, telle que la monochlorotriazine, la dichlorotriazine, une hydrazine (y compris les hydrazides), un imido ester, un isocyanate, un isothiocyanate, un maléimide, un halogénure de sulfonyle, ou un thiol, une cétone, une amine, un halogénure d'acide, un hydroxysuccinimidyl ester, un hydroxysulfosuccinimidyl ester, un azidonitrophényl, un azidophényl, une 3-(2-pyridyl dithio)-propionamide, glyoxal et en particulier les groupes de formule : 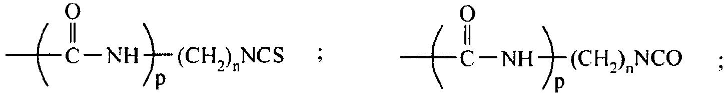 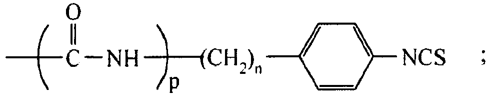 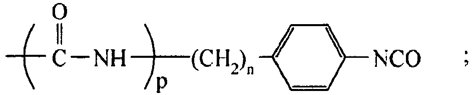 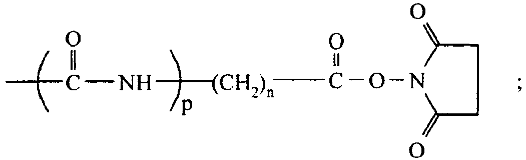 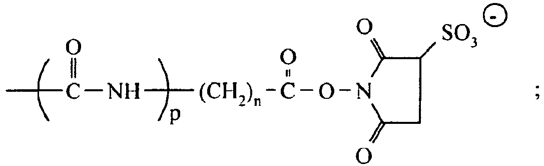 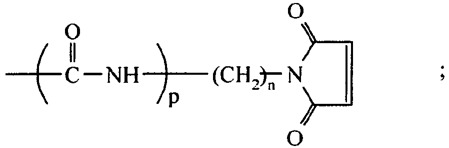 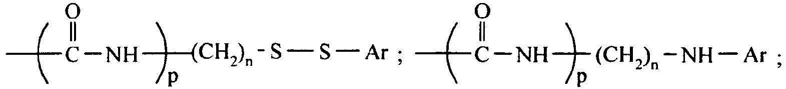 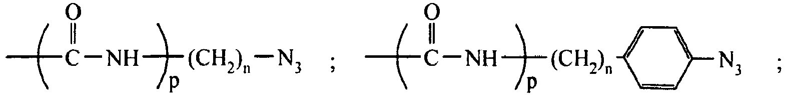 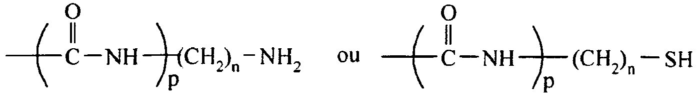 où n varie de 0 à 8 et p est égal à 0 ou 1, et Ar est un hétérocycle à 5 ou 6 chaînons comprenant 1 à 3 hétéroatomes, éventuellement substitué par un atome d'halogène.

De manière préférée, le groupement réactionnel G est un acide carboxylique, un succinimidyl ester d'acide carboxylique, un haloacétamide, une hydrazine, un isothiocyanate, un group maléimide, une amine aliphatique.

### 2. Groupe de liaison L :

Le groupe de liaison L qui lie le groupe réactionnel G ou la substance ou molécule conjuguée M à l'IP1 peut être une liaison covalente simple ou un bras d'espacement comprenant de 1 à 20 atomes différents de l'hydrogène, choisis parmi les atomes de carbone, azote, phosphore, oxygène et soufre, ce groupe de liaison étant linéaire ou ramifié, cyclique ou hétérocyclique, saturé ou insaturé, et constitué d'une combinaison de liaisons choisies parmi : les liaisons carbone-carbone qui peuvent être simples, doubles, triples ou aromatiques; les liaisons carbone-azote; les liaisons azote-azote; les liaisons carbone-oxygène; les liaisons carbone-soufre; les liaisons phosphore-oxygène; les liaisons phosphore-azote ; les liaisons éther ; les liaisons ester ; les liaisons thioéther; les liaisons amines ; les liaisons amides ; les liaisons carboxamide; les liaisons sulfonamide; les liaisons urée; les liaisons uréthane ; les liaisons hydrazine; les liaisons carbamoyle.

De préférence, le groupe de liaison L comprend de 1 à 20 atomes différents de l'hydrogène et choisis parmi C, N, O, P et S et peut comprendre des combinaisons de liaisons éther, thioéther, carboxamide, sulfonamide, hydrazine, amine, ester et des liaisons aromatiques ou hétéroaromatiques.

De manière préférée, L est constitué d'une combinaison de liaisons simples carbone-carbone et de liaisons carboxamide ou thioéther.

A titre d'exemple, L peut être choisi parmi les chaînes suivantes : polyméthylène, arylène, alkylarylène, arylènealkyle, ou arylthio.

Selon un aspect avantageux, le groupe de liaison L est constitué par un radical organique bivalent, choisi parmi les groupes alkylène linéaires ou ramifiés en C₁-C₂₀, contenant éventuellement une ou plusieurs doubles liaisons ou triples liaisons et/ou contenant éventuellement un ou plusieurs hétéroatomes, tels que l'oxygène, l'azote, le soufre, le phosphore ou un ou plusieurs groupe(s) carbamoyle ou carboxamido ; les groupes cycloalkylène en C₅-C₈ et les groupes arylène en C₆-C₁₄, lesdits groupes alkylène, cycloalkylène ou arylène étant éventuellement substitués par des groupes alkyle, aryle ou sulfonate.

En particulier, le groupe de liaison L est choisi parmi les groupes :
1) -(CH₂)ₙ-
2) 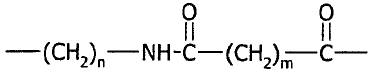
3) -(CH₂)ₙ-O-(CH₂)ₘ-O-(CH₂)ₚ-
4) 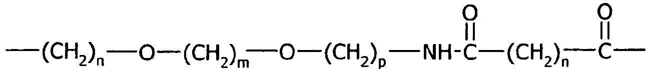
5) 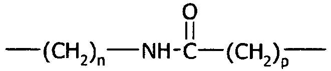
6) 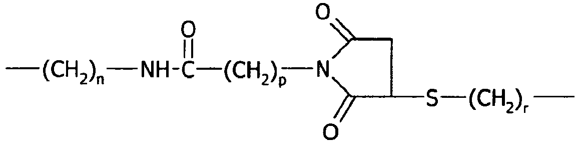
7) 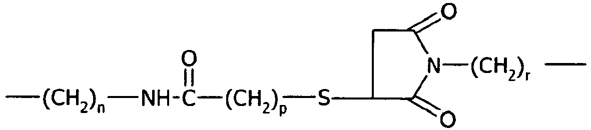
8) 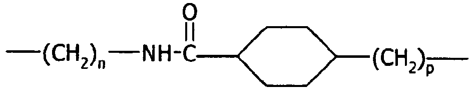
9) 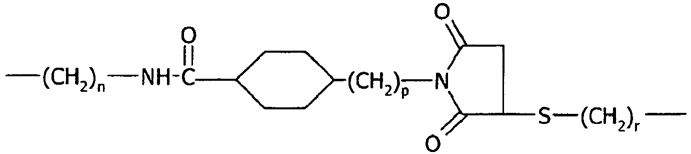
10) -(CH₂)ₙ-NH-
11) 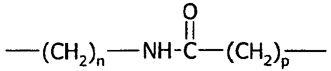
12) -(CH₂)ₙ-NH-(CH₂)ₚ-
   dans lesquels :
   - n et m sont des nombres entiers de 2 à 16, de préférence de 2 à 8 ;
   - p et r sont des nombres entiers de 1 à 16, de préférence de 1 à 5.

Les groupes de liaison L 1) à 5), 7) et 10) à 12) sont particulièrement appropriés lorsque le groupe fonctionnel permettant de connecter le groupe de liaison sur la molécule analogue d'IP1 est un groupe carbamoyle ou éther et le groupe fonctionnel sur la substance ou molécule M est un groupe amide.

Les groupes de liaison L 6) et 9) sont particulièrement appropriés lorsque le groupe fonctionnel permettant de connecter le groupe de liaison sur la molécule analogue d'IP1 est un groupe carbamoyle ou éther et le groupe fonctionnel sur la substance ou molécule M est un groupe amide ou thioéther.

### 3. Procédé de synthèse :

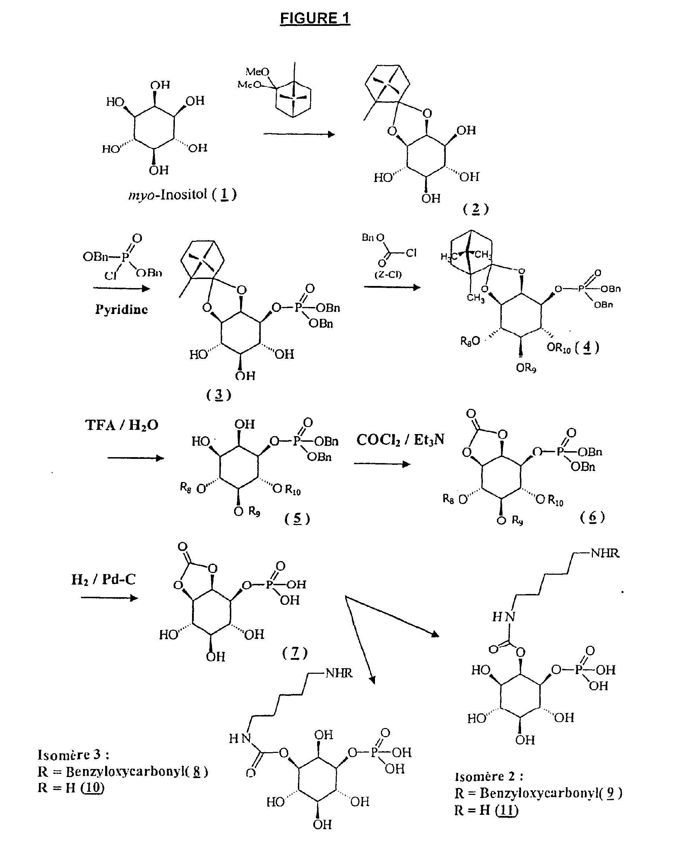

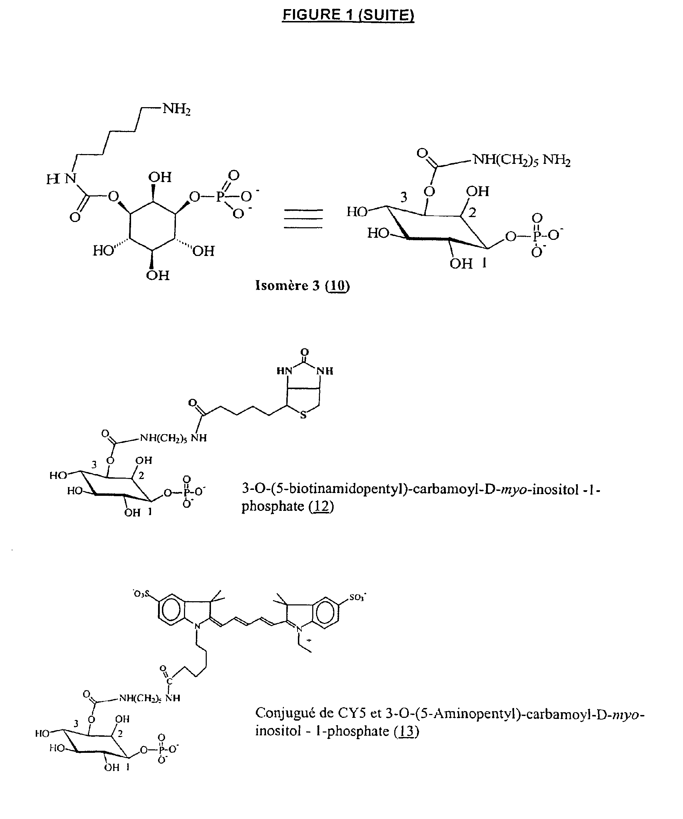

Les procédés de synthèse des analogues de l'invention sont représentés sur les figures 1 à 9 annexées à la présente description et explicités ci-après.

Procédé de synthèse d'analogues du *myo*-inositol (composé 1) comportant un groupe réactionnel G en position 2 ou 3 (Figure 1).

La présente invention concerne également un procédé de synthèse d'analogues d'IP1 à partir de *myo*-inositol (composé 1) comprenant les étapes suivantes :

### (i) Protection des fonctions diols en position cis par un groupe protecteur :

Les fonctions diols adjacentes et en configuration *cis* peuvent être protégées par un dérivé acétal d'une cétone optiquement active comme le D-camphre diméthylacétal.

L'inositol portant 2 diols en positions *cis,* la réaction de l'inositol avec le groupe protecteur conduira à la formation de deux diastéréoisomères qui peuvent être séparés par les techniques classiques connues de l'homme du métier.

### (ii) Phosphorylation :

Le *myo*-inositol dont les fonctions diols *cis* sont protégées (composé 2) est ensuite phosphorylé dans les conditions habituelles connues de l'homme du métier. De manière préférée, on utilise pour cela du dibenzylphosphorochloridate dans les conditions décrites dans les exemples ci-après.

### (iii) Protection des fonctions hydroxyles :

Les fonctions hydroxyles de l'inositol et celles du groupe phosphate peuvent être protégées par les groupes protecteurs classiques couramment utilisés dans le domaine de la chimie organique de synthèse. A cet effet, on pourra se référer à l'ouvrage de Green [Protective Groups in Organic Synthesis, John Wiley & Sons,N.Y. (1981)].

Les résidus d'esters, tels que le pivaloyle, le benzoyle, le chloroacétyle, le phénylacétyle, le benzyloxycarbonyle, les résidus de silyl éthers, tels que le triméthylsilyloxy, le triéthylsilyloxy, le tert-butyldiméthylsilyloxy, le tert-butyldiphenylsilyloxy, le benzyloxy, le p-méthoxybenzyloxy, le 3,4-dimethoxybenzyloxy, les allyloxy, les allyloxycarboxy.

De manière préférée, le groupement protecteur est un groupe phénylméthyloxycarbonyle (=benzyloxycarbonyle).

### (iv) Déprotection sélective des fonctions hydroxyle en positions 2-3

Les fonctions hydroxyle en positions 2-3 protégées dans l'étape 1 sont déprotégées en utilisant les réactifs de déprotection classiques connus de l'homme du métier. A titre d'exemple, dans le cas où le réactif de protection utilisé est le D-Camphre diméthylacétal, on peut faire réagir le composé obtenu dans l'étape précédente avec un mélange TFA / H₂O (Acide trifluoroacétique).

Cette étape permet d'obtenir l'intermédiaire de formule : 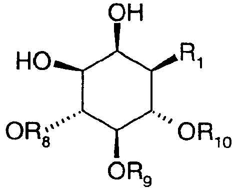 dans laquelle :
R₁ est un groupement - -OPO(OR₇)_{2;}
R₇, R₈, R₉, R₁₀ sont identiques ou différents et représentent un groupe protecteur des fonctions hydroxyles tel que défini précédemment.

De préférence, R₈, R₉, R₁₀ sont identiques et représentent le groupe benzyloxycarbonyle et R₇ est le groupe benzyle (Bn) ou bien les deux groupes R₇ forment ensemble un groupe xylylène.

Ces intermédiaires peuvent être avantageusement utilisés pour produire les analogues d'IP1 de l'invention.

### (v) formation d'un carboxylate cyclique

Afin de pouvoir greffer le groupe L-G sur le composé obtenu dans l'étape précédente, une fonction carboxylate cyclique est introduite au niveau des carbones en positions 2-3 de l'inositol. A titre d'exemple, cette fonction peut être générée en faisant réagir le composé obtenu dans l'étape précédente avec un phosgène, dans les conditions décrites dans les exemples ci-après.

Le composé obtenu a pour formule : 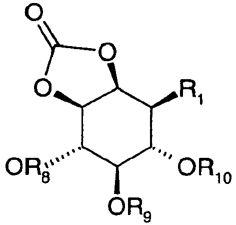 dans laquelle
R₁ est un groupement -OPO(OR₇)₂ ;
R₇, R₈, R₉, R₁₀ sont identiques ou différents et représentent un groupe protecteur des fonctions hydroxyles tel que défini précédemment.

De préférence, R₈, R₉, R₁₀ sont identiques et représentent le groupe benzyloxycarbonyle et R₇ est le groupe benzyle (Bn) ou bien les deux groupes R₇ forment ensemble un groupe xylylène.

### (vi) Déprotection des fonctions hvdroxyles protégées dans l'étape (iii)

Cette étape est réalisée selon les procédés classiques bien connus de l'homme du métier et illustrée dans les exemples ci-après.

### (vii) ouverture du carboxylate cyclique et introduction du groupe L-G

Cette étape est réalisée selon les procédés classiques bien connus de l'homme du métier et illustrée dans les exemples ci-après.

Les étapes essentielles de ce procédé sont donc :
(i) Protection des fonctions diols en position *cis* par un groupe protecteur ;
(ii) Phosphorylation ;
(iii) Protection des fonctions hydroxyle ;
(iv) déprotection sélective des fonctions hydroxyle en positions 2-3 ;
(v) formation d'un carboxyate cyclique ;
(vi) Déprotection des fonctions hydroxyle protégées dans l'étape (iii) ;
(vii) ouverture du carboxylate cyclique et introduction du groupe L-G tel que défini plus haut.

Ce procédé général est illustré dans les exemples 1 à 10 ci-après.

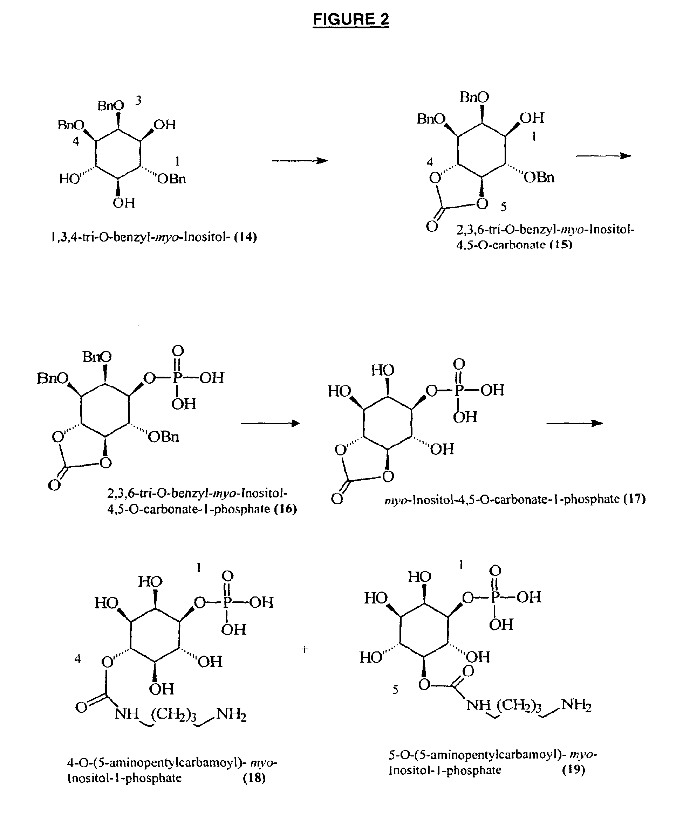

### Procédé de synthèse d'analogues du myo-inositol-1-P comportant un groupe réactionnel G en position 4 et 5 (figure 2) :

Ce procédé est basé sur l'utilisation d'intermédiaires de synthèse de formule générale : 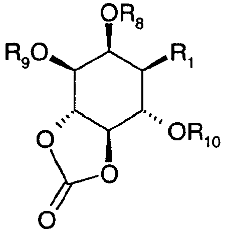 dans laquelle :
R₁ est un groupement - -OPO(OR₇)₂ ;
R₇, R₈, R₉, R₁₀ sont identiques ou différents et représentent un groupe protecteur des fonctions hydroxyles tel que défini précédemment.

De préférence, R₈, R₉, R₁₀ sont identiques et représentent le groupe benzyloxycarbonyle et R₇ est le groupe benzyle (Bn) ou bien les deux groupes R₇ forment ensemble un groupe xylylène.

Le dérivé (composé 14) préparé selon un procédé décrit dans la littérature (Gigg, J. et al. Chem. Soc. Perkin trans I, 1987, 423) est traité par du phosgène dans la pyridine pour donner le carbonate cyclique correspondant (composé 15). La phosphorylation du 1,3,4-tri-O-benzyl-*myo*-inositol-4,5-O- carbonate cyclique peut être réalisée par traitement à l'oxychlorure de phosphore, au dibenzyl-phosphorochloridite ou au di-O-benzyl-N,N-diisopropyl-phosphoramidite (dans ce cas on oxyde le phosphite intermédiairement obtenu en phosphate à l'aide d'un peroxyde, d'iode ou de periodate de sodium). Quel que soit le procédé de phosphorylation utilisé, le dérivé protégé du *myo*-inositol-1-phosphate (composé 16) ainsi obtenu est soumis à une hydrogénation catalytique (palladium sur charbon) pour donner le dérivé du *myo*-inositol-1-phosphate (composé 17) possédant un carbonate cyclique en 4,5 qui représente l'intermédiaire clé de cette voie de synthèse. Le 4-O-(5-aminopentylcarbamoyl)-D-*myo*-Inositol-1-phosphate est obtenu par l'ouverture du carbonate cyclique à l'aide d'un dérivé mono-benzyloxycarbonylé d'une diamine, suivie d'une hydrogénation catalytique ; on obtient un mélange des deux régioisomères portant le bras aminopentylcarbamoyle soit en position 4 (composé 18) soit en position 5 (composé 19), ces deux isomères sont ensuite séparés par HPLC en phase inverse en utilisant un gradient d'acétonitrile dans une solution aqueuse d'acétate de triéthylammonium.

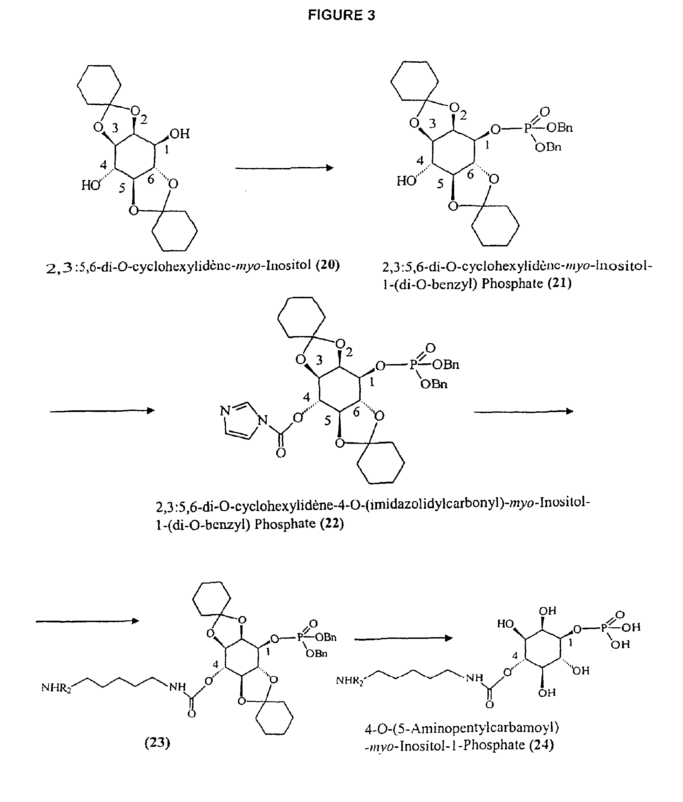

### Procédé de synthèse d'analogues du myo-inositol-1-P comportant un groupe réactionnel G en position 4 (figure 3) :

Le dérivé 2,3 :5,6-di-O-cyclohexylidène-*myo*-Inositol (composé 20) préparé selon un procédé décrit dans la littérature (Watanabe et al. Tetr. Lett. 1993, 34, 497) est traité par du tribenzyl phosphite en présence de perbromure de pyridinium et de triéthylamine dans du dichlorométhane pour donner majoritairement le dérivé 1-(dibenzylphosphate) (composé 21) selon le protocole de phosphorylation décrit par Watanabe (voir ci-dessus) ; le composé désiré est séparé des sous produits tels que l'isomère phosphorylé en C-4 minoritaire par chromatographie sur silice. Le dérivé phosphorylé est ensuite traité par du carbonyldiimidazole dans le diméthylformamide, le dérivé imidazolyl intermédiaire n'est pas isolé et le produit toujours en solution dans le DMF est traité par un excès (5 équivalents) d'un dérivé mono-benzyloxycarbonylé d'une diamine. L'analogue de l'inositol-1-phosphate portant une chaîne aminopentyl-carbamoyle en position 4 ainsi obtenu sous une forme protégée (composé 23) R2 = benzyloxycarbonyle) est traité successivement en milieu acide pour hydrolyser les groupes protecteurs cyclohexylidène puis soumis à une hydrogénation catalytique pour donner la forme « déprotégée » (R2 = H) de l'analogue de l'inositol-1-phosphate recherché portant une chaîne aminopentyl-carbamoyle en position 4 (composé 24).

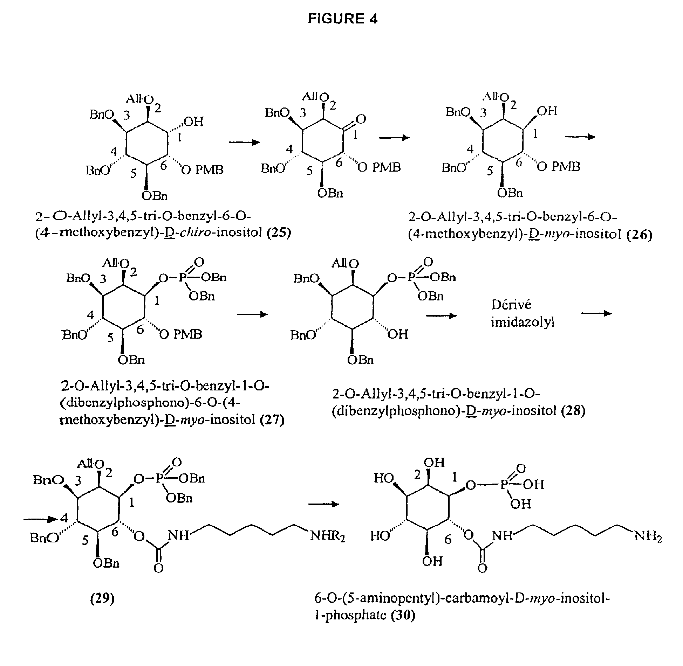

### Procédé de synthèse d'analogues du chiro-inositol-1-P comportant un groupe réactionnel G en position 6 (figure 4) :

Le dérivé 1-O-Allyl-2,3,4-tri-O-benzyl-5-O-(p-methoxybenzyl)-D-*chiro*-inositol (le produit peut également être nommé 2-O-Allyl-3,4,5-tri-O-benzyl-6-O-(4-methoxybenzyl)-D-*chiro*-inositol (composé 25) pour montrer sa parenté structurale avec le *myo*-inositol-1-phosphate cette numérotation est utilisée dans la figure 4 et la description suivante) préparé selon un procédé décrit dans la littérature (Jaramillo, C. et al J. Org. Chem. 1994, 59, 3135) est oxydé par du chlorochromate de pyridinium pour donner la cétone correspondante, qui est purifiée par chromatographie sur gel de silice. La cétone est réduite de façon stéréosélective par un hydrure chiral. Le produit de la réduction est purifié par chromatographie sur gel de silice pour séparer le dérivé *myo*-inositol recherché du sous produit de configuration *chiro.* Le dérivé 2-O-Allyl-3,4,5-tri-O-benzyl-6-O-(4-methoxybenzyl)-D-*myo*-inositol (composé 26) ainsi obtenu est phosphorylé par du di-O-benzyl-N,N-diisopropylphosphoramidite en présence de tétrazole ; après oxydation au periodate de sodium le produit est extrait et purifié sur gel de silice. On obtient ainsi le 2-O-Allyl-3,4,5-tri-O-benzyl-1-O-(dibenzylphosphono)-6-O-(p-methoxybenzyl)-D-*myo-*inositol (27) qui est traité par de l'acide trifluoracétique à 2% dans le dichlorométhane pour donner le 2-O-Allyl-3,4,5-tri-O-benzyl-1-O-(dibenzylphosphono)-D-*myo*-inositol (composé 28). Ce composé est ensuite traité par du carbonyldiimidazole dans le diméthylformamide, le dérivé imidazole intermédiaire n'est pas isolé et le produit en solution dans le DMF est traité par un excès (5 équivalents) d'un dérivé mono-benzyloxycarbonylé d'une diamine. L'analogue de l'inositol-1-phosphate portant une chaîne aminopentylcarbamoyle en position 6 ainsi obtenu sous une forme protégée ((composé 29), R2 = benzyloxycarbonyle) est purifié par chromatographie sur gel de silice puis soumis à une hydrogénation catalytique pour donner la forme « déprotégée » ((composé 30), R2 = H) de l'analogue de l'inositol-1-phosphate recherché portant une chaîne aminopentylcarbamoyle en position 6.

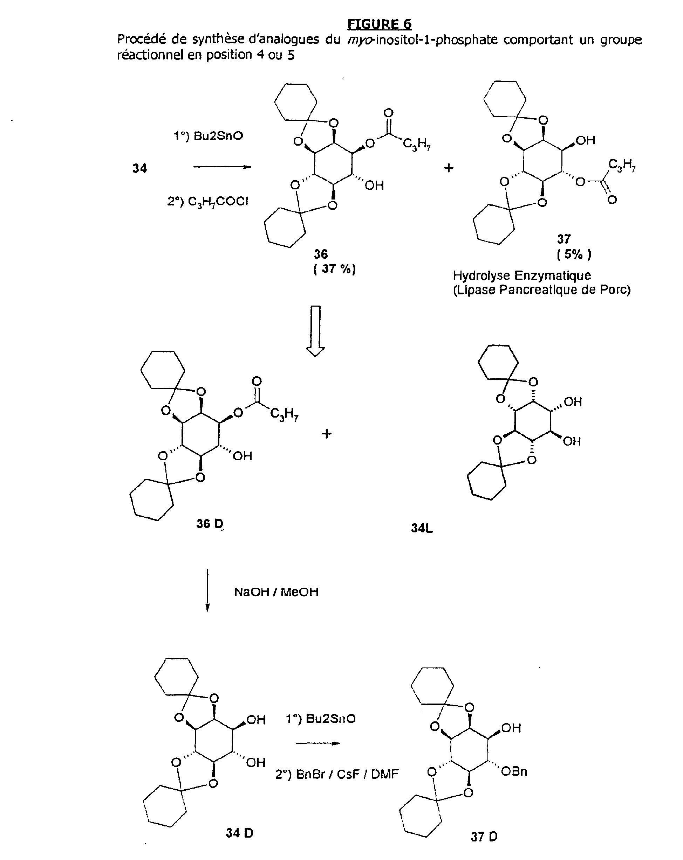

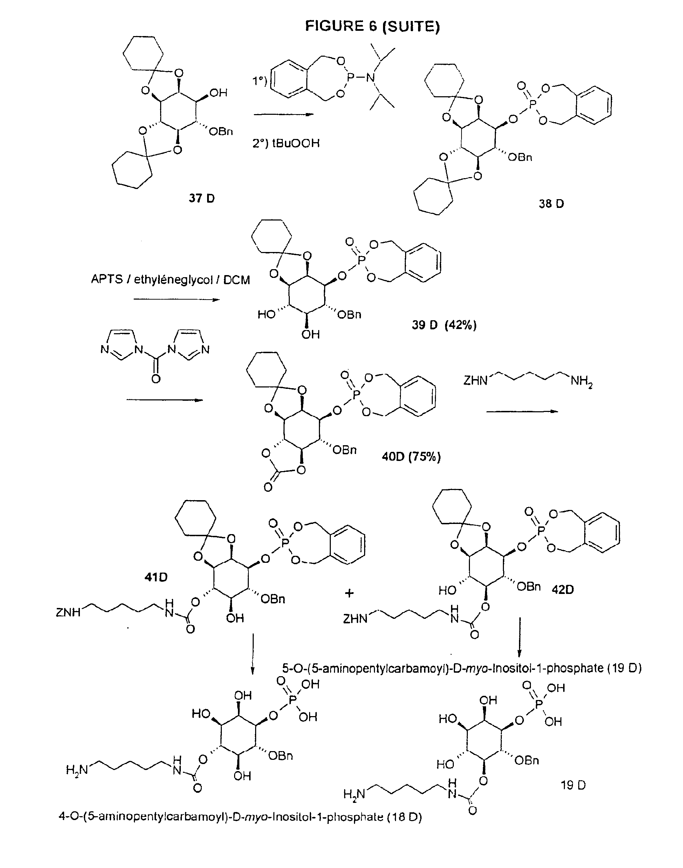

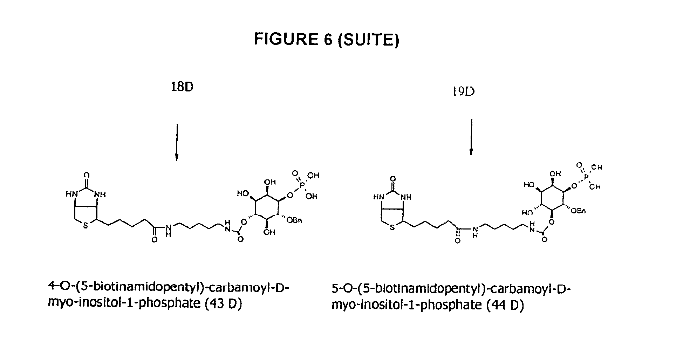

### Procédé de synthèse d'analogues du myo-inositol-1-P comportant un groupe réactionnel G en position 4 ou 5 (Figure 6) :

Des analogues du D-*myo*-inositol-1-phosphate [IP1(1)] comportant un groupe réactionnel G en position 4 ou 5 (respectivement composés 18 et 19) sont décrits dans le schéma de synthèse (figure 2) et dans le texte ci-dessus se rapportant à la figure 2, la voie de synthèse part du composé 14 préparé selon un procédé décrit dans la littérature à partir du *myo*-inositol commercial (Gigg, J. et al. J. Chem. Soc. Perkin trans I, 1987, 423). Il est possible de préparer le dérivé 14 sous une forme énantiomériquement pure afin d'obtenir les dérivés 18 et 19 sous une forme énantiomériquement pure (18D et 19D) en introduisant une étape de résolution optique. Une synthèse alternative permettant d'obtenir plus facilement ces mêmes composés 18D et 19D sous une forme énantiomériquement pure en utilisant une résolution enzymatique est proposée. Le schéma de synthèse est décrit dans la Figure 6 en partant du 2,3:4,5-di-O-cyclohexylidène-*myo*-Inositol (composé 34) un des isomères obtenu lors de la protection du *myo*-inositol commercial par deux groupes cyclohexylidènes selon le protocole de Garegg et al. (Carbohydr. Chem. 130, 1984, 322-326). Dans la figure 6, on utilise arbitrairement l'énantiomère de configuration D pour désigner le racémate et lorsque l'on désigne un seul des énantiomères (par exemple celui de configuration D), on fait suivre le numéro du composé par la lettre D.

Ainsi par exemple, le 2,3:4,5-di-O-cydohexylidène-myo-inositol (racémate) (composé 34) et les énantiomères L et D correspondants (composés 34 L et 34 D) sont représentés comme suit :

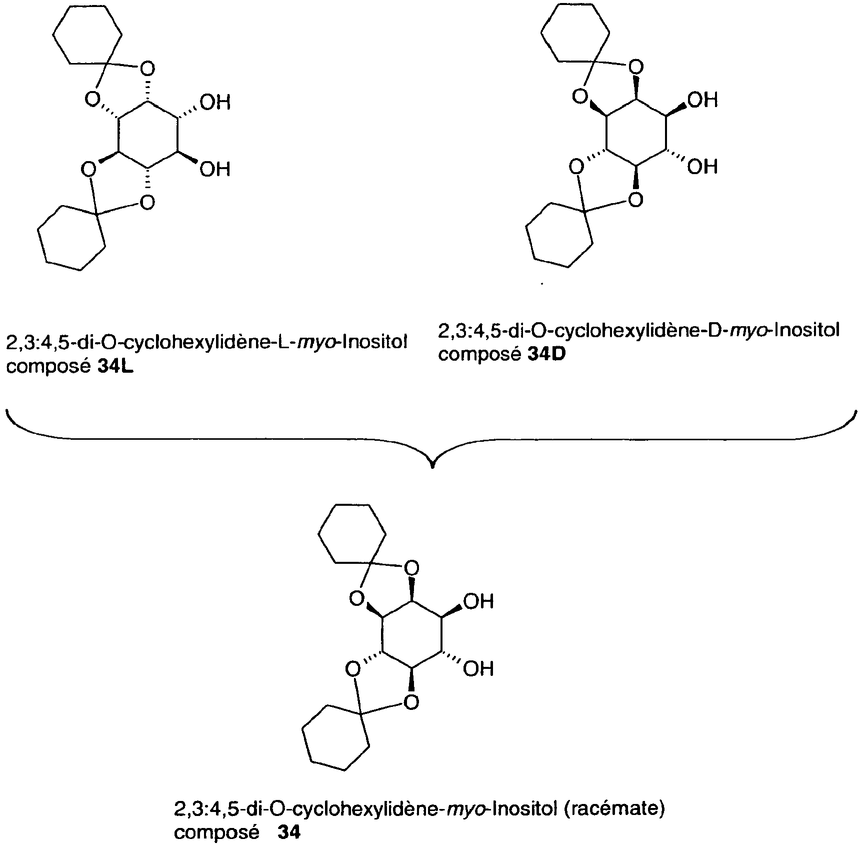

Le dérivé 2,3:4,5-di-O-cyclohexylidène-*myo*-Inositol 34 sous forme de racémate est traité par l'oxyde de dibutylétain puis par chlorure de n-butyryle comme décrit par Gou et al. (Carbohydr. Res. 234, 1992, 51-64). Contrairement à ce qui est décrit dans l'article de Gou *et al.,* les données de RMN (le proton H₁ résonne à 4,98 ppm pour le composé 36 et à 3,89 pour 37 et le proton H6 résonne à 4,09 ppm pour le composé 36 et à 5,21 ppm pour le composé 37) montrent que l'isomère prépondérant est le dérivé portant le groupe butyryle en position 1 (composé 36) et non pas le dérivé portant le groupe butyryle en position 6 (composé 37) comme décrit dans l'article de Gou et al. (Carbohydr. Res. 234, 1992, 51-64).

L'ester mono-Butyrique 36 (racémique) est soumis à une étape de résolution enzymatique selon la méthode décrite dans la publication de Gou et al. (Carbohydr. Res. 234, 1992, 51-64), la lipase pancréatique hydrolyse sélectivement l'isomère L pour donner le 2,3:4,5-di-O-cyclohexylidène-L-*myo*-Inositol (34L) laissant inaltéré l'isomère 36D (1-butyryl-2,3:4,5-di-O-cyclohexylidène-D-*myo*-Inositol) ce qui permet d'obtenir le produit 36D sous une forme énantiomèrement pure. Le produit 36D est saponifié pour donner le diol 34D qui est traité par l'oxyde de dibutylétain puis par le bromure de benzyle pour donner le dérivé mono-benzylé 37D , celui-ci est ensuite traité par le o-xylylène N,N-diisopropylphosphoramidite (préparé de façon analogue à l'o-xylylène N,N-diéthylphosphoramidite (également nommé 1,5-dihydro-N,N-bis(1-methylethyl)-2,4,3-benzodioxaphophepin-3-amine) selon le protocole de Watanabe et al. Tetrahedron Letters, 1990, 31, 255-256) ainsi que dans les documents suivants : WO 9100258 A1 et Tetrahedron Letters, 1995, 36, 8023-8026) pour donner un phosphite intermédiaire instable qui est oxydé in situ par du ter-butyl-hydroperoxyde fournissant ainsi le 6-O-benzyl-2,3:4,5-di-O-cyclohexylidène-5-O-(o-xylylènedioxyphosphoryl)-D-*myo-*Inositol 38D. Le groupe protecteur cyclohexylidène bloquant les hydroxyles 4 et 5 du composé 38D est enlevé sélectivement par un traitement en milieu acide (trans-acétalation en présence d'éthylène-glycol) pour donner le diol 39D qui est ensuite traité par du 1,1'-carbonyl diimidazole pour donner le carbonate cyclique 40D. De façon analogue à ce qui est décrit dans l'exemple 7 le carbonate cyclique de 40D est ouvert par un dérivé mono-protégé (groupe protecteur Z = benzyloxycarbonyle) de la pentylamine en générant les deux isomères de position: 41D (isomère portant le bras en position 4) et 42D (isomère portant le bras en position 5). Chacun des isomères 41D et 42D est ensuite déprotégé pour donner respectivement le composé 18D analogue du D-*myo*-inositol-1-phosphate portant un groupe réactionnel en position 4 du cycle inositol et le composé 19D analogue du D-*myo*-inositol-1-phosphate portant un groupe réactionnel en position 5 du cycle inositol. L'exemple 19 décrit la synthèse de des composés 18D et 19D, qui peuvent être utilisé de façon analogue aux composé 10 et 11 de l'exemple 8 (noter que les composés 10 et 11 sont énantiomériquement purs car dans la voie de synthèse décrite dans la figure 1 la résolution optique intervenant dès la première étape, tous les dérivés à partir du composé 2 sont de la série D et sont optiquement actifs). De façon analogue à ce qui est décrit dans l'exemple 9 pour le composé 10, les composés 18D et 19D peuvent être conjugués à la biotine grâce au groupe réactionnel qu'ils portent respectivement en position 4 et en position 5 du squelette *myo*-inositol-1-phosphate, ainsi les composés 18D et 19D sont respectivement convertis en leur conjugués biotinylés 43D et 44D.

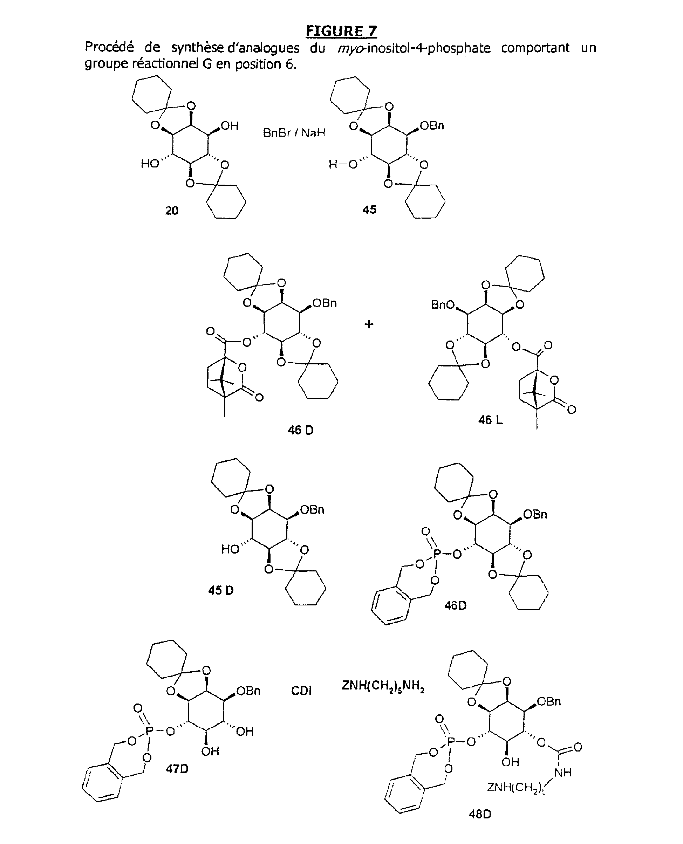

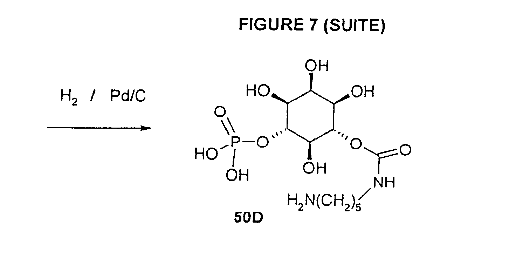

### Procédé de synthèse d'analogues du myo-inositol-4-phosphate comportant un groupe réactionnel G en position 5 ou 6 (voir Figure 7) :

Une des formes d'inositol monophosphate, autre que le D-*myo*-inositol-1-phosphate et susceptible de s'accumuler lors de l'activation du cycle des inositols-phosphates est le D-*myo*-inositol-4-phosphate (voir l'article de Ragan et al. Biochem J. (1988) 249(1)143-148 concernant la formation du D-*myo*-inositol-4-phosphate et de l'article de Billington et al. J. Chem. Soc. Perkin Trans. 1, (1989) 8, 1423-1429 concernant une nomenclature abrégée des différentes dérivés du *myo*-inositol présents dans les cellules) il est donc avantageux de disposer d' analogues du D-myo-inositol-4-phopshate portant un bras réactionnel en position 1, 2 ,5 ou 6. La Figure 7 montre une voie de synthèse du D-*myo*-inositol-4-phopshate portant un bras réactionnel en position 6. Le 1,2:4,5-di-O-cyclohexylidène-*myo*-inositol 20 (qu'on peut également nommer 2,3:5,6-di-O-cyclohexylidène-*myo*-inositol pour montrer sa relation de structure avec le D-*myo*-inositol-4-phosphate, voir figure 3) sous forme racémique préparé selon le protocole de Vacca *et al.* est traité par du bromure de benzyle afin d'obtenir le dérivé mono-benzylé 45 comme décrit *par Vacca et al.* [Vacca, J.P. Tetrahedron, 1989, 45(17), 5679-5702]. Le dérivé 45 (racémique) est traité par le chlorure de l'acide S(-)-camphanique pour donner le mélange des deux diastéréomères (camphanate) 46D et 46L et le composé 46D (le plus polaire) est isolé par cristallisation et recristallisation [Vacca, J.P. Tetrahedron , 1989, 45(17), 5679-5702]. Le composé 46D est saponifié par l'hydroxyde de potassium dans l'éthanol pour donner le dérivé 4-hydroxyle 45D qui est phosphorylé par l'o-xylylène N,N-diisopropylphosphoramidite selon le protocole décrit pour 37D (voir Figure 6 et exemple 19) pour donner un phosphite intermédiaire qui est oxydé in situ par du ter-butyl-hydroperoxyde fournissant ainsi le 1-O-benzyl-2,3:5,6-di-O-cyclohexylidène-4-O-(o-xylylènedioxyphosphoryl)-D-*myo*-Inositol 46D. Le composé 46D est traité selon le même protocole que le dérivé 38D (voir Figure 6 et exemple 19) afin d'éliminer sélectivement le groupe protecteur cyclohexylidène bloquant les hydroxyles 4 et 5, par un traitement en milieu acide pour donner le diol 47D.

Le composé 47D est ensuite traité successivement par du 1,1'-carbonyl diimidazole (CDI) puis par un dérivé mono-protégé (groupe protecteur Z = Benzyloxycarbonyle) de la pentylamine en générant les deux isomères de position: 48D (isomère portant le bras en position 6) et 49D (isomère portant le bras en position 5). Les composés 48D et 49D sont séparés par chromatographie, et les composés 48D et 49D sont indépendamment déprotégé par hydrogénation catalytique comme décrit pour les composés 41D et 42D (voir Figure 6 et exemple 19) en donnant respectivement le composé 50D analogue du D-*myo*-inositol-4-phosphate portant un groupe réactionnel en position 6 du cycle inositol et le composé et 51D analogue du D-*myo*-inositol-4-phosphate portant un groupe réactionnel en position 5 du cycle inositol (seul les composés 48D et 50D possédant le bras en position 6 sont représentés sur la Figure 7).

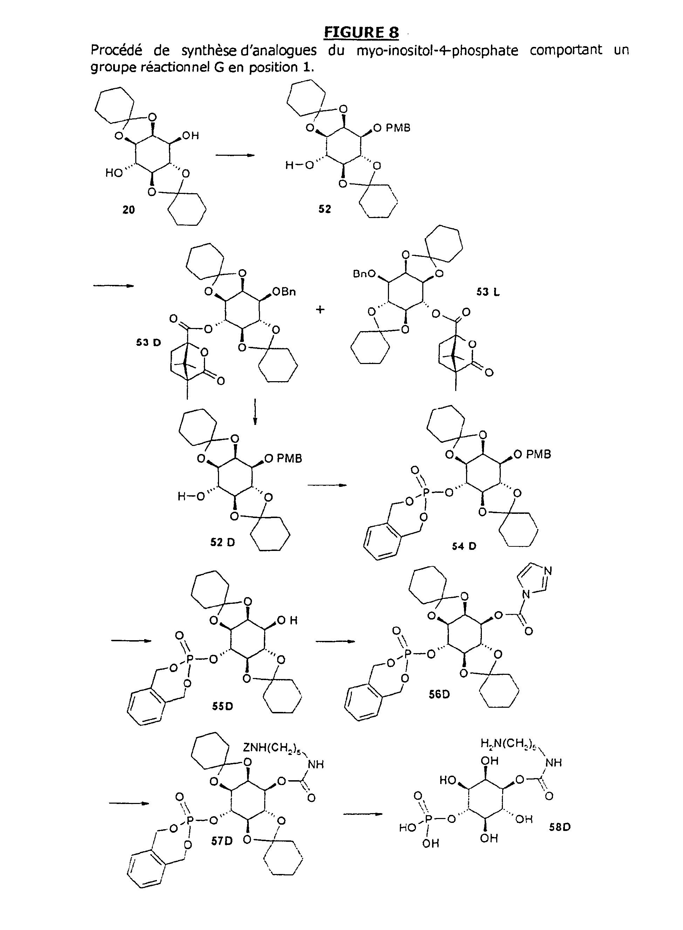

### Procédé de synthèse d'analogue du myo-inositol-4-phosphate comportant un groupe réactionnel G en position 1 (voir Figure 8) :

Le 1,2:4,5-di-O-cyclohexylidène-myo-inositol 20 (qu'on peut également nommer 2,3:5,6-di-O-cyclohexylidène-myo-inositol pour montrer sa relation de structure avec le D-myo-inositol-4-phosphate, voir figure 3) sous forme racémique préparé selon le protocole de Vacca *et al.* [Vacca, J.P. Tetrahedron , 1989, 45(17), 5679-5702] est traité par du bromure de 4-methoxy-benzyle selon un protocole décrit par Wang et al. [J. Org Chem. 1996, 61, 5905-5910] afin d'obtenir le dérivé mono-PMB (groupe protecteur PMB = p-méthoxy-benzyle = 4-méthoxy-benzyle quelquefois nommé MPM = p-Méthoxyphénylméthyl) 52. Le dérivé 52 (racémique) est traité par le chlorure de l'acide S(-)-camphanique pour donner le mélange des deux diastéréomères (camphanate) 53D et 53L et le composé 53D est isolé en procédant de façon analogue à ce qui est décrit pour le composé 46D (voir Figure 7 et le texte correspondant). De façon analogue le composé énantiomériquement pur 53D est saponifié pour donner le composé 52D. Le composé 52D est phosphorylé par l'o-xylylène N,N-diisopropylphosphoramidite selon le protocole décrit pour 37D (voir Figure 6 et exemple 19) pour donner un phosphite intermédiaire qui est oxydé in situ par du ter-butyl-hydroperoxyde fournissant ainsi le dérivé 2,3:5,6-di-O-cyclohexylidène-4-0-(o-xylylènedioxyphosphoryl)-D-*myo*-Inositol 54D que l'on traite au CAN (Cerium Ammonium Nitrate) dans un mélange acétone-eau selon le protocole de Wright et al. [Tetrahedron Lett. 2001, 42, 4033] pour enlever le groupe protecteur PMB et ainsi donner le composé 55D possédant un hydroxyle libre en position 1 du cycle Inositol. Le composé 55D est alors traité par du 1,1'-carbonyl diimidazole (CDI) pour donner l'intermédiaire imidazolure 56D qui est alors traité par un dérivé mono-protégé (groupe protecteur Z = Benzyloxycarbonyle) de la pentylamine pour donner le carmamate 57D portant un bras en position 1 du cycle inositol. Le composé 57D est alors déprotégé par réduction catalytique de façon analogue au composés 41D et 42D pour donner le composé 58D analogue du D-*myo*-inositol-4-phosphate portant un groupe réactionnel en position 1 du cycle inositol.

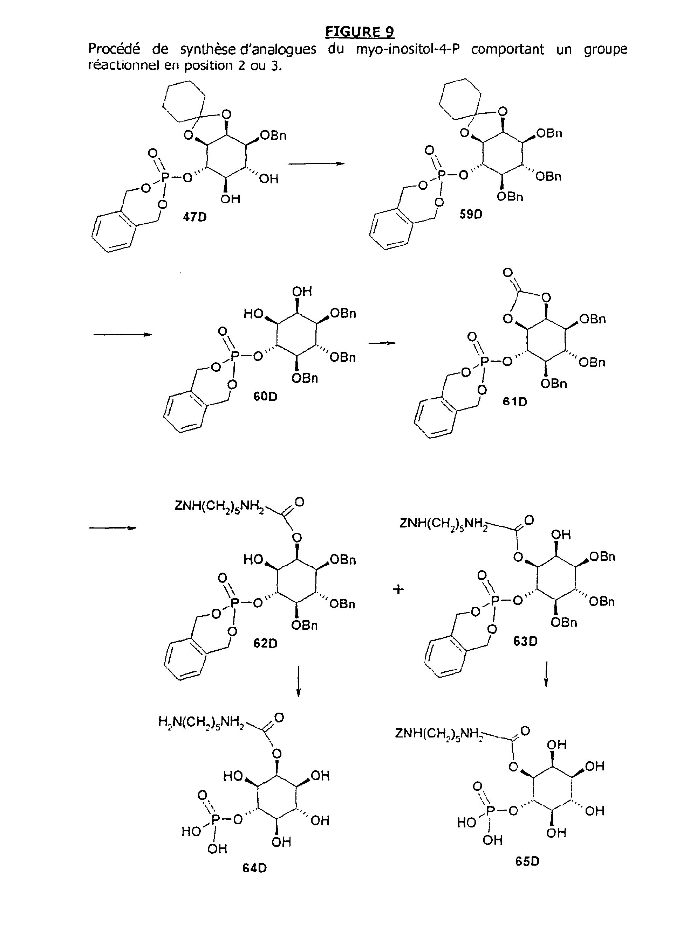

### Procédé de synthèse d'analogues du D-myo-inositol-4-phosphate comportant un groupe réactionnel G en position 2 ou 3 (voir Figure 9) :

Le 1-O-benzyl-2,3-O-cyclohexylidène-4-O-(o-xylylenedioxyphosphoryl)-D-*myo-*Inositol, composé 47D (voir Figure 7 et le texte qui se rapporte) est traité par le bromure de benzyle afin de protéger les hydroxyles en position 5 et 6 pour donner le composé 59D qui est ensuite traité en milieu acide pour enlever le groupe 2,3-cyclohexylidène en donnant le composé 60D. Celui-ci est traité par le phosgène (comme dans l'exemple 5) ou par le 1,1'-carbonyl diimidazole (comme dans l'exemple 19) pour donner un carbonate cyclique 61D qui est ensuite traité par un dérivé mono-protégé (groupe protecteur Z = Benzyloxycarbonyle) de la pentylamine en générant les deux isomères de position: 62D (isomère portant le bras en position 2) et 63D (isomère portant le bras en position 3). Les composés 62D et 63D sont séparés par chromatographie, et les composés 62D et 63D sont indépendamment déprotégé par hydrogénation catalytique comme décrit pour les composés 41D et 42D (voir Figure 6 et exemple 19) en donnant respectivement le composé 64D analogue du D-*myo*-inositol-4-phosphate portant un groupe réactionnel en position 2 du cycle inositol et le composé et 65D analogue du D-*myo*-inositol-4-phosphate portant un groupe réactionnel en position 3 du cycle inositol.

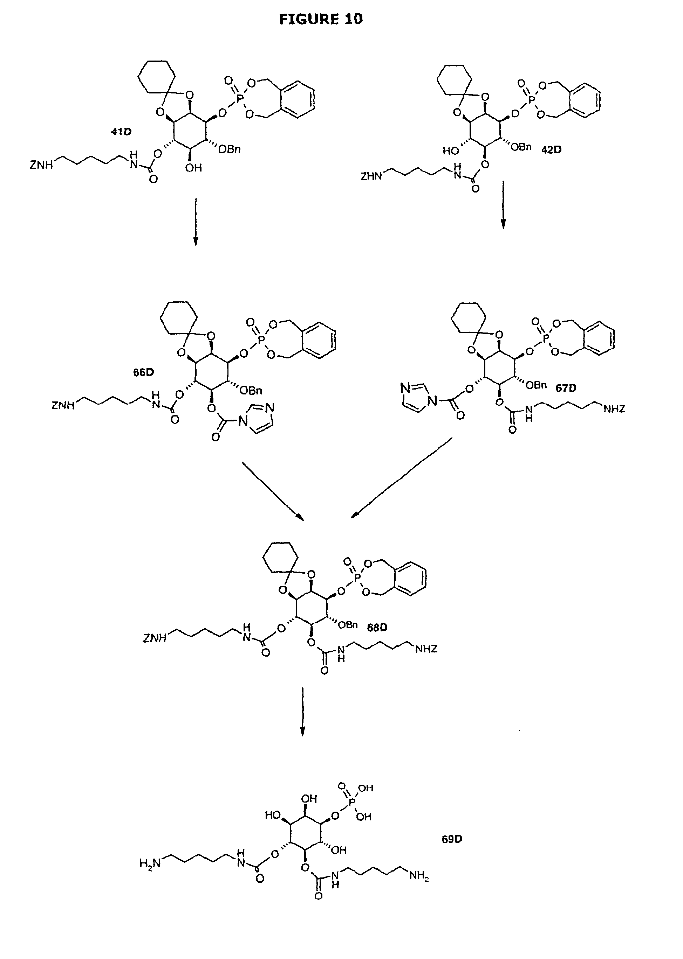

### Procédé de synthèse d'analogues du myo-oinositol-1-P comportant deux groupes réactionnel G en position 4 et 5 (figure 10):

Un analogue du D-*myo*-inositol-1-phosphate [IP1(1)] comportant des groupes réactionnels G en position 4 et 5 (68D) est décrit dans le schéma de synthèse représenté sur la figure 10. Le principe général de la synthèse de ces analogues disubstitués D-*myo*-inositol-1-phosphate est calqué sur les voies de synthèses des analogues mono-substitués décrits ci-dessus en utilisant des intermédiaires possédant un phosphate sous sa forme protégée (ester benzylique ou ester de o-xylyl) et possédant trois hydroxyles protégés et deux hydroxyles libres. La voie de synthèse décrite (figure 10) part du composé 41D ou du composé 42D ou du mélange de ces deux composés préparés selon le procédé décrit dans l'exemple 19. On active soit l'hydroxyle en position 5 du composé 41D soit l'hydroxyle en position 4 du composé 42D par traitement au carbonyl-di-imidazole (CDI) en formant respectivement le dérivé imidazolyl correspondant 66D et 67D. Chaque composé est ensuite traité par un dérivé mono-protégé (groupe protecteur Z = benzyloxycarbonyle) de la pentylamine (exemple 7) en générant le même composé 68D comportant deux bras en position 4 et 5. Le composé 68D est séparé par chromatographie, et ensuite déprotégé par hydrogénation catalytique comme décrit pour les composés 41D ou 42D (voir figure 9 et exemple 19) en donnant le 4,5-di-O-(5-aminopentycarbamoyl)-D-*myo*-Inositol-1-phosphate 69D analogue du D-*myo-*inositol-1-phosphate portant deux groupes réactionnels en position 4 et 5 du cycle inositol. Cet analogue peut ensuite être conjugué à un marqueur tel que la biotine comme décrit dans l'exemple 9 ou un marqueur fluorescent comme décrit dans l'exemple 10.

### 4. Conjugués : nature de M

Les dérivés de l'IP1 comportant un groupe réactionnel G sur l'une des positions 2 à 6 de l'inositol peuvent être ainsi couplés avec une substance ou molécule M.

### Traceurs

Cette substance ou molécule M peut être un traceur, et dans ce cas le dérivé de l'IP1 obtenu peut être utilisé pour détecter l'IP1 présent dans un échantillon biologique d'intérêt.

Les traceurs couramment utilisés pour l'étude de phénomènes biologiques ou biochimiques sont les traceurs fluorescents, les traceurs radioactifs, ou bien des molécules ayant elles-mêmes une affinité ou étant reconnues par une molécule partenaire. Certaines enzymes, comme la peroxydase ou la luciférase, qui favorisent l'apparition d'un substrat coloré ou d'un signal de luminescence, respectivement, peuvent également être utilisées.

La substance ou molécule M peut donc être choisie parmi le groupe suivant : un radioélément, un composé fluorescent, un composé luminescent, une enzyme, un chromophore fluorescent, un chromophore absorbant la lumière, ou tout autre molécule ou substance permettant une mesure quantitative directe ou indirecte, sous réserve que lorsque M est un radio-élément, L est une simple liaison, alors M est différent du tritium.

Les analogues de l'IP1 selon l'invention peuvent ainsi être couplés à des radioisotopes tels que ¹²⁵I, ³²P, ³⁵S ou à une molécule marquée par l'un des isotopes suivants : ¹²⁵I, ³²P, ³⁵S ou ³H.

Les inventeurs fournissent en effet à l'homme du métier des analogues de l'IP1 qui peuvent être facilement couplés à des radioisotopes ou à des molécules marquées en utilisant les techniques classiques de radiomarquage.

L'iode 125 par exemple, qui est fortement électrophile, réagira avec les analogues de l'invention dont le groupe réactionnel G comporte des groupements nucléophiles, comme par exemple les groupements aryles activés. En particulier, les analogues selon l'invention dont le groupe réactionnel G comporte des structures aromatiques substituées par des substituants électro-donneurs peuvent permettre un marquage de l'IP1 par des réactions de substitution électrophile sur le noyau aromatique. A titre d'exemple, les phénols, dérivés d'aniline, ou d'alkyl aniline comportant des fonctions alcools ou amines primaires ou secondaires sont susceptibles d'être marqués à l'iode-125.

Les analogues selon l'invention peuvent également être couplés à des molécules elle mêmes radiomarquées. Dans cette méthode de radiomarquage indirect, la substance ou molécule à conjuguer M comprend le radioisotope et un groupe fonctionnel susceptible de réagir avec le groupe réactionnel G de l'analogue IP1 selon l'invention.

Les analogues IP1 peuvent également être couplés à des molécules fluorescentes ou luminescentes comportant un groupe fonctionnel susceptible de réagir avec le groupe réactionnel G porté par l'analogue IP1. Ces molécules fluorescentes sont par exemple les rhodamines, les cyanines, les squaraines, les fluorophores connus sous la dénomination BODIPY, les fluorescéines, les composés connus sous la dénomination AlexaFluor, les chélates de terre rare, les cryptates de terre rare, des quantum dots, des protéines fluorescentes comme la protéine fluorescente verte (GFP) ou ses variants, les protéines fluorescentes extraites de coraux, les phycobiliprotéines, telles que la B-phycoérythrine, la R-phycoérythrine, la C-phycocyanine, les allophycocyanines, en particulier celles connues sous la dénomination XL665. Ces composés et les méthodes permettant d'y introduire des groupes réactionnels ou groupes fonctionnels sont largement décrits dans la littérature, voir par exemple « Bioconjugate Techniques », Greg T. Hermanson, Academic press, 1996, p.298-364 ».

Les analogues IP1 peuvent également être couplés à des enzymes telles que la luciférase ou la peroxydase qui génèrent un produit lumineux ou coloré, respectivement, en présence de leur substrat.

Les analogues IP1 selon l'invention peuvent également être couplés à un membre d'un couple de partenaires de liaison. De tels partenaires de liaison sont les couples avidine ou streptavidine / biotine, haptène / anticorps comme par exemple 6HIS / anticorps anti-6HIS, FLAG / anticorps anti-FLAG, DNP/ anticorps anti-DNP, GST/anticorps anti-GST, Cmyc / anticorps anti-Cmyc, HA / anticorps anti-HA, oligonucléotide simple brin /oligonucléotide simple brin complémentaire. Dans ce cas, l'IP1 ainsi marqué pourra être détecté de manière indirecte via l'ajout du second membre du couple de partenaire de liaison, lui-même marqué par un traceur, par exemple radioactif ou fluorescent.

Des réactifs permettant de marquer les analogues selon l'invention par des groupes biotine sont décrits dans « Bioconjugate Techniques », Greg T. Hermanson, Academic press, 1996, p. 373-398.

### Support solide

Les analogues de l'IP1 selon l'invention permettent de coupler de l'IP1 à des supports solides, particulièrement utiles pour la mise en oeuvre de procédés de détection de l'IP1 en phase hétérogène.

Dans ce cas, le groupe M peut être une microbille magnétique ou non, le puit d'une microplaque, un tube, une microbille fluorescente, ou tout autre système de phase solide nécessaire à un système de détection.

### Immunogène

Les analogues IP1 selon l'invention permettent également de préparer des conjugués immunogènes qui pourront être utilisés pour fabriquer des anticorps spécifiques de l'IP1. Pour cela, les analogues selon l'invention sont couplés à des molécules porteuses hautement immunogènes. Ces molécules peuvent être choisies parmi : la sérum albumine bovine (BSA) ou la BSA cationique (cBSA), la KLH (keyhole Limpets Hemocyanine ou hémocyanine de limule), la thyroglobuline, l'ovalbumine. Les molécules porteuses peuvent également être des liposomes ou des molécules porteuses synthétiques comme des polymères de L-Lysine, ou d'acide L-glutamique, du ficoll, du dextran, ou encore du polyéthylène glycol.

Ces molécules porteuses comportent généralement des groupes fonctionnels qui réagiront avec le groupe réactionnel G des analogues IP1 selon l'invention, ou bien de tels groupes pourront être introduits par des techniques classiques.

Il est important de noter que les immunogènes selon l'invention permettront d'obtenir des anticorps spécifiques de l'IP1 puisque la fonction phosphate de l'inositol, qui est la seule différence entre l'IP1 et l'inositol, reste intacte lors du couplage avec la molécule porteuse.

### 5. Ligands spécifiques de l'IP1 :

Les analogues de l'IP1 ou les immunogènes IP1 selon l'invention peuvent être utilisés pour sélectionner ou produire des ligands reconnaissant spécifiquement l'IP1. Ces ligands, dont l'obtention est rendue possible par la fourniture des dérivés de l'IP1 selon l'invention, font donc partie intégrante de l'invention.

Ces ligands peuvent notamment être des aptamères, des peptides ou des protéines, en particulier des anticorps ou des fragments d'anticorps (Fab ou Fab'). Les systèmes de sélection requérant l'utilisation des analogues de l'IP1 ou des immunogènes IP1 peuvent notamment être des systèmes de sélection utilisant des phages ou des ribosomes (« phage display » ou « ribozomal display »). Ces systèmes nécessitent tous l'utilisation de dérivés de l'IP1 selon l'invention.

L'invention concerne en particulier des anticorps monoclonaux ou polyclonaux anti-IP1. L'obtention de tels anticorps est rendue possible par les analogues IP1 développés par les inventeurs. Ces anticorps spécifiques de l'IP1 sont un outil particulièrement utile pour détecter spécifiquement l'IP1. Le milieu cellulaire contenant en général de nombreux autres dérivés de l'inositol (PIP2, PIP3, IP3, IP2, IP4, inositol), les anticorps anti-IP1 doivent présenter des réactions croisées avec ces dérivés aussi faibles que possible. Les anticorps anti-IP1 selon l'invention présentent une réaction croisée avec les dérivés de l'inositol (PIP2, IP3, IP2, IP4, inositol) inférieure à 5%. Les anticorps anti-IP1 dont la réaction croisée des anticorps avec ces dérivés de l'inositol est inférieure à 1% sont particulièrement préférés.

Par ailleurs, les anticorps anti-IP1 selon l'invention présentent une sélectivité de fixation de l'IP1 au moins 10 fois supérieure à leur fixation sur les autres dérivés de l'inositol tels que le PIP2, le PIP3, l'IP3, l'IP2, l'IP4, l'inositol. On préfère les anticorps ayant une sélectivité pour l'IP1 au moins 100 fois supérieure à leur sélectivité pour les autres dérivés de l'inositol. En d'autres termes, lorsque les anticorps anti-IP1 selon l'invention sont incubés avec l'IP1, leur liaison à l'IP1 reste stable lorsque lesdits dérivés sont ajoutés au milieu d'incubation. Cela est facilement mesurable en déterminant par les techniques de biochimie classique la quantité de complexe IP1 / anticorps anti-IP1 en présence ou en l'absence d'un desdits dérivés. En particulier, la liaison des anticorps anti-IP1 selon l'invention à l'IP1 n'est pas déplacée en présence de 50 µM de l'un des composés suivants : PIP2, PIP3, IP3, IP2, IP4, inositol.

Les anticorps selon l'invention sont fabriqués selon un procédé comprenant une étape d'immunisation d'un mammifère avec un conjugué immunogène selon l'invention, tel que décrit plus haut, qui ont la particularité de présenter au système immunitaire un motif unique spécifique de l'IP1, à savoir un inositol substitué par un seul groupe phosphate en position 1.

Les anticorps polyclonaux anti-IP1 sont obtenus par injection de l'immunogène à un mammifère et, après une période nécessaire à l'induction de l'immunité, les sérums des animaux peuvent être recueillis et les anticorps polyclonaux purifiés, par exemple par chromatographie d'affinité.

Les anticorps monoclonaux anti-IP1 peuvent être produits en utilisant diverses techniques connues de l'homme du métier. A titre d'exemple, on peut évoquer la technique issue des travaux de Köhler et Milstein. Elle consiste à immuniser un mammifère, par exemple la souris, avec un antigène. Dans le cas où l'antigène est de petite taille, comme c'est le cas de l'IP1, il doit être couplé à une molécule porteuse immunogène. L'homme du métier utilisera donc de manière avantageuse les conjugués IP1-molécule porteuse selon l'invention. Quelques semaines après l'immunisation, la rate de la souris immunisée avec l'antigène est prélevée. Un mélange de lymphocytes et de plasmocytes provenant de cette rate est fusionné in vitro avec des cellules myélomateuses en présence d'un inducteur de fusion cellulaire, comme le polyéthylène glycol. Une lignée cellulaire myélomateuse mutante, dépourvue d'hypoxanthine guanosine phosphoribosyl transférase (HGPRT), est utilisée pour permettre de sélectionner aisément les cellules hybrides. Ces cellules sont cultivées dans un milieu contenant de l'hypoxanthine, de l'aminoptérine (méthotréxate) et de la thymine (milieu HAT) afin d'éliminer les cellules myélomateuses non fusionnées et de sélectionner les hybridomes d'intérêt. Les cellules de rate non fusionnées meurent car elles ne sont pas capables de proliférer in vitro. Les cellules hybrides, en revanche, survivent. Les hybridomes ainsi obtenus sont cultivés dans les puits d'une plaque de culture cellulaire. Les surnageants de ces puits sont testés pour la présence d'anticorps spécifiques de l'IP1 dans un test de criblage tel que l'ELISA ou RIA tels que décrits ci-après. Les hybridomes sont ensuite clonés et peuvent être injectés à des mammifères pour induire des myélomes sécrétant en grande quantité l'anticorps anti-IP1 dans le liquide d'ascite.

### Test ELISA (test enzymatique sur immunoabsorbant) permettant de détecter la présence d'anticorps reconnaissant spécifiquement l'IP1

*Format indirect :* Après dilutions, les échantillons de sérums contenant les anticorps polyclonaux anti-IP1 (ou les surnageants de culture des hybridomes dans le cas d'anticorps monoclonaux anti-IP1) sont incubés dans des puits d'une plaque de microtitration recouverte de streptavidine et préalablement incubée avec une solution de conjugué biotine-IP1 (obtenu à partir d'un analogue IP1 selon l'invention) puis lavée. Après incubation en présence de sérums dilués, les puits sont lavés et incubés en présence d'anticorps anti-espèce marqués à la peroxydase (conjugué Ac-HRP). Après lavage du conjugué Ac-HRP en excès on effectue une étape de révélation en ajoutant le substrat. Par lecture photométrique on mesure une valeur de densité optique à 450 nm indiquant la présence d'anticorps anti-IP1 dans les sérums ou les surnageants de culture. L'intensité de la DO mesurée à 450nm est proportionnelle à la quantité d'anticorps anti-IP1 présents dans le puits.

### Test RIA (test radioimmunologique) permettant de détecter la présence d'anticorps reconnaissant spécifiquement l'IP1 :

*Format semi-direct:* Après dilutions les échantillons de sérums (ou les surnageants de culture des clones d'hybridomes) sont incubés dans des tubes en matière plastique ou des puits d'une plaque de microtitration recouverts d'anticorps anti-espèces (par exemple anti-souris si les anticorps anti-IP1 ont été fabriqués par immunisation de souris) en présence d'un analogue fonctionnalisé d'IP1 selon l'invention marqué à l'aide d'un radio-isotope (traceur). Après incubation et lavage la radioactivité liée au support est mesurée et montre que l'analogue fonctionnalisé d'IP1 marqué par le radio-isotope est reconnu par des anticorps anti-IP1 présents dans les sérums ou les surnageants de culture.

### 6. Utilisation des conjugués et ligands spécifique de l'IP1 :

Les différents analogues de l'IP1 et ligands spécifiques de l'IP1 décrits ci-dessus peuvent être utilisés dans des procédés de détection de l'IP1 présent dans un échantillon biologique. Comme indiqué plus haut, le dosage de l'IP1 permet d'étudier les mécanismes biochimiques impliquant la voie de signalisation des inositols phosphates. Les outils fournis par les inventeurs peuvent être par exemple utilisés dans des méthodes de criblage de banques de composés, afin d'identifier des molécules ayant une action sur des récepteurs de type GPCRs, les récepteurs ayant une activité de tyrosine-kinase, ou encore pour l'étude de composés ayant une activité régulatrice (activatrice ou inhibitrice) sur les enzymes responsables de la production d'IP1 (phospholipase, inositol phosphatases). Ces méthodes comprennent toujours une étape d'introduction de la molécule à tester (issue par exemple d'une banque de composés) dans l'échantillon biologique, suivie de la détection d'une variation qualitative ou quantitative de l'IP1 produit dans ledit échantillon biologique.

Selon l'invention, le procédé de détection de l'IP1 contenu dans un échantillon comprend les étapes suivantes :
- mise en contact de l'échantillon avec un ligand spécifique de l'IP1 ;
- détection des complexes formés entre ledit ligand et l'IP1 présent dans l'échantillon.

Par échantillon biologique, on entend par exemple une préparation de membranes, une suspension cellulaire, une culture cellulaire, ou encore une préparation comprenant des GPCRs , des protéines G et des phospholipases.

Par « détection des complexes formés par le ligand spécifique de l'IP1 et l'IP1 présent dans l'échantillon », on entend la détection directe de ces complexes ou bien détection indirecte impliquant la détection d'une autre espèce dont la concentration est corrélée à celle des complexes ligand/IP1 de l'échantillon. Les méthodes de dosage par compétition sont un bon exemple de détermination indirecte de la présence d'IP1 dans un échantillon. Dans ces méthodes, on a une compétition entre l'IP1 présent dans l'échantillon et l'IP1 tritié ou l'IP1 marqué pour la fixation sur le ligand spécifique de l'IP1. Dans ces méthodes, on détecte l'évolution de la quantité de complexe ligand / IP1 marqué introduit dans le milieu de mesure. La formation de complexe ligand / IP1 marqué diminuera lorsque la quantité de complexes ligand / IP1 de l'échantillon augmentera.

Dans une mise en oeuvre particulière de ce procédé de détection de l'IP1, le ligand spécifique de l'IP1 est marqué par un traceur.

Dans une autre mise en oeuvre particulière, le procédé comprend donc l'ajout à l'échantillon d'une quantité connue d'IP1 tritié ou d'IP1 marqué de manière directe ou indirecte par un traceur. Autrement dit, le procédé comprend les étapes suivantes :
- mise en contact de l'échantillon avec un ligand spécifique de l'IP1 ;
- mise en contact de l'échantillon avec une quantité connue d'IP1 tritié ou d'IP1 marqué de manière directe ou indirecte par un traceur ;
- détection des complexes formés entre ledit ligand et l'IP1 présent dans l'échantillon.

Par marquage direct, on entend le marquage covalent éventuellement via un bras d'espacement tel que le groupe de liaison L décrit plus haut.

Par marquage indirect, on entend marquage via un couple de partenaires de liaison, tels que définis plus haut. Un ligand spécifique de l'IP1 ou un analogue de l'IP1 peuvent être marqués de manière indirecte s'ils sont liés à un membre d'un couple de partenaires de liaison, et que l'on rajoute au milieu de mesure le second membre de ce couple, marqué par un traceur. Par exemple, l'IP1 peut être lié à la biotine et marqué indirectement avec l'allophycocyanine (APC) si l'on ajoute au milieu de la streptavidine couplée à de l'APC, la streptavidine ayant une très forte affinité pour la biotine.

Le traceur qui peut être conjugué à l'IP1 ou au ligand spécifique de l'IP1 peut être choisi parmi : un radioélément, un composé fluorescent, un composé luminescent, une enzyme, un chromophore fluorescent, un chromophore absorbant la lumière, ou tout autre molécule ou substance permettant une mesure quantitative directe ou indirecte.

Dans un autre mode de réalisation particulier, le ligand spécifique de l'IP1 et l'IP1 sont tous les deux marqués de manière directe ou indirecte par des traceurs. C'est par exemple le cas dans les procédés de détection basé sur un transfert d'énergie entre un composé fluorescent donneur et un composé fluorescent accepteur (FRET).

Dans une mise en oeuvre particulière de ce procédé, le ligand spécifique de l'IP1 est conjugué de manière directe ou indirecte avec un composé donneur, l'échantillon est mis en contact avec de l'IP1 conjugué de manière directe ou indirecte avec un composé accepteur, et on mesure le signal émis par le composé accepteur, ce signal résultant d'un transfert de proximité entre le donneur et l'accepteur et étant inversement proportionnel à la quantité d'IP1 présent dans l'échantillon.

Dans une autre mise en oeuvre le ligand spécifique de l'IP1 est conjugué de manière directe ou indirecte avec un composé accepteur, l'échantillon est mis en contact avec de l'IP1 conjugué de manière directe ou indirecte avec un composé donneur, et l'on mesure le signal émis par le composé accepteur, ce signal résultant d'un transfert de proximité entre le donneur et l'accepteur et étant inversement proportionnel à la quantité d'IP1 présent dans l'échantillon.

De manière préférée, le composé donneur et le composé accepteur sont des composés fluorescents, le transfert de proximité est un transfert d'énergie et le signal émis est un signal fluorescent.

Le composé fluorescent donneur peut être un cryptate ou un chélate de terre rare et le composé fluorescent accepteur peut être choisi parmi : les cyanines, les rhodamines, les squaraines, les BODIPYs , les fluorescéines, les AlexaFluors, les quantum dots, les phycobiliprotéines, telles que la B-phycoérythrine, la R-phycoérythrine, la C-phycocyanine, l'allophycocyanine, la GFP et ses dérivés, une protéine fluorescente de corail.

Les ligands spécifiques de l'IP1 utilisés dans les procédés de détection de l'IP1 selon l'invention sont obtenus grâce aux dérivés IP1 tels que décrits plus haut : ces ligands spécifiques de l'IP1 peuvent être des anticorps polyclonaux ou monoclonaux produits par immunisation de mammifères avec les dérivés IP1 selon l'invention, ou encore des protéines, des aptamères, ou des peptides reconnaissant spécifiquement l'IP1, et sélectionnés par les techniques de « phage display » ou « ribozomal display » comme mentionné plus haut. De manière préférée, le ligand spécifique de l'IP1 utilisé est un anticorps monoclonal ou polyclonal dont la sélectivité pour l'IP1 est au moins 10 fois supérieure, de préférence 100 fois supérieure, à sa sélectivité pour chacun des composés suivants : inositol, IP2, IP3, IP4, PIP2, PIP3.

Dans un mode de réalisation particulier du procédé de détection de l'IP1 selon l'invention, le ligand spécifique de l'IP1 ou l"IP1 marqué est lié de manière directe ou indirecte à un support solide. C'est par exemple le cas lorsque la technique SPA (Scintillation proximity assay) est utilisée : le ligand spécifique de l'IP1 sera lié de manière covalente à des billes SPA. C'est également le cas dans le dosage ELISA décrit dans l'exemple 17.

Dans le cas ou l'analogue d'IP1 est couplé à un support solide, il peut y être lié de manière covalente, comme cela est décrit plus haut. L'analogue d'IP1 peut être également lié au support solide de manière indirecte : c'est par exemple le cas si l'analogue d'IP1 est l'IP1-biotine, et que le support solide est recouvert de streptavidine. Dans cette mise en oeuvre particulière du procédé de dosage de l'IP1, le ligand spécifique de l'IP1 est marqué par un traceur (radioactif, fluorescent, enzymatique ou autre) qui permettra la détection du complexe analogue IP1 / ligand spécifique de l'IP1. Si le ligand spécifique de l'IP1 est un anticorps anti-IP1, ce dernier pourra également être détecté par ajout à l'échantillon d'un anticorps anti-espèce marqué par un traceur.

Une mise en oeuvre particulière du procédé de détection de l'IP1 selon l'invention consiste donc à mettre en contact l'échantillon avec un anticorps spécifique de l'IP1 et un analogue de l'IP1 fixé sur un support solide, et à opérer en outre les étapes suivantes :
- lavage du support solide ;
- ajout d'un anticorps anti-espèce reconnaissant l'anticorps anti-IP1, ledit anticorps anti-espèce étant marqué par un traceur ;
- détection de l'anticorps anti-espèce, la quantité d'anticorps anti-espèce étant inversement proportionnelle à la quantité de complexe anticorps anti-IP1 / IP1 présent dans l'échantillon.

Le ligand spécifique de l'IP1 peut également être lié au support solide de manière covalente, ou bien de manière indirecte si le support solide est recouvert d'un anticorps anti-espèce, par exemple anti-rat si le ligand spécifique de l'IP1 est un anticorps anti-IP1 obtenu par immunisation de rats. Dans cette mise en oeuvre particulière, l'analogue d'IP1 sera marqué par un traceur (radioactif, fluorescent, enzymatique) qui permettra la détection du complexe analogue IP1 / ligand spécifique de l'IP1.

Une variante du procédé consiste donc à mettre en contact l'échantillon avec un anticorps spécifique de l'IP1 fixé à un support solide et avec un analogue de l'IP1 marqué par un traceur, puis à mettre en oeuvre les étapes suivantes :
- mise en contact de l'échantillon avec un anticorps anti-IP1 fixé sur un support solide et avec un analogue de l'IP1 marqué par un traceur, et comprenant en outre les étapes suivantes :
- lavage du support solide ;
- détection de l'IP1 marqué ;
la quantité d'IP1 marqué étant inversement proportionnelle à la quantité de complexe anticorps anti-IP1 / IP1 présent dans l'échantillon.

D'autres techniques connues de l'homme du métier peuvent être utilisées pour mettre en oeuvre les procédés de détection de l'IP1 selon l'invention. On peut citer notamment les techniques de polarisation ou encore de spectroscopie de corrélation de fluorescence. Dans tous les cas, ces techniques sont basées sur la formation de complexe ligand spécifique de l'IP1- IP1, suivie d'une étape de détection des complexes formés.

Les exemples de tests suivants illustrent le procédé de dosage de l'IP1 selon l'invention :

### Tests ELISA permettant le dosage de l'IP1 :

Lors de la mise au point d'un test ELISA , deux formats d'essais peuvent être envisagés :
- dans un premier format, un analogue de l'IP1 fonctionnalisé selon l'invention, est préalablement fixé sur une phase solide. L'échantillon biologique contenant l'IP1 à doser est ensuite incubé en présence du complexe formé sur la phase solide avec un premier anticorps anti-IP1. Après une étape de lavage éliminant les espèces non fixées sur la phase solide, un second anticorps anti-espèce marqué par une enzyme de type HRP, dirigé contre l'anticorps anti-IP1, est ensuite ajouté dans le puits réactionnel. Après une étape de lavage éliminant l'excès du second anticorps non fixé, un substrat de l'enzyme HRP portée par le second anticorps est ajouté dans le puits réactionnel de manière à générer l'apparition d'un signal colorimétrique. L'intensité de ce signal, mesuré sur un spectrophotomètre, sera inversement proportionnelle à la quantité d'IP1 contenue dans l'échantillon biologique.
- Dans un deuxième format, un anticorps anti-IP1 sera préalablement fixé sur la phase solide. Cette fixation peut être réalisée de deux manières : soit par adsorption passive soit en utilisant une phase solide immunologiquement réactive portant un anticorps secondaire anti-espèce. L'échantillon biologique contenant l'IP1 à doser est ensuite incubé en présence d'un analogue de l'IP1 fonctionnalisé, selon l'invention. Dans ce format l'utilisation d'un analogue IP1-biotine sera privilégié. Après une étape de lavage éliminant les espèces non fixées sur la phase solide, de la streptavidine marquée par une enzyme de type HRP est ensuite ajoutée dans le puits réactionnel. Après une étape de lavage éliminant l'excès de streptavidine non fixée, un substrat de l'enzyme HRP portée par la streptavidine est ajouté dans le puits réactionnel de manière à générer l'apparition d'un signal colorimétrique. L'intensité de ce signal, mesuré sur un spectrophotomètre, sera inversement proportionnelle à la quantité d'IP1 contenue dans l'échantillon biologique

### Test HTRF (test fluorométrique homogène en temps résolu) détectant l'IP1 par compétition.

Ces tests peuvent être effectués sous différents formats :

*Format direct:* les échantillons contenant l'IP1 à doser sont incubés dans des puits d'une plaque de microtitration en présence d'un conjugué IP1-cyanine (ou plus généralement d'un conjugué IP1-accepteur de FRET) et d'un conjugué anticorps anti-IP1 marqué par un cryptate d'europium (ou plus généralement un complexe de lanthanide utilisable comme donneur de FRET). En tant qu'accepteur de FRET on entend toute molécule fluorescente présentant un recouvrement spectral entre son spectre d'excitation et le spectre d'émission du lanthanide utilisé comme donneur de FRET.

Un témoin positif contenant uniquement le conjugué IP1-cyanine et le conjugué anti-IP1-cryptate d'europium et un témoin négatif contenant uniquement le conjugué anti-IP1-cryptate d'europium sont aussi incubés dans des puits d'une plaque de microtitration.

Les fluorescences émises à la longueur d'onde d'émission de l'accepteur de FRET (665nm dans le cas de la cyanine) et à la longueur d'onde d'émission du donneur de FRET (620nm dans le cas de l'accepteur de FRET) sont détectés en temps résolu après excitation du donneur de FRET (337nm dans le cas du cryptate d'europium). Le ratio (fluorescence provenant de l'accepteur)/(fluorescence provenant du donneur) est ensuite calculé pour tous les puits contenant les échantillons à doser ou le témoin positif ou le témoin négatif. La différence de ratio observée entre le témoin positif et le témoin négatif (DR de référence) indique la présence d'une interaction spécifique entre l'anticorps anti-IP1 et l'analogue IP1. Dans le cas où un échantillon contient de l'IP1, celui-ci va entrer en compétition avec l'analogue IP1-accepteur dans sa liaison au conjugué anticorps-cryptate d'europium. La valeur de DR obtenue en présence d'un tel échantillon (DR échantillon) sera plus basse que celle du DR de référence. Plus la différence entre le DR de référence et le DR échantillon sera importante plus l'échantillon contiendra de l'IP1.

Le même type de test HTRF peut être effectué en utilisant un conjugué IP1-donneur et un conjugué anticorps - accepteur.

*Format semi-direct* : les échantillons contenant l'IP1 à doser sont incubés dans des puits d'une plaque de microtitration en présence d'un conjugué IP1-biotine, de streptavidine-XL665 (ou plus généralement d'un conjugué accepteur de FRET) et d'un conjugué anticorps anti-IP1 marqué par un cryptate d'europium (ou plus généralement un complexe de lanthanides utilisable comme donneur de FRET).

En tant qu'accepteur de FRET on entend toute molécule fluorescente présentant un recouvrement spectral entre son spectre d'excitation et le spectre d'émission du lanthanide utilisé comme donneur de FRET.

Un témoin positif contenant uniquement le conjugué IP1-biotine, de la streptavidine-XL665 et le conjugué anti-IP1-cryptate d'europium et un témoin négatif contenant uniquement le conjugué anti-IP1-cryptate d'europium et la streptavidine-XL665 sont aussi incubés dans des puits d'une plaque de microtitration.

La détection des fluorescences émises par le donneur et l'accepteur de FRET et le calcul des résultats sont identiques à ce qui est décrit précédemment pour un format direct.

« XL665 » désigne une allophycocyanine réticulée commercialisée par Cis Bio International.

*Format indirect:* les échantillons contenant l'IP1 à doser sont incubés dans des puits d'une plaque de microtitration en présence d'un conjugué IP1-biotine, de streptavidine-XL665 (ou plus généralement d'un conjugué accepteur de FRET) et d'un anticorps anti-IP1 et d'un anticorps anti-espèce reconnaissant l'anticorps anti-IP1 et marqué par un cryptate d'europium (ou plus généralement un complexe de lanthanides utilisable comme donneur de FRET).

En tant qu'accepteur de FRET on entend toute molécule fluorescente présentant un recouvrement spectral entre son spectre d'excitation et le spectre d'émission du lanthanide utilisé comme donneur de FRET.

Un témoin positif contenant uniquement le conjugué IP1-biotine, de la streptavidine-XL665, l'anticorps anti-IP1 et le conjugué anti-espèce-cryptate d'europium et un témoin négatif contenant uniquement l'anticoprs anti-IP1, le conjugué anti-espèce-cryptate d'europium et la streptavidine-XL665 sont aussi incubés dans des puits d'une plaque de microtitration.

La détection des fluorescences émises par le donneur et l'accepteur de FRET et le calcul des résultats sont identiques à ce qui est décrit précédemment pour un format direct.

Ces tests HTRFs directs, semi-directs ou indirects sont particulièrement adaptés au criblage de librairies de composés chimiques, dont on veut tester par exemple l'effet agoniste, antagoniste ou agoniste inverse sur un récepteur membranaire donné, dont l'activation entraîne une élévation du taux d'IP1 intracellulaire. Ces tests peuvent être pratiqués sur des cellules, en utilisant les analogues d'IP1 et les anticorps anti-IP1 selon l'invention.

L'invention fournit donc un procédé de criblage de composés agonistes d'un récepteur membranaire dont l'activation entraîne la production d'IP1 dans la cellule, ce procédé comprenant les étapes suivantes :
(i) Ajout du composé à tester dans une milieu de culture comprenant des cellules exprimant un récepteur dont l'activation entraîne la production d'IP1,
(ii) Détermination de la quantité d'IP1 à l'aide des procédés selon l'invention
(iii) Comparaison de la quantité d'IP1 déterminée en présence et en l'absence de ce composé, une augmentation de la quantité d'IP1 permettant d'identifier le composé à tester en tant qu'agoniste dudit récepteur.

Dans une mise en oeuvre préférée de ce procédé, l'étape (ii) comprend l'ajout dans le milieu d'un anticorps anti-IP1 marqué par un composé fluorescent donneur ou accepteur ainsi que l'ajout d'IP1 marqué par un composé fluorescent accepteur ou, respectivement donneur, et la détermination de la quantité d'IP1 consiste à mesurer le signal lumineux résultant du transfert d'énergie entre les deux composés fluorescents, et l'étape (iii) comprend la comparaison du signal mesuré en présence et en l'absence de composé à tester, une diminution du signal mesuré en présence de composé à tester permettant d'identifier ce composé comme un agoniste dudit récepteur

L'invention fournit également un procédé de criblage de composés antagonistes d'un récepteur membranaire dont l'activation entraîne la production d'IP1 dans la cellule, ce procédé comprenant les étapes suivantes :
(i) Ajout du composé à tester dans une milieu de culture comprenant des cellules exprimant un récepteur dont l'activation entraîne la production d'IP1,
(ii) Ajout d'un agoniste connu dudit récepteur,
(iii) Détermination de la quantité d'IP1 à l'aide des procédés selon l'invention
(vi) Comparaison de la quantité d'IP1 déterminée en présence et en l'absence du composé à tester, une diminution de la quantité d'IP1 permettant d'identifier le composé à tester en tant qu'antagoniste dudit récepteur.

L'étape (iii) comprend l'ajout dans le milieu d'un anticorps anti-IP1 marqué par un composé fluorescent donneur ou accepteur ainsi que l'ajout d'IP1 marqué par un composé fluorescent accepteur ou, respectivement, donneur, et la détermination de la quantité d'IP1 consiste à mesurer le signal lumineux résultant du transfert d'énergie entre les deux composés fluorescents, et l'étape (iv) comprend la comparaison du signal mesuré en présence et en l'absence de composé à tester, une augmentation du signal mesuré en présence de composé à tester permettant d'identifier ce composé comme un antagoniste dudit récepteur

L'invention fournit également un procédé de criblage de composés agonistes inverses d'un récepteur membranaire constitutivement actif. Un récepteur est considéré comme étant constitutivement actif lorsqu'il possède une activité intrinsèque et basale de couplage aux protéines G et/ou associé à une production de seconds messagers en l'absence de stimulation par son agoniste. Dans ce cas, un agoniste inverse aura pour effet de diminuer l'amplitude de cette réponse basale, en d'autre terme, de réduire ou d'annuler la production permanente d'IP1 par ce récepteur en l'absence de stimulation par son agoniste

Une méthode de criblage de composés provoquant une diminution de cette activité constitutive peut permettre d'identifier de nouveaux médicaments.

Le procédé de criblage de composés agonistes inverses d'un récepteur membranaire constitutivement actif comprend les étapes suivantes :
(i) Ajout du composé à tester dans une milieu de culture comprenant des cellules exprimant un récepteur constitutivement actif, et dont l'activité entraîne la production d'IP1,
(ii) Détermination de la quantité d'IP1 à l'aide des procédés selon l'invention
(iii) Comparaison de la quantité d'IP1 déterminée en présence et en l'absence du composé à tester, une diminution de la quantité d'IP1 permettant d'identifier le composé à tester en tant qu'agoniste inverse dudit récepteur.

Dans une mise en oeuvre préférée de ce procédé, l'étape (ii) comprend l'ajout dans le milieu d'un anticorps anti-IP1 marqué par un composé fluorescent donneur ou accepteur ainsi que l'ajout d'IP1 marqué par un composé fluorescent accepteur ou, respectivement, donneur, et la détermination de la quantité d'IP1 consiste à mesurer le signal lumineux résultant du transfert d'énergie entre les deux composés fluorescents, et l'étape (iii) comprend la comparaison du signal mesuré en présence et en l'absence de composé à tester, une augmentation du signal mesuré en présence de composé à tester permettant d'identifier ce composé comme un agoniste inverse dudit récepteur

L'homme du métier est à même d'adapter ces procédés pour mettre en évidence d'autres types de régulateurs de l'activité de récepteurs transmembranaires, comme par exemple les modulateurs allostériques positifs qui potentialise les effets agonistes.

### 7. Trousses

L'invention concerne également des trousses permettant de mettre en oeuvre ces techniques de dosage de l'IP1. Ces trousses comprennent (i) un analogue d'IP1 selon l'invention ou de l'IP1 tritié, et (ii) un ligand spécifique de l'IP1, l'un au moins de ces éléments étant marqué de manière directe ou indirecte par un traceur tel qu' un radioélément, un composé fluorescent, un composé luminescent, une enzyme, un chromophore fluorescent, un chromophore absorbant la lumière, ou tout autre molécule ou substance permettant une mesure quantitative directe ou indirecte.

Les trousses selon l'invention peuvent contenir un composé donneur et un composé accepteur émettant un signal résultant d'un transfert de proximité avec le composé donneur, le composé donneur étant lié de manière directe ou indirecte à l'analogue de l'IP1, et le composé accepteur étant lié de manière directe ou indirecte au ligand spécifique de l'IP1. Dans une autre mise en oeuvre de ces trousses, le composé accepteur est lié de manière directe ou indirecte à l'analogue de l'IP1, et le composé donneur est lié de manière directe ou indirecte au ligand spécifique de l'IP1. De manière avantageuse, le composé donneur et le composé accepteur sont des composés fluorescents, le transfert de proximité est un transfert d'énergie et le signal émis est un signal fluorescent.

Un composé fluorescent donneur est un composé fluorescent qui après excitation à une longueur d'onde déterminée va émettre un signal fluorescent qui, en opérant un transfert d'énergie, va exciter le composé fluorescent accepteur. De nombreux composés fluorescents donneurs peuvent être utilisés dans le cadre de la présente invention. A titre d'exemple, on peut citer les cryptates de terre rare (Europium, Terbium) décrits dans les brevets EP 180 492, EP 321 353, EP 601 113, ainsi que les chélates de terre rare.

Un composé fluorescent accepteur est un composé fluorescent qui après excitation par transfert d'énergie du composé donneur va émettre un signal fluorescent à une longueur d'onde donnée. Il existe de nombreux composés accepteurs susceptibles d'être utilisés pour mettre en oeuvre les procédés selon la présente invention, parmi lesquels : les allophycocyanines, l'allophycocyanine réticulée telle que la XL665 (CIS bio international), les cyanines telles que la CY5, les rhodamines, les squaraines, les BODIPYs, les fluorescéines, les AlexaFluors.

De manière préférée, le ligand spécifique de l'IP1 contenu dans ces trousses est un anticorps polyclonal ou monoclonal anti-IP1, obtenu par immunisation d'un mammifère avec un conjugué IP1-molécule porteuse.

Les trousses selon l'invention peuvent également contenir du chlorure de lithium ou tout autre produit qui permet de bloquer certaines enzymes du cycle de l'inositol et favorise ainsi l'accumulation d'IP1 dans l'échantillon.

Selon le type de technique de dosage utilisé, ces trousses contiendront les composants additionnels classiques, à savoir des supports solides, des anticorps anti-espèce ou tout autre composant connu et largement utilisé dans ce type de produit.

Les exemples suivants illustrent une voie de synthèse des composés selon l'invention ainsi que leur utilisation.

### Exemple 1 : Synthèse du 2,3-O-[(1R,4R) 1,7,7-triméthylbicyclo [2.2.1]-hept-2-vlidènel-D-myo-inositol (Inositol-camphre)(composé 2) :

Le *myo*-Inositol commercial (composé 1) (4,2g) est mis en suspension dans le DMSO anhydre (50ml) avec le D-camphre diméthylacétal (9,3g). Le mélange est agité à 50°C pendant 3h, neutralisé par de la triéthylamine et concentré sous vide.

Le résidu est repris par une solution contenant 18 mg d'acide para-toluènesulfonique hydraté dans un mélange de méthanol et de chloroforme. Après une nuit sous agitation à 20°C de la triéthylamine est ajoutée et le précipité obtenu est filtré, lavé avec du chloroforme puis mis en suspension dans l'eau, agité pendant 15 min, puis filtré. Le précipité est lavé par de l'eau et du chloroforme puis séché.
Rendement 4,8g (65%).
CCM (Silice) Rf = 0,51 (10% MeOH / AcOEt).
SM-ESI(+) : m/z = 315 [M+H]+, 337 [M+Na]+
[a]_{D} = +19,3 (c=1, DMSO)

### Exemple 2 : Synthèse du [1R-(1α, 2α, 4α) 2,3-O-[(1R,4R) 1,7,7-triméthylbicyclo [2.2.1]-hept-2-ylidène]-1-[bis(phénylméthyl)phosphate]-D-myo-inositol. (composé 3)

Le composé 2 de l'exemple 1 (2,5 g) est rendu anhydre et repris dans la pyridine anhydre (30 ml). La solution est refroidie (4°C) sous atmosphère d'azote et du dibenzylphosphochloridate (3,5g) est ajouté goutte à goutte sous agitation. Après 3h sous agitation le mélange est dilué par de l'acétate d'éthyle puis lavé par une solution aqueuse saturée d'hydrogénocarbonate de sodium. La phase organique est concentrée puis co-évaporée avec du toluène, le résidu est purifié par chromatographie sur colonne de silice (2-15 % MeOH / CH₂Cl₂). Le composé recherché est ensuite cristallisé dans un mélange AcOEt / heptane (1 :4). Rendement 1,4 g (30%).
CCM (Silice) Rf = 0,25 (5% MeOH / AcOEt).
[α]_{D} = - 8,3 (c=1, CHCl₃).
RMN-³¹P (CDCl₃): δ(ppm) = - 1,61.

### Exemple 3 : Synthèse du 4,5,6-tri-O-phénylméthyloxycarbonyl-[1R-(1α, 2α, 4α) 2,3-O-[(1R,4R) 1,7,7-triméthylbicyclo [2.2.1]-hept-2-ylidène]-1- [bis(phénylméthyl)phosphatel-D-myo-inositol. (composé 4, Z = benzyloxycarbonyle)

Le composé 3 de l'exemple 2 (0,7 g) est repris dans du dichlorométhane, puis on ajoute de la triéthylamine (340 µl) et de la DMAP (6 mg) et la solution agitée est refroidie (0°C) sous azote . On ajoute 1,04 ml de chlorure de benzyloxycarbonyle sur une période de 30 min puis on laisse 18h sous agitation à température ambiante. Le mélange réactionnel est lavé par une solution aqueuse d'hydrogénocarbonate de sodium (à 10%) puis par une solution saturée de NaCl ; la phase organique est concentrée sous vide et le résidu purifié chromatographie sur colonne de silice (2-10 % AcOEt / toluène). Le composé recherché est obtenu sous forme d'une gomme. Rendement 0,7 g (57 %).
CCM (Silice) Rf = 0,49 (20 % AcOEt / toluène).
[α]_{D} = - 19,6 (c=1, CHCl₃).

### Exemple 4 : Synthèse du 4,5,6-tri-O-phénylméthyloxycarbonyl-1-[bis (phénylméthyl) phosphate]-D-myo-inositol. (composé 5)

Le composé 4 de l'exemple 3 (0,2 g) est mis en solution dans du dichlorométhane, la solution est refroidie (0°C) et 400 µl d'un mélange TFA/H₂O 95/5 sont ajoutés. Après 3h sous agitation à O°C le mélange est évaporé et co-évaporé quatre fois en présence de toluène. Le résidu est purifié par chromatographie sur colonne de silice (AcOEt / toluène puis MeOH/ toluène). Le composé recherché est obtenu sous forme d'une mousse. Rendement 0,16g (57 %).
CCM (Silice) Rf = 0,41 (MeOH/AcOEt / toluène , 1/2/7).
[α]_{D} = - 7,69 (c=1, CHCl₃).

### Exemple 5 : Synthèse du 2,3-O-Carbonate-4,5,6-tri-O-phénylméthyloxy-carbonyl- 1-[bis (phénylméthyl) phosphatel-D-myo-inositol. (composé 6)

Le composé 5 de l'exemple 4 (0,42 g) est dissous dans le dichlorométhane anhydre en présence de triéthylamine (210 µl) et la solution est refroidie (0°C) puis on ajoute 430 µl de phosgène, et on laisse 18h sous agitation à température ambiante. Le mélange réactionnel est dilué par du dichlorométhane et lavé par une solution diluée d'HCl, puis par de l'eau. La phase organique est concentrée et le résidu purifié par chromatographie sur colonne de silice (15-50 % AcOEt / hexane). Rendement 0,33 g (76 %).
CCM (Silice) Rf = 0,46 (50 % AcOEt / hexane).
[α]_{D} = - 16,3 (c=1, CHCl₃).

### Exemple 6: Synthèse du 2,3-O-Carbonate-1-phosphate-D-myo-inositol. (composé 7)

Le composé 6 de l'exemple 5 (0,2g ) dans un mélange THF/EtOH/H2O est hydrogéné pendant 5h en présence d'un catalyseur 10% palladium sur charbon (0,2g) à température ambiante. Après filtration sur célite, le filtrat est lyophilisé. Rendement 65 mg (100 %).
HPLC (ODS ; gradient (10mn) 0-2% ACN / TEAAc 30mM pH 6,8) : Rt = 4,52 mn. SM-ESI(-) : m/z = 285 [M-H]-.
RMN-³¹P (D₂O): δ ppm) = 3,54.

### Exemple 7: Synthèse des dérivés 3-O-(5-benzyloxycarbamidopentyl)-carbamoyl-D-myo-inositol-1-phosphate (composé 8) (« isomère 3 ») et 2-O-(5-benzyloxycarbamidopentyl)-carbamoyl-D-myo-inositol-1-phosphate (composé 9) (« isomère 2 »).

Le composé 7 de l'exemple 6 (60 mg) est mis à réagir avec 150 mg de 5-benzyloxycarbamidopentylamine (dérivé mono-Boc de la pentylamine) dans 1,8 ml de DMF anhydre. Après 48h le solvant est évaporé et le produit est purifié par HPLC préparative pour séparer les composés 8 et 9.

Rendement en composé 8 (isomère 3) : 40 mg (35 %), en composé 9 (isomère 2) : 37 mg (34 %).
HPLC (ODS ; gradient (10min) 0-2% puis (15mn) 2 à 60 % ACN / TEAAc 30mM pH 6,8): Rt = 18,6 mn (isomère 2)
RMN-³¹P (D₂O): δ ppm) = 2,35.

### Exemple 8: Synthèse des dérivés 3-O-(5-Aminopentyl)-carbamoyl-D-myo-inositol-1-phosphate (composé 10) ou 2-O-(5-Aminopentyl)- carbamoyl-D-myo-inositol-1-phosphate (composé 11)

Vingt et un milligramme du composé 8 ou du composé 9 de l'exemple 7 sont dissous dans 2 ml d'un mélange éthanol/eau (1/1) et sont hydrogénés pendant 5h en présence d'un catalyseur 10% palladium sur charbon (0,2g) à température ambiante. Après filtration sur célite, le filtrat est lyophilisé.
Rendement en composés 10 ou 11 : 15 mg (90 %).
Composé 10 : HPLC (ODS ; gradient (10min) 0-2% ACN / TEAAc 30mM pH 6,8) : Rt = 3,75 mn.

Le composé 10 est le 3-O-(5-aminopentylcarbamoyl-D-myo-inositol-1-phosphate (sous la forme de sel de triethylammonium).

HPLC (ODS ; gradient (10mn) 0-2% ACN / TEAAc 30mM pH 6,8) : Rt = 3,75 mn. SM-ESI(-) : m/z = 387 [M-H]-. SM-ESI(+) : m/z = 389 [M-H]+.
RMN- ³¹P (D₂O): δ ppm) = 3,79.
RMN-¹H: (D₂O,400MHz (ppm)): 5,21 (dd,1H,H₂); 3,97 (ddd,1H,H₁) ; 3,76-3,57 (m, 2H, H₃+H₆) ; 3,50 (dd, 1H, H₄) ; 3,29 (m,1H,H₅) ; 3,19-2,96 (m,8H,CH₂ (bras) + CH₂ (Et₃N)) ; 2,90 (dd, 2H, CH₂ (bras)) ; 1,59 (m, 2H ,CH₂(bras)) ; 1,47 (m,2H, CH₂(bras)) ; 1,34 (m,2H, CH₂(bras)) ; 1,18 (t, 9H, CH₃ (Et₃N)).
RMN-¹³C: (D₂O,62,9MHz, (ppm)): 161,0 (C=O) ; 77,2 (C2), 76,9 (C5) ; 76,0 (C1) ; 75,3 (C3) ; 75,1 (C4) ; 72,5 (C6) ; 42,8 , 42,2 , 31,0 , 29,1 , et 25,5 (CH₂ bras).

Le composé 11 est le 2-O-(5-aminopentylcarbamoyl)-D-myo-inositol-1-phosphate (sous la forme de sel de triethylammonium).
HPLC (ODS ; isocratique 2 min à 5% puis gradient (20 min) 5-45% ACN / TEAAc 30mM pH 6,8) : Rt = 3,84 min.
SM-ESI(-) : m/z = 387 [M-H]-. SM-ESI(+) : m/z = 389 [M+H]+.
RMN-¹H: (D₂O,400MHz, (ppm)): 4,52 (dd,1H,H₃); 4,24 (dd,1H,H₂) ; 3,88 (ddd, 1H,
H₁) ; 3,71-3,68 (m, 2H, H₄ et H₆) ; 3,33 (m,1H,H₅) ; 3,11-2,06 (m,5H,CH₂ (bras) + CH2 (Et₃N)) ; 2,90 (dd, 2H, CH₂ (bras)) ; 1,58 (m, 2H ,CH₂(bras)) ; 1,46 (m,2H, CH₂(bras)) ; 1,31 (m,2H, CH₂(bras)) ; 1,18 (t, 9H, CH₃ (Et₃N)).
RMN-¹³C: (D₂O,62,9MHz, (ppm)): 160,4 (C=O) ; 77,2 -76,6 -75,7 -74,8 - 73,1 - 72,5 (C inositol) ; 42,8 , 42,1 , 31,0 , 29,1 , et 25,4 (CH₂ bras).
RMN-³¹P (D₂O): δ ppm) = 2,31.

### Exemple 9: Synthèse d'un dérivé 3-O-(5-biotinamidopentyl)- carbamoyl -D-myo-inositol-1-phosphate. (composé 12)

A une solution de 2,35 mg (5,23 µmol) de 3-O-(5-aminopentyl)-carbamoyl-1-phosphate-D-*myo*-inositol (composé 10) préparé selon l'exemple 8 dans 500 µl de tampon phosphate pH 8 on ajoute 1,92 mg (5,6 µmol) de biotine-NHS ester (Aldrich) dans un mélange de 200µl de tampon phosphate et 300 µl d'acétonitrile. Par HPLC on observe la transformation du pic de produit de départ ( tR = 16,5 mn ) en un nouveau composé (tR = 16,9 mn ) [Lichrospher Merck RP18 E (5µm) 125 x 4 mm, 1ml / mn, A : eau à 0,05 % de TFA, B : acétonitrile, gradient 0 à 2% de B en 10 min,
2 % à 15 % B en 5 min 15 % à 100 % B en 8 min, détection à 190 nm]. On purifie le composé par RP-HPLC après évaporation et séchage sous vide on obtient 2,29 mg (70%) de dérivé IP1-biotine (composé ). SM (ES+) [MH]+ = 615 (100 %) (Calc : C₂₂H₃₉N₄O₁₂PS)-

### Exemple 10 : Marquage du 3-O-(5-aminopentyl)- carbamoyl -D-myo-inositol-1-phosphate par CY5 : conjugué CY5-IP1 (composé 13)

Dans un eppendorf on pèse 0,96 mg (1,96 µmol) de 3-O-(5-aminopentyl)-carbamoyl -D-*myo*-inositol-1-phosphate (composé 10) préparé selon l'exemple 8, on ajoute 400 µl de tampon carbonate pH9 et ensuite 2 équivalents de CY5-sulfonée-mono NHS (Amersham-Pharmacia ) dans 163 µl de DMF .On analyse et purifie par RP-HPLC ( Vydac RP18 ; 1ml/mn ; gradient (30mn) 10-27% ACN / H2O à 1% TFA) ; on collecte le pic à tR ~17 min. On obtient 0,64 µmole de composé 13.
Rendement = 32%.

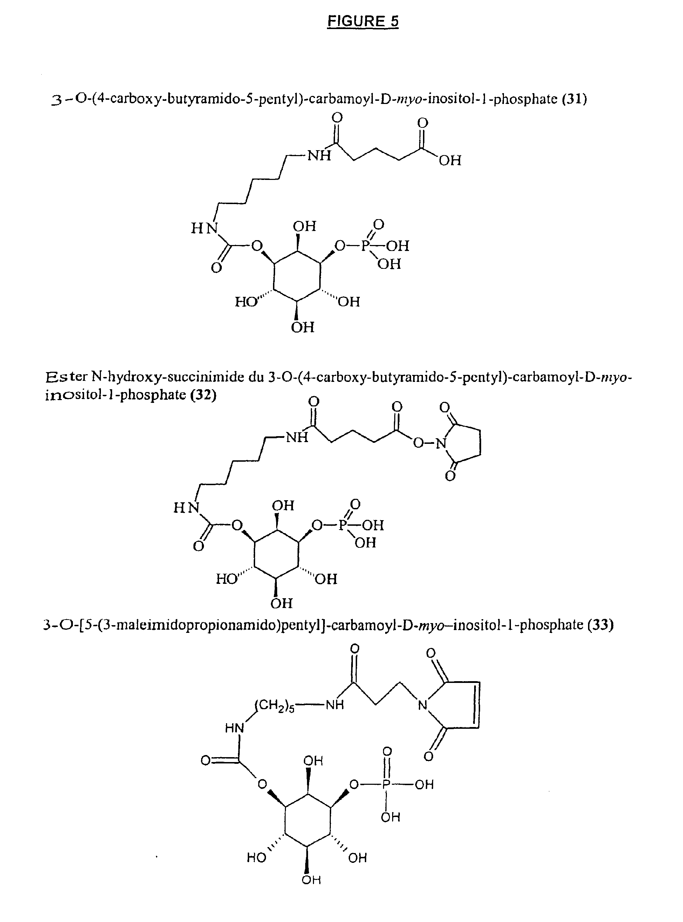

### Exemple 11 : Préparation du 3-O-(4-carboxy-butyramido-5-pentyl)-carbamoyl-D-myo-inositol-1-phosphate (composé 31) et dérivé N-Hydroxy-succinimide (composé 32)(figure 5)

Dans un tube eppendorf on pèse 2 mg (4,0 µmol) de 3-O-(5-aminopentyl)-carbamido-1-phosphate-D-myo-inositol (composé 10) préparé selon l'exemple 8, on ajoute 200 µl de tampon triéthylammonium bicarbonate 0,1 M pH 8 et 200µl (soit 5 équivalents) d'une solution d'anhydride glutarique dans le diméthylformamide (12 mg/ml) après une heure d'incubation on porte le pH à 10 en ajoutant de la triéthylamine et après 15 mn on évapore neutralise (pH7) par de l'acide acétique aqueux (à 20% , V/V). On analyse et purifie par RP-HPLC (Vydac RP18 ; 1ml/mn ; gradient (20mn) 0-10% ACN / 50 mM triethylammonium bicarbonate) détecteur à diffusion de lumière. On collecte la fraction correspondant au pic majoritaire, la fraction est évaporée à sec (speed-vac) puis co-évaporé plusieurs fois en rajoutant chaque fois 200 µl d'eau. On obtient 3,0 µmole de composé 31. Rdt = 75%.

Le composé 31 ainsi obtenu et évaporé à sec dans un tube eppendorff, est repris par du DMF (200µl) contenant 1,75 µl de diisopropyl-ethylamine, on ajoute 1,3 mg de TSTU [O-(N-succinimidyl)-N,N,N',N'-tetramethyluronium tetrafluoroborate] dissout dans 200µl de DMF. On suit la formation du dérivé NHS par RP-HPLC HPLC (Vydac RP18 ; 1ml/mn ; gradient (20mn) 0-10% ACN / acide trifluoracétique à 0.1% dans l'eau détection à 190 nm). Après 4h de réaction on évapore une partie du DMF (speed-vac) et dilue le milieu réactionnel par de une solution aqueuse d'acide trifluoracétique à 0.1% (environ 3 ml) et purifie par RP-HPLC en utilisant les mêmes conditions que pour l'analyse. On collecte la fraction principale, on l'évapore à sec et sèche sous vide. On obtient 1,5 µmole de dérivé NHS (32). Ce composé est repris dans un minimum d'eau, aliquoté dans des tubes eppendorff munis de bouchons à vis et évaporé à sec. Les tubes sont stocké à -20°C jusqu'à leur utilisation.

### Exemple 12 : Synthèse d'un dérivé 3-O-[5-(3-maléimidopropionamido) pentyl]-carbamoyl -D-myo-inositol-1-phosphate. (composé 33) (figure 5)

A une solution de 4,04 mg (9 µmol) de 3-O-(5-aminopentyl)-carbamoyl-1-phosphate-D-*myo*-inositol (composé 10) préparé selon l'exemple 8 dans 2 ml de tampon phosphate 0,1 M pH 7 refroidit dans un bain de glace on ajoute 5,54 mg (20 µmol) de N-hydroxysuccinimidyl 3-maléimidopropionate (Aldrich) dissout dans un 400µl d'acétonitrile par fractions de 100 µl toute les 5mn en laissant revenir 20°C, puis on laisse deux heures en réaction. Par HPLC on observe la transformation du pic de produit de départ en un nouveau composé (tR = 12,7 mn ) [Lichrospher Merck RP18 E (5µm) 125 x 4 mm, 1ml / mn, A : eau à 0,05 % de TFA, B : acétonitrile, gradient 0 à 2% de B en 10 min, 2 % à 15 % B en 5 min 15 % à 100 % B en 8 min, détection à 190 nm]. On purifie le composé par RP-HPLC en utilisant les mêmes solvants, après évaporation et séchage sous vide on obtient 1,15 mg (21%) de dérivé IP1-maléimide (composé 33). SM (ES⁺) [MH]⁺ = 420 (30%) [M+Na]⁺ = 562 (50%) (Calc : C₁₉H₃₀N₃O₁₃P). Le produit est aliquoté et conservé à -20°C jusqu'à son utilisation.

### Exemple 13 : Couplage de l'IP1-maléimide avec la XL665

L'allophycocyanine XL665 (CIS BIO INTERNATIONAL) est préalablement activée par 5 équivalents de SPDP (N-Hydroxysuccinimidyl 3-[2-pyridylthio] propionate) dans un tampon phosphate 0.1M pH=7 pendant 30 minutes à température ambiante. Le mélange réactionnel est ensuite réduit par 20mM de DTT (Dithiothreitol) dans le même tampon. La XL665 activée (XL665-SH) est ensuite purifiée par chromatographie d'exclusion en utilisant une colonne Amersham Biosciences de G25 super fine HR10/30. Le tampon d'élution de l'étape de purification est un tampon phosphate 0.1M pH=7.

L'étape de couplage est réalisée en ajoutant 5 équivalents d'IP1-maléimide de l'exemple 12 à 1 équivalent d'XL665-SH et en laissant réagir pendant une nuit à 4°C.

Le conjugué IP1-XL665 est ensuite purifié par chromatographie d'exclusion en utilisant une colonne G25 super fine HR10/30 (Amersham Biosciences). Le tampon d'élution de l'étape de purification est un tampon phosphate 0.1M pH=7.

### Exemple 14 : Préparation d'un immunogène par couplage entre BSA et 3-O-(5-aminopentyl)-carbamoyl -D-myo-inositol-1-phosphate.

On prépare une solution de BSA (sérum albumine bovine) à 10 mg / ml dans du PBS (tampon phosphate salin : 11mM Phosphate 140 mM NaCl pH 7,2). Dans un tube eppendorf on mélange : 240 µl de solution BSA (soit 2,4 mg) et 300 µl d'analogue de 3-O-(5-aminopentyl)-carbamido-1-phosphate-D-*myo-*inositol préparé selon l'exemple 8 puis 60 µl de glutaraldéhyde (soit 1% du volume final). On incube deux heures à 20°C sous agitation puis on ajoute 600 µl d'une solution aqueuse de NaBH4 (borohydrure de sodium) fraîchement préparée, puis on dialyse pendant une nuit à 4°C contre du tampon PBS. Le conjugué est ensuite aliquoté et conservé à -20°C.

### Exemple 15 : Immunisation

Des souris sont immunisées (6 injections sous-cutanées réalisées chacune à partir de 50 µl de solution d'immunogène préparé selon l'exemple 14 émulsionné par un même volume d'adjuvant de Freund.) On effectue régulièrement des prélèvements de sang et les antisérums obtenus sont conservés à -20°C.

### Exemple 16: Test ELISA permettant de détecter la présence d'anticorps reconnaissant spécifiquement l'IP1

On utilise des plaques microtitration 96 puits NUNC recouvertes de streptavidine (13 pmol/puits). On distribue 100 µl de conjugué IP1-biotine préparé selon l'exemple 9 à une concentration de 0.25 µg / ml dans du tampon PBS 0,3 % BSA. Incubation 1h30 à 20°C puis trois lavages au PBS 0,1% Tween20. On prélève les antisérums qui sont dilués au 1/10, 1/100 ...1/10 000 et distribués (100 µl/puits) dans la plaque de microtitration ; on prépare également des puits contrôles « blancs » en distribuant du tampon seul. Incubation 16h à 4°C puis trois lavages au PBS 0,1% Tween20. On distribue 100µl de conjugué anti IgG (souris)-Peroxydase (Sigma # A 0168) dilué au 1/60 000 ème en PBS 0.3% BSA. On incube 1h à température ambiante avec agitation puis effectue trois lavages au PBS 0,1% Tween. On distribue 100µl de TMB (Sigma # T 8665), on incube 30 min à température ambiante avec agitation puis distribue 100µl de réactif d'arrêt (Sigma # S5814) et mesure les densités optiques à 450nm.

On observe des DO₄₅₀ₙₘ > 0,5 dans les puits contenant les dilutions de sérums inférieures au 1/10 000ème ce qui montre la présence dans ces sérums d'anticorps de souris dirigés contre l'analogue de IP1.

### Exemple 17 : Spécificité des anticorps anti-IP1 évalués par ELISA (figure 10)

On utilise des plaques microtitration 96 puits NUNC recouvertes de streptavidine (13 pmol/puits). On distribue 100 µl de conjugué IP1-biotine préparé selon l'exemple 9 à une concentration de 0,25 µg/ml et incube 2h30 à température ambiante avec agitation. On lave trois fois par de l'eau à 0,1% Tween20. On ajoute 50 µl de solutions de compétiteurs de façon à réaliser les gammes de concentrations finales suivantes: *myo*-inositol (10 nM à 1 mM), IP1 Sigma (1nM à 100 µM), IP2 (1nM à 100 µM), IP3(1nM à 100 µM), PiP2(1nM à 100 µM) ainsi que 50µl de surnageants de culture sécrétant des anticorps anti-IP1. On incube 16h à 4°C puis lave trois fois par de l'eau à 0,1% Tween20. On ajoute 100µl de conjugué anti IgG (souris)-Peroxydase (Sigma # A 0168) dilué au 1/60 000 ème en PBS 0.3% BSA . On incube 1h à température ambiante avec agitation puis effectue trois lavages au PBS 0,1% Tween20. On distribue 100µl de substrat TMB (Sigma # T 8665) on incube 30 min à température ambiante avec agitation puis distribue 100µl de réactif d'arrêt (Sigma # S5814) et mesure les densités optiques à 450nm.

On porte la densité optique à 450nm en fonction du logarithme de la concentration en composé dont on veut tester la compétition. Pour tous les composés testés en compétition la densité optique maximal DO450 ∼1,5 est observée aux plus faibles concentrations (1 nM). On observe que le *myo*-inositol ne provoque pas de baisse du signal même à des concentrations de 1mM alors que l'IP1 induit une diminution du signal pour des concentrations inférieures au micromolaire ce qui montre que l'anticorps contenu dans le sérum est capable de reconnaître spécifiquement la molécule d'IP1 en présentant une affinité suffisante pour être utilisé dans un dosage. De même les différents métabolites, tels que le PIP2 ont été testés et ne sont pas reconnus par l'anticorps ce qui confirme la spécificité de la reconnaissance de IP1 par les anticorps anti-IP1.

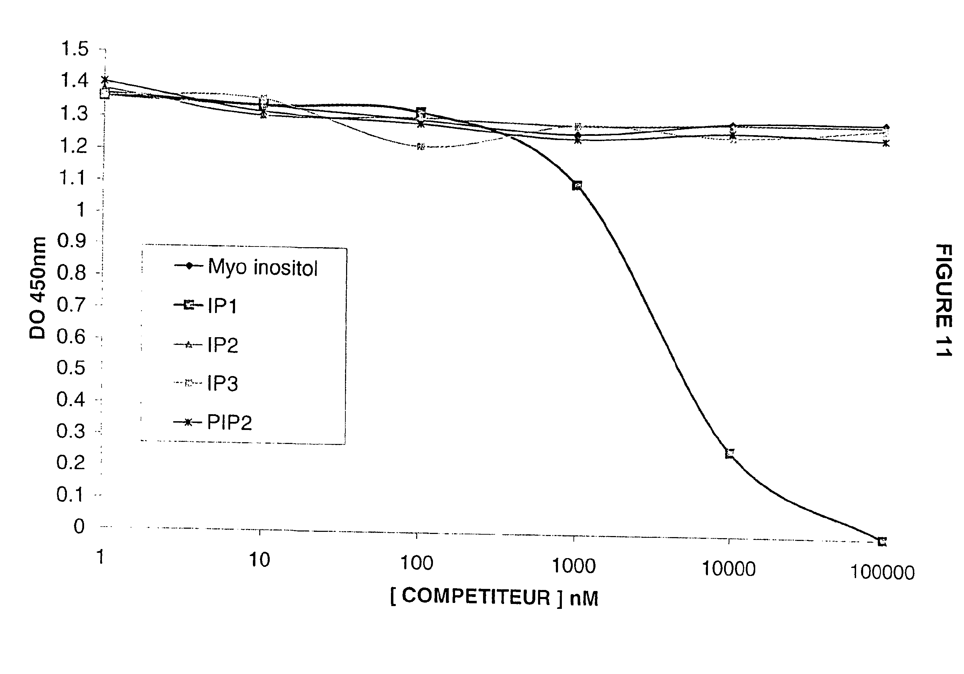

Le graphe de la figure 11 montre la spécificité de l'anticorps anti-IP1 utilisé dans le test ELISA. En effet, seule l'utilisation de l'IP1 comme compétiteur permet de mesurer une inhibition du signal.

### Exemple 18: Dosage d'IP1 par un test HTRF. Spécificité des anticorps anti-IP1.

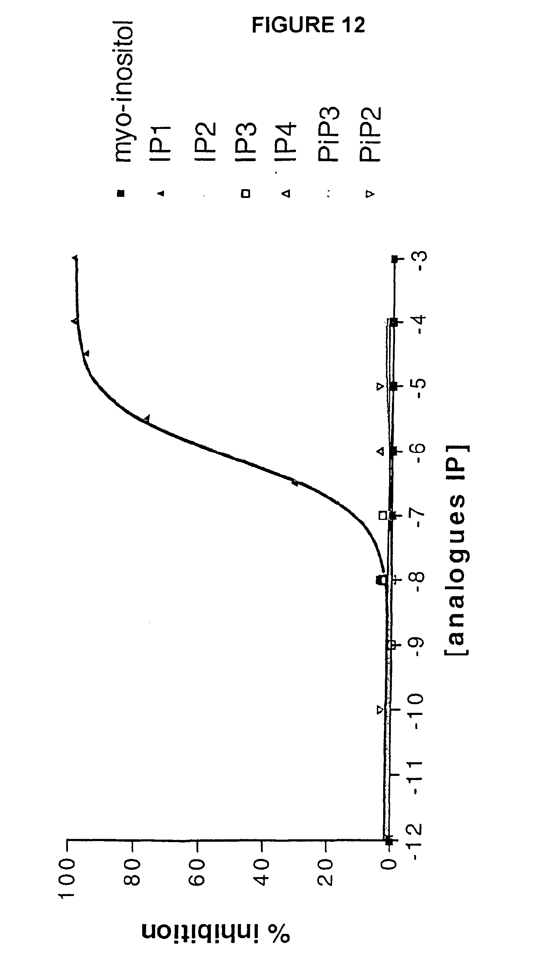

Toutes les solutions sont préparées dans du tampon HEPES100mM pH7 0,1% BSA 0,4M KF.NB. Dans les puits d'une plaque de microtitration à fond noir on distribue 50 µl de solution de compétiteurs de façon à obtenir les concentrations finales suivantes : *myo*-inositol (10 nM à 1 mM), IP1 Sigma (1nM à 1 mM), IP2 (1nM à 100 µM), IP3(1nM à 100 µM), PiP2(1nM à 100 µM). On distribue ensuite dans l'ordre indiqué, 50 µl d'une solution 10 nM de conjugué IP1-CY5 de l'exemple 10, 50 µl d'une solution contenant 1.5nM d'un anticorps anti-IP1 préalablement marqué au cryptate d'europium. On distribue également deux puits dans lesquels les 50 µl de compétiteurs sont remplacés par 50 µl de tampon de façon à constituer des blancs (témoins négatifs). On incube 2h à 4°C et effectue une mesure de fluorescence en temps résolu (td = 50 µs, tg = 400 µs) à 620 nm et 665 nm sur un appareil Rubystar® (BMG Labtech). On calcule les valeurs de ΔF en se servant des valeurs des blancs comme référence. Les pourcentages d'inhibition obtenus avec les différents compétiteurs sont ensuite calculés avec les valeurs de delta F en prenant comme valeur 100% le signal obtenu en présence d'un excès du compétiteur IP1. Le graphe de la figure 12 montre la forte spécificité de l'anticorps anti-IP1 utilisé. En effet, seule l'utilisation de l'IP1 comme compétiteur permet de mesurer une inhibition du signal.

Le conjugué selon l'exemple 13 peut être utilisé de la même manière que le conjugué IP1-CY5 dans un test HTRF.

### Exemple 19: Synthèse des dérivés 4-O-(5-Aminopenlylcarbamoyl-D-myo-inositol-1-phosphate (composé 18D) ou 5-O-(5-Aminopentylcarbamoyl-D-myo-inositol-1-phosphate (composé 19D)

Le *myo*-Inositol commercial (composé 1) est traité par du 1,1-diethoxycyclohexane suivant le protocole de Dreef et al. (Tetrahedron , 1991, 47(26), 4709-4722) en purifiant directement le mélange réactionnel et sans faire le traitement acide supplémentaire (visant à augmenter la proportion de l'isomère 1,2:4,5-di-O-cyclohexylidène-*myo-*Inositol) on obtient ainsi 28% d'isomère 1,2:4,5-di-O-cyclohexylidène-*myo*-Inositol, 47% d'isomère 2,3:4,5-di-O-cyclohexylidène-*myo-*Inositol (34) et 18% d'isomère 1,2:5,6-di-O-cyclohexylidène-*myo*-Inositol.

1-O-butyryl-2,3:4,5-di-O-cyclohexylidène-*myo*-Inositol (36) et 6-O-butyryl-2,3:4,5-di-O-cyclohexylidène-*myo*-Inositol (37) :

Le composé 34 (37 g, 11 mmoles) est mis en suspension dans le toluène (250 ml) puis l'oxyde de dibutylétain (30 g, 12 mmoles) est ajouté. Le mélange est porté à reflux au Dean Stark pendant 3 heures. La solution est ensuite concentrée sous vide. Le résidu est alors repris dans 200 mL de DMF anhydre. Cette solution est refroidie à -40°C, le fluorure de césium (34g, 22 mmoles) et le chlorure de butyryle (12 mL, 11 ,6 mmoles) sont ajoutés. Le milieu réactionnel est agité à température ambiante pendant 12 heures. Le mélange réactionnel est dilué avec 600 mL de dichlorométhane et lavé avec 400 mL d'eau. La phase organique est séchée sur Na₂SO₄, filtrée puis concentrée. Les composés 36 (27,6 g, 62%) et 37 (3,6 g, 8%) sont obtenus purs par chromatographie sur gel de silice (Hexane /Acétate d'éthyle, 4/1).

Rf = 0,33 (37) et 0,21 (36) (Hexane /Acétate d'éthyle, 4 /1). 36 : RMN-¹H (CDCl₃, 400 MHz, δ (ppm)) : 4,98 (t, 1H, H₁, J₁₋₂ = J₁₋₆ = 4,6 Hz); 4,59 (dd, 1H, H₂, J₂₋₃ = 6,1 Hz); 4,36 (dd, 1H, H₃, J₃₋₄ = 8,1 Hz); 4,09 (dd, 1H, H₆, J₅₋₆ = 9,0 Hz); 3,87 (dd, 1H, H₄, J₄₋₅ = 10,5 Hz); 3,47 (dd, 1H, H₅); 2,44-2,32 (m, 4H, 2*CH₂); 1,78-1,33 (m, 20H, 10*CH₂ de cyclohéxylidène); 0,99 (t, 3H, CH₃, J = 7,4 Hz).

37: RMN-¹H (CDCl₃, 400 MHz, δ (ppm)) : 5,21 (dd, 1H, H₆, J₁₋₆ = 2,9, J₅₋₆ = 8,7 Hz); 4,46 (dd, 1H, H₂, J₁₋₂ = 3,9, J₂₋₃ = 7,1 Hz); 4,39 (dd, 1H, H₃, J₃₋₄ = 7,7 Hz); 4,20 (dd, 1H, H₄, J₄₋₅ = 10,6 Hz); 3,89 (dd, 1H, H₁); 3,61 (dd, 1H, H₅); 2,40-2,32 (m, 4H, 2*CH₂); 1,79-1,24 (m, 20H, 10*CH₂ de cyclohéxylidène); 0,99 (t, 3H, CH₃).

### 1-O-butyryl-2,3:4,5-di-O-cyclohexylidène-D-myo-Inositol (36D)

Le 1-butyryl-2,3:4,5-di-O-cyclohexylidène-*myo*-Inositol 36 (18 g, 43,9 mmoles) est mis en solution dans un mélange hexane/éther (200 mL 10/1) et tampon phosphate 0,1M (pH∼7, 90 mL). On ajoute la lipase pancréatique porcine (PLL) (54g) et on laisse le milieu réactionnel sous agitation à 37°C pendant 1 semaine. Le milieu est laissé décanter. Le surnageant est prélevé et le reste est centrifugé. Le surnageant est séparé du culot. Les surnageants sont rassemblés, séchés sur MgSO₄, filtrés puis concentrés. Le diol 34L (4,7 g, 65%) et l'ester 36D (8,9 g, 98%) sont séparés et obtenus purs par chromatographie sur gel de silice (colonne ouverte, Hexane /Acétate d'éthyle, 4/1→1/1).
Rf = 0,73 (36D) et 0,35 (34L) (Hexane /Acétate d'éthyle, 1/1).
[α]D = -8,3 (c=1,06, CHCl3) (36D).
[α]D = -16,47 (c=0,61, CHCl3) (34L).

### 2,3:4,5-di-O-cyclohexylidène-D-myo-Inositol (34D)

Le composé 36D (8,9 g, 21,7 mmoles) est mis en solution dans du méthanol (70 ml). 45 mL d'une solution de soude 5M sont ajoutés goutte à goutte. Le mélange réactionnel est agité à température ambiante pendant 18 heures. Le méthanol est évaporé sous pression réduite, le résidu est dilué avec 200 mL de dichlorométhane. La phase aqueuse est extraite avec 200 mL d'acétate d'éthyle. Les phases organiques sont rassemblées et concentrées. Le composé 34D (6,8 g, 92%) est obtenu pur par chromatographie sur gel de silice (colonne ouverte, dépôt solide, H/A, 1/1). Rendement = 92%. Rf = 0,35 (Hexane/Acétate d'éthyle, 1/1).

### 6-O-benryl-2,3:4,5-di-O-cyclohexylidène-D-myo-Inositol (37D)

Le composé 34D (1 g, 2,9 mmoles) est mis en suspension dans le toluène (28 ml) puis l'oxyde de dibutylétain (0,8 g, 3,2 mmoles) est ajouté. Le mélange est porté à reflux au Dean Stark pendant 3 heures. La solution est ensuite concentrée sous vide. Le résidu est alors repris dans 16 mL de DMF anhydre. Cette solution est refroidie à -20°C, le fluorure de césium (0,9 g, 5,8 mmoles) et le bromure de benzyle (0,25 mL, 2,9 mmoles) sont ajoutés. Le milieu réactionnel est agité à température ambiante pendant 12 heures. Le mélange réactionnel est dilué avec 60 mL de dichlorométhane et lavé avec 30 mL d'eau. La phase organique est séchée sur sulfate de magnésium, filtrée puis concentrée sous vide poussé. Le composé 37D (0,96 g, 76%) est obtenu pur par chromatographie sur gel de silice (colonne ouverte, Hexane /Acétate d'éthyle , 1/1). Rendement = 76%.

### 6-O-benzyl-2,3:4,5-di-O-cyclohexylidène-5-O-(o-xylylenedioxyphosphoryl)-D-myo Inositol (38D)

Le composé 37D (0,83 g, 1,93 mmoles) est dissout dans 45 mL de dichlorométhane anhydre. L' o-xylylene-N,N'-diisopropylphosphoramidite (1,03 g, 3,86 mmoles) et le 1-H-tetrazole (0,338 g, 4,83 mmoles) sont ajoutés. Le milieu est laissé sous agitation à température ambiante sous argon pendant 1 heure. Le milieu est alors refroidi à 0°C et 0,36 mL de terbutylhydroperoxyde sont ajoutés goutte à goutte. Le mélange réactionnel est laissé revenir à température ambiante, puis lavé avec 20 mL d'eau. La phase organique est séchée sur sulfate de magnésium, filtrée et concentrée. Le produit 38D (980 mg) est obtenu pur par chromatographie sur gel de silice (colonne ouverte, Hexane /Acétate d'éthyle, 7/3→1/1).
Rendement = 83%.
Rf = 0,45 (Hexane /Acétate d'éthyle, 1/1).
Point de fusion : 59°C.
RMN-³¹P (CDCl₃, 161,98 MHz, δ (ppm)) : -1,48
RMN-¹³C (CDCl₃, 100,62 MHz, δ (ppm)) : 138,2 + 135,7 (Cipso); 129,6-128,1 (Caro); 113,7 + 112,4 (Cipso); 79,6 (C₆); 78,6 (C₅); 77,9 (C₁); 77,6 (C₄); 76,5 (C₃); 74,4 (C₂, J_{C-P} = 5,1 Hz); 72,4 (CH₂Ph); 68,9 (CH₂Ph, J_{C-P} = 3,7 Hz); 37,0 + 36,9 + 36,7 + 34,6 + 25,5 + 25,4 + 24,3 + 24,2 + 24,1 + 23,9 (C_{cyclo}).

### 6-O-benzyl-2,3-O-cyclohexylidène-5-O-(o-xylylenedioxyphosphoryl)-D-myo-Inositol (39D)

Le produit 38D (0,98 g, 1,6 mmoles) est dissout dans 20 mL d'une solution 0,1M d'éthylène glycol dans le dichlorométhane. L'acide para-toluènesulfonique (0,13 g) est ajouté. Le milieu réactionnel est neutralisé au bout de 2 heures par ajout de triéthylamine et concentré sous pression réduite. Le résidu obtenu est purifié par chromatographie sur colonne de gel de silice (colonne ouverte, dépôt dans CH₂Cl₂/MeOH, 95/5, élution CH₂Cl₂/MeOH, 99/1→ 95/5) pour conduire aux composés 39D (0,357g, 42%) obtenu sous la forme d'une gomme. Rf = 0,6 (Acétate d'éthyle pur).

RMN-¹H(Acétone D₆, 400 MHz, δ (ppm)) : 7,50-7,17 (m, 9H, Haro); 5,46 (dd, 1H, CH₂OP, J_{AB} = 13,5, J_{H-P} = 16,5 Hz); 5,42 (dd, 1H, CH₂OP, J_{AB} = 13,5, J_{H-P} = 16,5 Hz); 5,14-4,90 (m, 3H, 2*H de CH₂OP + H de CH₂Ph); 4,82 (d, 1H, CH₂Ph, J = 11,1 Hz); 4,80 (ddd, 1H, H₁, J₁₋₂ = 4,2, J₁₋₆ = 8,4, J_{1-P} = 7,8 Hz); 4,66 (dd, 1H, H₂, J₂₋₃ = 5,5 Hz); 4,20 (dd, 1H, H₃, J₃₋₄ = 7,0 Hz); 3,91 (dd, 1H, H₆, J₅₋₆ = J₁₋₆ = 8,4 Hz); 3,78 (dd, 1H, H₄, J₄₋₅ = 9,2 Hz); 3,58 (dd, 1H, H₅); 1,81-1,36 (m, 10H, 5*CH₂ de cyclohexylidène).
RMN-³¹P (Acetone D₆, 161,98 MHz, δ (ppm)) : -4,11.

### 6-O-benzyl-4,5-carbonate-2,3-O-cyclohexylidène-5-O-(o-xylylenedioxyphosphoryl)-D-myo-Inositol (40D)

Le diol (39D) (0,13 g, 0,24 mmoles) est dissout dans 3 mL de dichlorométhane anhydre. Le 1,1'-carbonyl-diimidazole (120 mg, 0,72 mmoles) est ajouté. Le mélange réactionnel est laissé sous agitation sous argon toute la nuit. La solution est concentrée. Le résidu obtenu est purifié par chromatographie sur colonne de gel de silice (colonne ouverte, Hexane /Acétate d'éthyle, 7/3→100% Acétate d'éthyle) pour conduire au composé 40D sous forme d'une gomme blanche (118 mg, 87%). Rf = 0,63 (, Hexane /Acétate d'éthyle, 3/7). [α]D = -6,1 (c=0,97, CHCl3) (40D). RMN-¹H (CDCl₃, 400 MHz, δ (ppm)) : 7,47-7,22 (m, 9H, Haro); 5,30 (dd, 1H, CH₂OP, J_{AB} = 13,6, J_{H-P} = 16,6 Hz); 5,25 (dd, 1H, CH₂OP, J_{AB} = 13,6, J_{H-P} = 16,6 Hz); 5,24 (dd, 1H, CH₂OP); 5,10 (dd, 1H, CH₂OP); 4,84 (td, 1H, H₁, J₁₋₂ = 3,0, J₁₋₆ = 2,2, J_{1-P} = 8,8 Hz); 4,79 (d, 1H, CH₂ de benzyle, J_{AB} = 11,8 Hz); 4,71 (d, 1H, CH₂ de benzyle); 4,65-4,52 (m, 3H, H₂ +H₃ + H₄); 4,26 (dd, 1H, H₆, J₅₋₆ = 8,0, J₁₋₆ = 2,2 Hz); 4,15 (m, 1H, H₅); 1,80-1,21 (m, 10H, 5*CH₂ de cyclohéxylidène).
RMN-³¹P (CDCl₃, 161,98 MHz, δ (ppm)) : -1,49
IR : 1812-1840 (C=O) ; 1284 (P=O) ; 1007-1021-1091 (P-O).

4-O-(5-aminopentylcarbamoyl)-6-O-benzyl-2,3-O-cyclohexylidène-1-O-(o-xylylenedioxyphosphoryl)-D-*myo*-Inositol "isomère 4 sous forme protégée" (41D) et 5-O-(5-aminopentylcarbamoyl)-6-O-benryl-2,3-O-cyclohexylidène-1-O-(o-xylylenedioxyphosphoryl)-D-*myo*-Inositol "isomère 5 sous forme protégée" (42D): Le composé 40D (115 mg, 0,21 mmoles) est dissout dans 3 ml de dichlorométhane anhydre puis la 5-benzyloxycarbamidopentylamine (dérivé mono-Boc de la pentylamine comme dans l'exemple 7) (153 mg, 0,65 mmoles) préalablement dissous dans 2 ml de dichlorométhane anhydre est ajouté goutte à goutte. La réaction est laissée évoluer à température ambiante pendant 12 heures. La solution est concentrée. Le résidu purifié par chromatographie sur gel de silice (colonne ouverte, hexane / acétate d'éthyle, 1/4→100% acétate d'éthyle) pour conduire aux composés 41D (78 mg, 40%) et 42D (78 mg, 40%).
41D :RMN-¹H (CDCl₃, 400 MHz, δ (ppm)) : 7,43-7,17 (m, 19H, Haro); 5,36 (dd, 1H, CH₂OP, J_{AB} = 13,6, J_{H-P} = 12,1 Hz); 5,27 (dd, 1H, CH₂OP, J_{AB} = 13,6, J_{H-P} = 16,6 Hz); 5,18-4,80 (m, 8H, 2*H de CH₂OP + 4*H de CH₂Ph + H₄ + H₁); 4,71-4,66 (m, 1H, H₂); 4,15 (dd, 1H, H₃, J₂₋₃ = J₃₋₄ = 6,8 Hz); 3,97 (dd, 1H, H₆, J₅₋₆ = 8,1 Hz); 3,60 (dd, 1H, H₅, J₄₋₅ = 8,1 Hz); 3,31-3,11 (m, 4H, 2*CH₂N); 1,92-1,31 (m, 16H, 3* CH₂ du bras + 5*CH₂ de cyclohexylidène).
RMN-³¹P (CDCl₃, 161,98 MHz, δ (ppm)) : -1,76.

### 4-O-(5-aminopentylcarbamoyl)-D-myo-Inositol-1-phosphate (18D)

Une solution du composé 41D (75 mg, 0,094 mmoles) dans 16 mL d'un mélange méthanol-chloroforme (v/v) est agitée sous atmosphère d'hydrogène en présence de palladium sur charbon 10% (80 mg) à température ambiante pendant 68 heures sous 10 bars. Après filtration sur célite et lavage à l'eau le filtrat est évaporé puis repris par l'eau et lyophilisé pour donner le composé 18D (18 mg, 53%). RMN-¹H (D₂O, 400 MHz, δ (ppm)) : 4,81 (dd, 1H, H₄); 4,20 (bs, 1H, H₂); 3,87 (dd, 1H, H₁); 3,78 (dd, 1H, H₆); 3,68 (dd, 1H, H₃); 3,43 (dd, 1H, H₅); 3,20-3,05 (m, 2H, 2*H de CH₂-N); 2,91 (t, 2H, 2*H de CH₂-N, J = 7,4 Hz); 1,63 (q, 2H, 2*H de CH₂-N, J = 7,5 Hz); 1,50 (q, 2H, 2*H de CH₂-N, J = 6,9 Hz); 1,37 (m, 2H, 2*H de CH₂-N).

RMN-³¹P (D₂O, 161,98 MHz, δ (ppm)) : 3,98
SM-ESI (-) : *m*/*z* 387 [M-H]⁻.

### 5-O-(5-aminopentylcarbamoyl)-D-myo-Inositol-1-phosphate (19D)

Une solution du composé 13D (58 mg, 73 µmol) dans 16 ml d'un mélange méthanol/chloroforme (v/v), en présence de palladium sur charbon 10% (60 mg) est agitée température ambiante pendant 68 heures sous 10 bars. Après filtration sur célite et lavage à l'eau, le filtrat est évaporé puis repris par de l'eau et lyophilisé pour donner le composé 16D .

RMN-¹H (D₂O, 400 MHz, δ (ppm)) : 4,50 (dd, 1H, H₅, J₄₋₅ = 9,8, J₅₋₆ = 9,6 Hz); 4,17 (bs, 1H, H₂); 3,91 (dd, 1H, H₁, J₁₋₆ = 9,6 Hz); 3,78 (dd, 1H, H₆); 3,67 (dd, 1H, H₄, J₃₋₄ = 10,0 Hz); 3,57 (dd, 1H, H₃, J₂₋₃ = 2,1 Hz); 3,20-3,05 (m, 2H, 2*H de CH₂-N); 2,91 (t, 2H, 2*H de CH₂-N, J = 7,4 Hz); 1,59 (q, 2H, 2*H de CH₂-N, J = 7,7 Hz); 1,47 (q, 2H, 2*H de CH₂-N, J = 6,9 Hz); 1,32 (m, 2H, 2*H de CH₂-N).
RMN-³¹P (D₂O, 161,98 MHz, δ (ppm)) : 3,75
SM-ESI (-) *: m*/*z* 387 [M-H]⁻.

### 5-O-(5-aminopentylcarbamoyl)-D-myo-Inositol-1-phosphate (19 D)

Une solution du composé 42D (58 mg, 73 µmol) dans 16 ml d'un mélange méthanol/chloroforme (v/v), en présence de palladium sur charbon 10% (60 mg) est agitée température ambiante pendant 68 heures sous 10 bars. Après filtration sur célite et lavage par du méethanol puis de l'eau le filtrat est évaporé puis repris par de l'eau et lyophilisé pour donner le composé 19D.
RMN-¹H (D₂O, 400 MHz, δ (ppm)) : 4,50 (dd, 1H, H₅, J₄₋₅ = 9,8, J₅₋₆ = 9,6 Hz); 4,17 (bs, 1H, H₂); 3,91 (dd, 1H, H₁, J₁₋₆ = 9,6 Hz); 3,78 (dd, 1H, H₆); 3,67 (dd, 1H, H₄, J₃₋₄ = 10,0 Hz); 3,57 (dd, 1H, H₃, J₂₋₃ = 2,1 Hz); 3,20-3,05 (m, 2H, 2*H de CH₂-N); 2,91 (t, 2H, 2*H de CH₂-N, J = 7,4 Hz); 1,59 (q, 2H, 2*H de CH₂-N, J = 7,7 Hz); 1,47 (q, 2H, 2*H de CH₂-N, J = 6,9 Hz); 1,32 (m, 2H, 2*H de CH₂-N).
RMN-³¹P (D₂O, 161,98 MHz, δ (ppm)) : 3,75
SM-ESI (-) *: m*/*z* 387 [M-H]⁻.

### Exemple 20: Synthèse des dérivés 4-O-(5-biotinamidopentylcarbamoyl)-D-myo-inositol-1-phosphate (composé 43 D)

A une solution de 1mg (2,58 µmol) de 4-O-(5-aminopentylcarbamoyl)-1-phosphate-D-*myo*-inositol (composé 18 D préparé selon l'exemple 19) dans 400 µl de tampon HEPES pH 8, on ajoute 1,75 mg (5,16 µmol) de biotine-NHS ester (Aldrich) dans 50 µl de DMF. il se forme un précipité qui se redissout après ajout de 450 µl d'acétonitrile, on laisse sous agitation 30 min à température ambiante. Par HPLC on observe la disparition du pic du produit de départ et l'apparition d'un nouveau composé présentant un temps de rétention de 29,2 min [Chromolith Merck, 1.5 ml / mn, A : eau à 0,1 % de TFA, B : acétonitrile, gradient 0 à 5 mn 0% B, 15 mn 2% de B, 30 min 15 % de B, 40 min 30 % de B; détection à 190 nm]. On purifie le composé par RP-HPLC après évaporation et séchage sous vide on obtient 1,2 mg (63%) du composé 43D.

### Exemple 21: Synthèse des dérivés 5-O-(5-biotinamidopenlylcarbamoyl)-D-myo-inositol-1-phosphate (composé 44 D)

Une solution de 5-O-(5-aminopentylcarbamoyl)-1-phosphate-D*-myo-*inositol (composé 19 D préparé selon l'exemple 19) est traité par de la biotine-NHS ester, puis le mélange réactionnel est purifié par RP-HPLC comme décrit dans l'exemple 20 on obtient ainsi le composé 44D.

### Exemple 22 : Réparation d'un immunogène par couplage entre BSA et 4-O-(5-aminopentylcarbamoyl)-D-myo-inositol-1-phosphate.

En suivant le protocole de l'exemple 14, on prépare un conjugué entre BSA (sérum albumine bovine) et l'analogue 4-O-(5-aminopentylcarbamoyl)-D-*myo*-inositol-1-phosphate 18D (solution à 1mg/ml dans du PBS) préparé selon l'exemple 19. Le conjugué est ensuite aliquoté et conservé à -20°C.

### Exemple 23 : Préparation d'un immunogène par couplage entre BSA et 5-O-(5-aminopentylcarbamoyl)-D-myo-inositol-1-phosphate.

En suivant le protocole de l'exemple 14, on prépare un conjugué entre BSA (sérum albumine bovine) et l'analogue 5-O-(5-aminopentylcarbamoyl)-D-*myo*-inositol-1-phosphate 19D (solution à 1mg/ml dans du PBS) préparé selon l'exemple 19. Le conjugué est ensuite aliquoté et conservé à -20°C.

### Exemple 24 : dosage IP1 après stimulation de cellules CHO exprimant le récepteurs M1 par de l'acetylcholine (agoniste du récepteur M1).

Dans une plaque de culture opaque 96 puits, on distribue 80 000 cellules CHO exprimant le récepteur muscarinique M1, sous 200µL de milieu F12 complémenté par 10% SVF, penicilline-streptomycine et acides aminés non-essentiels ; on incube une nuit à 37°C, 5% CO2. On élimine le milieu de culture, et on distribue 50µL de solutions d'acétylcholine (agoniste LM1, 1nM à 100µM) diluée dans du tampon KREBS (10mM HEPES pH 7.4, 150mM NaCl, 4.2mM KCI, 0.5mM MgCl₂, 1mM CaCl₂, 1g/L glucose, 30mM LiCl). On distribue également six puits dans lesquels on remplace l'acetylcholine par du tampon, afin d'une part, de déterminer le signal négatif (3 puits) correspondant au bruit de fond, et d'autre part de déterminer également le signal « basal » de l'essai (3 puits) c'est à dire le signal de TR-FRET en l'absence de stimulation. On incube 30 minutes à 37°C, 5% CO2. On distribue ensuite 25µL d'une solution à 4nM d'anticorps anti-IP1 préalablement marqué au cryptate d'europium (pour avoir 1nM final dans l'essai), puis 25µL d'une solution à 12nM d'IP1 marqué par le fluorophore d2 (ci-après IP1-d2), pour avoir 3nM en final dans l'essai. Ces deux réactifs sont dilués en tampon HEPES 50mM pH 7, 0.2% BSA, 0.8M KF et 1% triton X100. Dans les puits servant à déterminer le signal négatif, l'IP1-d2 est remplacé par du tampon. On incube 1h à température ambiante et on effectue une mesure de fluorescence en temps résolu (td = 50µs, tg = 400µs) à 620nm et 665nm (respectivement E620 et E665) sur un appareil Rubystar® (BMG Labtech). A partir des valeurs d'intensité de fluorescence E620 et E665 on calcule le rapport d'intensité E665/E620 dénommé ratio que l'on multiplie par 10 000 pour plus de commodité. Les valeurs de delta F sont calculées par rapport au ratio mesuré dans un puit sans IP1-d2, correspondant au bruit de fond (signal basal, cf. G. Mathis, Clin. Chem. 39 (1993) 1953 et la demande WO92/13264). Les pourcentages d'inhibition obtenus en fonction de la stimulation du récepteur sont calculés à partir des delta F avec le delta F mesuré dans le puits « signal basal » sans drogue, équivalent à 0% d'inhibition.

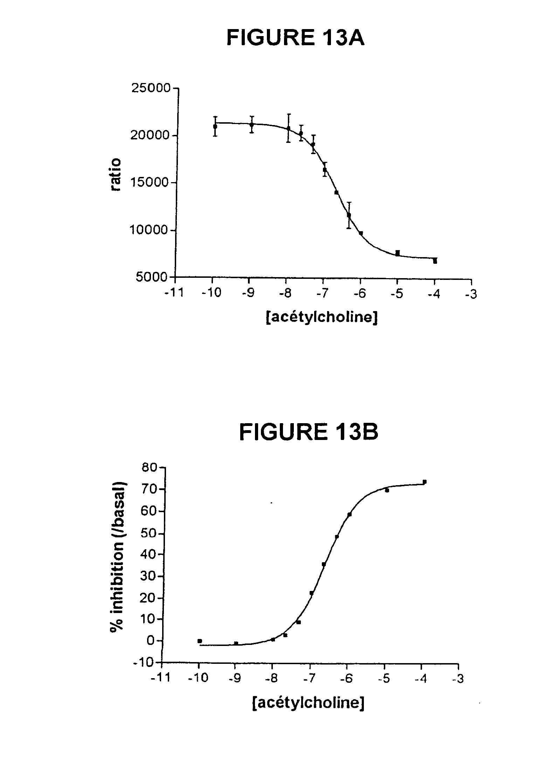

En l'absence d'acétylcholine, le signal mesuré résultant du transfert d'énergie entre anticorps anti-IP1 marqué au cryptate d'europium et l'IP1-d2 est élevé. Lorsque le récepteur M1 est stimulé par l'acétylcholine, de l'IP1 est produit dans la cellule et le signal va décroître en fonction de la concentration en acétylcholine. (Figure 13A) Ce résultat peut également être exprimé en calculant le pourcentage d'inhibition du signal basal (mesuré en l'absence d'acétylcholine) induit par l'ajout de concentration croissante d'acétylcholine. (Figure 13B)

### Exemple 25 : dosage IP1 après stimulation de cellules CHO exprimant le récepteurs M1 par de l'acetylcholine, en présence d'atropine (antagoniste du récepteur M1).

Dans une plaque de culture opaque 96 puits, on distribue 80 000 cellules CHO exprimant le récepteur muscarinique M1, sous 200µL de milieu F12 complémenté par 10% SVF, penicilline-streptomycine et acides aminés non-essentiels ; on incube une nuit à 37°C, 5% CO2. On élimine le milieu de culture, et on distribue 40µL de solutions d'atropine (0.125nM à 12.5µM) diluées dans du tampon KREBS (10mM HEPES pH 7.4, 150mM NaCl, 4.2mM KCI, 0.5mM MgCl2, 1mM CaCl2, 1g/L glucose, 30mM LiCl), on incube 15min à 37°C, 5% CO2. Puis on distribue 10µL de solution d'acétylcholine à 3µM dans le même tampon KREBS. On distribue également six puits dans lesquels on remplace l'atropine et l'acetylcholine par du tampon, afin d'une part, de déterminer le signal négatif (3 puits) correspondant au bruit de fond, et d'autre part de déterminer également le signal « basal » de l'essai (3 puits) c'est à dire le signal de TR-FRET en l'absence de stimulation.. On incube 30 minutes à 37°C, 5% CO₂. On distribue ensuite 25µL d'une solution à 4nM d'anticorps anti-IP1 préalablement marqué au cryptate d'europium (pour avoir 1nM final dans l'essai), puis 25µL d'une solution à 12nM d'IP1-d2 (pour avoir 3nM en final dans l'essai). Ces deux réactifs sont dilués en tampon HEPES 50mM pH 7, 0.2% BSA, 0.8M KF et 1% triton X100. Dans les puits servant à déterminer le signal négatif, l'IP1-d2 est remplacé par du tampon. On incube 1h à température ambiante et on effectue une mesure de fluorescence en temps résolu (td = 50µs, tg = 400µs) à 620nm et 665nm (respectivement E620 et E665) sur un appareil Rubystar® (BMG Labtech). A partir des valeurs d'intensité de fluorescence E620 et E665 on calcule le rapport d'intensité E665/E620 dénommé ratio que l'on multiplie par 10 000 pour plus de commodité. Les valeurs de delta F sont calculées par rapport au ratio mesuré dans un puits sans IP1-d2 (signal négatif, cf G. Mathis, Clin. Chem. 39 (1993) 1953 et la demande W092/13264). Les pourcentages d'inhibition obtenus en fonction de la stimulation du récepteur sont calculés à partir des delta F avec le delta F du point basal sans drogue équivalent à 0% d'inhibition.

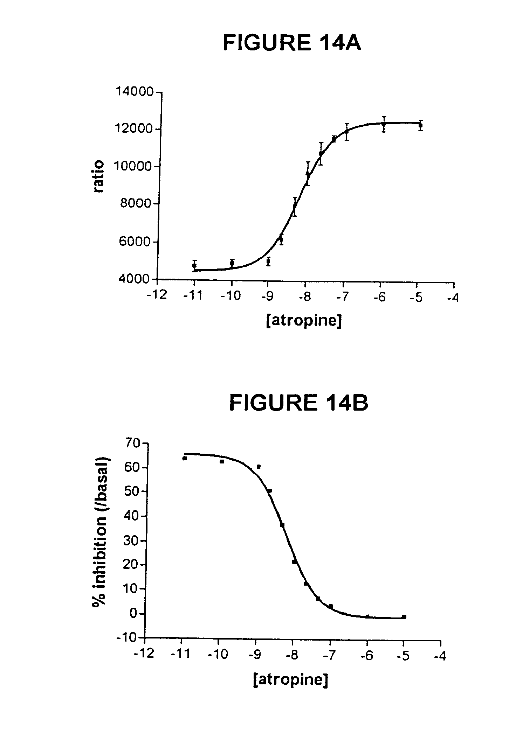

En présence de concentration croissante d'antagoniste M1 (atropine), l'activation par l'agoniste M1 (acetylcholine) va être inhibée. La cellule va donc produite moins d'IP1 et le signal résultant du transfert d'energie entre l'anticorps anti-IP1 marqué au cryptate d'europium et l'IP1-d2 va augmenter. (figure 14A).

Ce résultat peut également être exprimé en calculant l'évolution de l'inhibition du signal par l'acetylcholine en présence de concentrations croissantes d'atropine. (figure 14B)

### Exemple 26 : dosage IP1 sur cellules HEK-293 exprimant de manière transitoire le récepteur mGlu1, effet d'un modulateur allostérique positif (PAM).

Dans une plaque de culture opaque 96 puits, on distribue 100 000 cellules HEK-293 préalablement transfectées par électroporation pour exprimer le récepteur mGluR1, sous 100µL de milieu DMEM complémenté par 10% SVF, pénicilline -streptomycine et acides aminés non essentiels. On incube 3h à 37°C, 5% CO₂, saturé en humidité, avant de changer le milieu pour 100µL de DMEM contenant du glutamax (glutamine non dégradable en glutamate) et dépourvu de sérum. On incube une nuit à 37°C dans un incubateur à 5% CO₂, saturé en humidité. On élimine le milieu de culture par aspiration, et on distribue 30µL de solutions de modulateur allostérique positif (PAM) Ro 01-6128 (100nM à 3mM) dilué dans du tampon KREBS (10mM HEPES pH7.4, 150mM NaCl, 4.2mM KCI, 0.5mM MgCl₂, 1mM CaCL₂, 1g/L glucose, 50mM LiCl, 1% DMSO). On distribue également six puits dans lesquels on remplace le PAM par du tampon, afin d'une part, de déterminer le signal négatif (3 puits) correspondant au bruit de fond, et d'autre part de déterminer également le signal « basal » de l'essai (3 puits) c'est à dire le signal de TR-FRET en l'absence de stimulation. On incube 30 minutes à 37°C, 5% CO₂. On distribue ensuite 15µL d'une solution à 4nM d'anticorps anti-IP1 préalablement marqué au cryptate d'europium (pour avoir 1nM final dans l'essai), puis 15µL d'une solution à 12nM d'IP1 marqué par le fluorophore d2 (ci-après IP1-d2), pour avoir 3nM en final dans l'essai. Ces deux réactifs sont dilués en tampon HEPES 50mM pH 7, 0.2% BSA, 0.8M KF et 1% triton X100. Dans les puits servant à déterminer le signal négatif, l'IP1-d2 est remplacé par du tampon. On incube 2h à 4°C et on effectue une mesure de fluorescence en temps résolu (td = 50µs, tg = 400µs) à 620nm et 665nm (respectivement E620et E665) sur un appareil Rubystar® (BMG Labtech). A partir des valeurs d'intensité de fluorescence E620 et E665 on calcule le rapport d'intensité E665/E620 dénommé ratio que l'on multiplie par 10 000 pour plus de commodité. Les valeurs de delta F sont calculées par rapport au ratio mesuré dans un puits sans IP1-d2 (signal négatif, cf G. Mathis, Clin. Chem. 39 (1993) 1953 et la demande W092/13264). Les pourcentages d'inhibition obtenus en fonction de la stimulation du récepteur sont calculés à partir des delta F avec le delta F mesuré dans le puits « signal basal » sans drogue, équivalent à 0% d'inhibition.

En l'absence de PAM, le signal mesuré résultant du transfert d'énergie entre anticorps anti-IP1 marqué au cryptate d'europium et l'IP1-d2 est élevé. Lorsque le récepteur mGlu1 est activé par le PAM, de l'IP1 est produit dans la cellule et le signal va décroître en fonction de la concentration en PAM. Ce signal peut être soit le rapport d'intensité E665/E620, soit le delta F.

Ce résultat peut également être exprimé en calculant le pourcentage d'inhibition du signal basal (mesuré en l'absence de PAM) induit par l'ajout de concentration croissante en PAM.

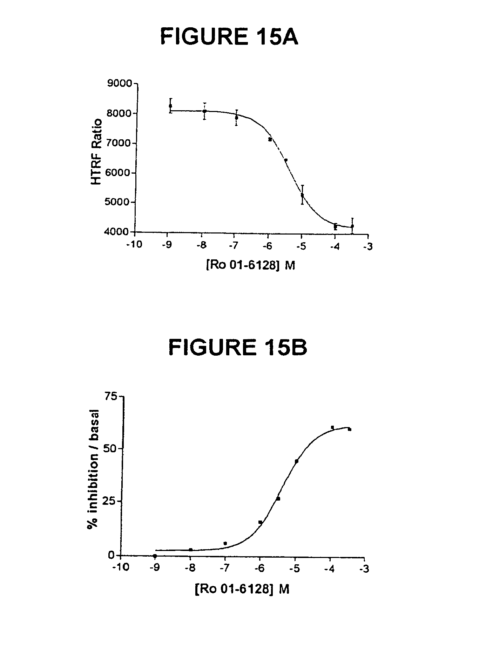

Les figures 15A et 15B donnent la modulation du signal en fonction de la concentration en PAM exprimée soit en rapport d'intensité soit en delta F.

### Exemple 27: dosage de l'IP1 sur des cellules HEK-293 exprimant le récepteur mGlu5 (transfection transitoire), effet d'un agoniste inverse sur le mGluR5.

Dans une plaque de culture opaque 96 puits, on distribue 100 000 cellules HEK-293 préalablement transfectées par électroporation pour exprimer le récepteur mGluR5, sous 100µL de milieu DMEM complémenté par 10% SVF, pénicilline -streptomycine et acides aminés non essentiels.

On incube 3h à 37°C, 5% CO₂, saturé en humidité, avant de changer le milieu pour 100µL de DMEM contenant du glutamax (glutamine non dégradable en glutamate) et dépourvu de sérum.

On incube une nuit à 37°C dans un incubateur à 5% CO₂, saturé en humidité. On élimine le milieu de culture par aspiration, et on distribue 30µl de solutions d'agoniste inverse (de 5nM à 100µM), le 2-methyl-6-(phenylethynyl)pyridine (MPEP), dilué dans du tampon KREBS (10mM HEPES pH7.4, 150mM NaCl, 4.2mM KCI, 0.5mM MgCl2, 1mM CaCL₂, 1g/L glucose, 50mM LiCl, 1% DMSO). On distribue également six puits dans lesquels on remplace le MPEP par du tampon, afin d'une part, de déterminer le signal négatif (3puits) correspondant au bruit de fond, et d'autre part de déterminer également le signal « basal » de l'essai (3puits) c'est à dire le signal de TR-FRET en l'absence de stimulation.

On incube 1 heure à 37°C, 5% CO2. On distribue ensuite 15µL d'une solution à 4nM d'anticorps anti-IP1 préalablement marqué au cryptate d'europium (pour avoir 1nM final dans l'essai), puis 15µL d'une solution à 12nM d'IP1 marqué par le fluorophore d2 (ci-après IP1-d2), pour avoir 3nM en final dans l'essai. Ces deux réactifs sont dilués en tampon HEPES 50mM pH 7, 0.2% BSA, 0.8M KF et 1% triton X100. Dans les puits servant à déterminer le signal négatif, l'IP1-d2 est remplacé par du tampon. On incube 1h à 4°C et on effectue une mesure de fluorescence en temps résolu (td = 50µs, tg = 400µs) à 620nm et 665nm (respectivement E620et E665) sur un appareil Rubystar® (BMG Labtech). A partir des valeursd'intensité de fluorescence E620et E665 on calcule le rapport d'intensité E665/E620 dénommé ratio que l'on multiplie par 10 000 pour plus de commodité.

Les valeurs de delta F sont calculées par rapport au ratio mesuré dans un puits sans IP1-d2 (signal négatif, Cf. G. Mathis, Clin. Chem. 39 (1993) 1953 et la demande W092/13264). Les pourcentages d'inhibition obtenus en fonction de la stimulation du récepteur sont calculés à partir des delta F avec le delta F mesuré dans le puits « signal basal » sans drogue, équivalent à 0% d'inhibition.

En l'absence d'agoniste inverse, le signal mesuré résultant du transfert d'énergie entre anticorps anti-IP1 marqué au cryptate d'europium et l'IP1-d2 est relativement faible car le récepteur mGluR5 possède une activité constitutive induisant une production modérée d'IP1 intracellulaire qui inhibe le signal de TR-FRET. Lorsque l'activité constitutive du récepteur mGluR5 est bloquée par l'ajout du MPEP, cela va conduire à une baisse de la production d'IP1 intracellulaire. Dès lors, le signal de l'essai va augmenter en fonction de la concentration en agoniste inverse. Ce signal peut être soit le rapport d'intensité E665/E620, soit le delta F.

Ce résultat peut également être exprimé en calculant le pourcentage d'inhibition du signal basal (mesuré en l'absence de MPEP) induit par l'ajout de concentration croissante en MPEP.

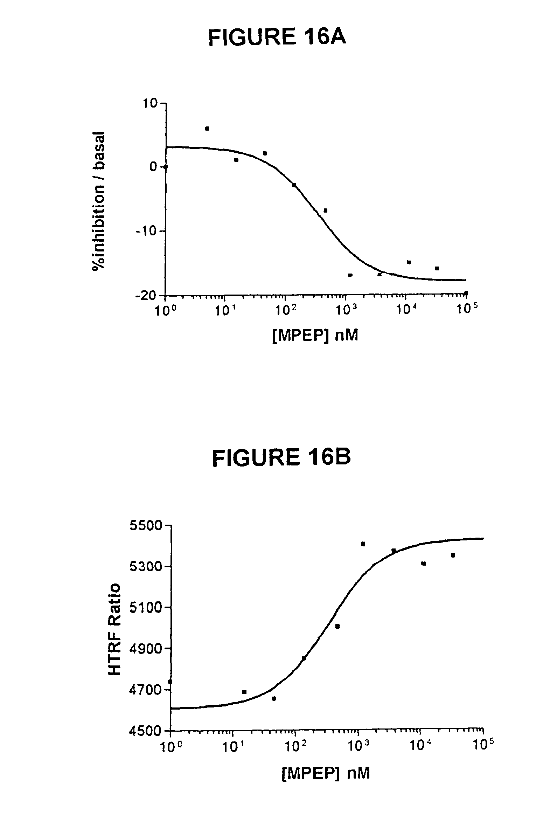

Les figures 16A et 16B donnent la modulation du signal en fonction de la concentration en MPEP exprimée soit en rapport d'intensité soit en delta F.

## Revendications

1. Analogue fonctionnel de l'IP1 de formule (I) : 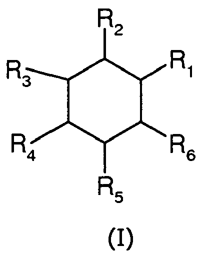 dans laquelle :
les substituants R₁, R₂, R₃, R₄, R₅, R₆ sont choisis parmi : -OH, -OPO₃2⁻, -OPO(OH)₂, -OPO(OH)O⁻, -(OCONH)q-L-G ou -(OCONH)_{q}-L-M, à la condition que l'un des substituants R₁ à R₆ soit un groupe -OPO₃⁻², -OPO(OH)₂ ou -OPO(OH)O⁻ et un des autres substituants R₁ à R₆ soit l'un des groupes -(OCONH)q-L-G ou -(OCONH)q-L-M, les autres substituants R₁ à R₆ étant des groupes -OH ;
où
q est égal à 1,
L est un groupe de liaison,
G est un groupe réactionnel,
M est une substance ou molécule conjuguée choisie parmi le groupe suivant : un traceur, un immunogène, un support solide, un membre d'un couple de partenaires de liaison choisi parmi les membres des couples suivants : avidine ou streptavidine/biotine, haptène/anticorps, oligonucléotide simple brin/oligonucléotide simple brin complémentaire.

2. Composé selon la revendication 1, de formule (II) : 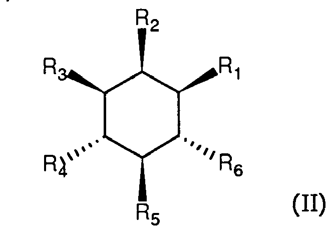 dans laquelle :
l'un des substituants R₁, R₃, R₄ ou R₅ est choisi parmi les groupes -OPO₃²⁻, -OPO(OH)₂ ou -OPO(OH)O⁻,
un des autres substituants R₁-R₆ est choisi parmi les groupes -(OCONH)q-L-G ou -(OCONH)_{q}-L-M,
les autres substituants sont des groupes OH,
où
q est égal à 1,
L est un groupe de liaison,
G est un groupe réactionnel,
M est une substance ou molécule conjuguée choisie parmi le groupe suivant : un traceur, un immunogène, un support solide, un membre d'un couple de partenaires de liaison choisi parmi les membres des couples suivants : avidine ou streptavidine/biotine, haptène/anticorps, oligonucléotide simple brin/oligonucléotide simple brin complémentaire.

3. Composé selon la revendication 1, de formule (III) : 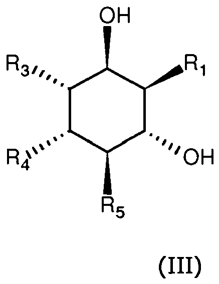 dans laquelle :
l'un des substituants R₁, R₄, R₅ est choisi parmi : -OPO₃²⁻, -OPO(OH)₂ ou -OPO(OH)O⁻,
R₃ est choisi parmi : -(OCONH)q-L-G ou -(OCONH)q-L-M,
les autres substituants R₁, R₄ et R₅ sont des groupes OH,
où
q est égal à 1,
L est un groupe de liaison,
G est un groupe réactionnel,
M est une substance ou molécule conjuguée choisie parmi le groupe suivant : un traceur, un immunogène, un support solide, un membre d'un couple de partenaires de liaison choisi parmi les membres des couples suivants : avidine ou streptavidine/biotine, haptène/anticorps, oligonucléotide simple brin/oligonucléotide simple brin complémentaire.

4. Composé selon la revendication 1, de formule (IV) : 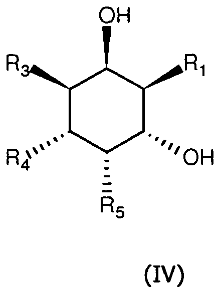 dans laquelle :
l'un des substituants R₁, R₃, R₄ est choisi parmi : -OPO₃²⁻, -OPO(OH)₂ ou -OPO(OH)O⁻,
R₅ est choisi parmi : -(OCONH)q-L-G ou -(OCONH)q-L-M,
les autres substituants R₁, R₃, R₄ sont des groupes OH,
où
q est égal à 1,
L est un groupe de liaison,
G est un groupe réactionnel,
M est une substance ou molécule conjuguée choisie parmi le groupe suivant : un traceur, un immunogène, un support solide, un membre d'un couple de partenaires de liaison choisi parmi les membres des couples suivants : avidine ou streptavidine/biotine, haptène/anticorps, oligonucléotide simple brin/oligonucléotide simple brin complémentaire.

5. Composé selon la revendication 1, de formule (V) : 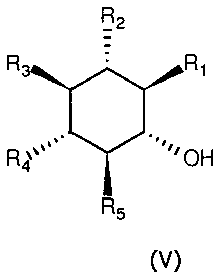 dans laquelle :
l'un des substituants R₁, R₃, R₄, R₅ est choisi parmi : -OPO₃²⁻, -OPO(OH)₂ ou -OPO(OH)O⁻,
R₂ est choisi parmi : -(OCONH)q-L-G ou -(OCONH)q-L-M,
les autres substituants R₁, R₃, R₄, R₅ sont des groupes OH,
où
q est égal à 1,
L est un groupe de liaison,
G est un groupe réactionnel,
M est une substance ou molécule conjuguée choisie parmi le groupe suivant : un traceur, un immunogène, un support solide, un membre d'un couple de partenaires de liaison choisi parmi les membres des couples suivants : avidine ou streptavidine/biotine, haptène/anticorps, oligonucléotide simple brin/oligonucléotide simple brin complémentaire.

6. Composé selon la revendication 1, de formule (VI) : 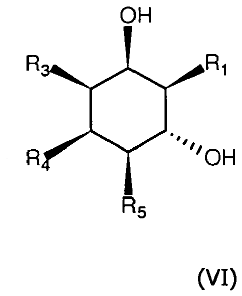 dans laquelle :
l'un des substituants R₁, R₃, R₅ est choisi parmi : -OPO₃²⁻, -OPO(OH)₂ ou -OPO(OH)O⁻,
R₄ est choisi parmi : -(OCONH)q-L-G ou -(OCONH)q-L-M,
les autres substituants R₁, R₃, R₅ sont des groupes OH,
où
q est égal à 1,
L est un groupe de liaison,
G est un groupe réactionnel,
M est une substance ou molécule conjuguée choisie parmi le groupe suivant : un traceur, un immunogène, un support solide, un membre d'un couple de partenaires de liaison choisi parmi les membres des couples suivants : avidine ou streptavidine/biotine, haptène/anticorps, oligonucléotide simple brin/oligonucléotide simple brin complémentaire.

7. Composé selon l'une quelconque des revendications 1 à 6, **caractérisé en ce que** le couple haptène/anticorps est choisi parmi les couples 6HIS / anticorps anti-6HIS, FLAG / anticorps anti-FLAG, DNP / anticorps anti-DNP, GST / anticorps anti-GST, Cmyc / anticorps anti-Cmyc, HA / anticorps anti-HA.

8. Composé selon l'une quelconque des revendications 1 à 7, **caractérisé en ce que** le groupe R₁ est choisi parmi les groupes -OPO₃²⁻, -OPO(OH)₂ ou -OPO(OH)O⁻.

9. Composé selon l'une quelconque des revendications 1 à 7, **caractérisé en ce que** le groupe R₄ est choisi parmi les groupes -OPO₃²-, -OPO(OH)₂ ou -OPO(OH)O⁻.

10. Composé selon l'une quelconque des revendications 1 à 9, **caractérisé en ce que** le groupe de liaison L est une liaison covalente simple ou un bras d'espacement comprenant de 1 à 20 atomes différents de l'hydrogène choisis parmi les atomes de carbone, azote, phosphore, oxygène et soufre, ce groupe de liaison étant linéaire ou ramifié, cyclique ou hétérocyclique, saturé ou insaturé, et constitué d'une combinaison de liaisons choisies parmi : les liaisons carbone-carbone qui peuvent être simples, doubles, triples ou aromatiques; les liaisons carbone-azote; les liaisons azote-azote; les liaisons carbone-oxygène; les liaisons carbone-soufre; les liaisons phosphore-oxygène; les liaison phosphore-azote ; les liaisons éther ; les liaisons ester ; les liaisons thioéther; les liaisons amine ; les liaisons amide ; les liaisons carboxamide; les liaisons sulfonamide; les liaisons urée; les liaisons urethane ; les liaisons hydrazine ; les liaisons carbamoyle.

11. Composé selon la revendication 10, **caractérisé en ce que** le groupe de liaison L comprend de 1 à 20 atomes, différents de l'hydrogène, choisis parmi les atomes de carbone, azote, phosphore, oxygène et soufre et comprend en outre au moins une liaison choisie parmi les liaisons éther, thioéther, carboxamide, sulfonamide, hydrazine, amine, ester et des liaisons aromatiques ou hétéroaromatiques.

12. Composé selon la revendication 10, **caractérisé en ce que** le groupe de liaison L est choisi parmi les chaînes substituées ou non substituées suivantes : polyméthylène, arylène, alkylarylène, arylènealkyle, ou arylthio.

13. Composé selon les revendications 1 à 9, **caractérisé en ce que** le groupe réactionnel G est choisi parmi les groupes dérivés des composés suivants : une acrylamide, une amine activée (par exemple une cadaverine ou une éthylènediamine), un ester activé, un aldéhyde, un halogénure d'alkyle, un anhydride, une aniline, un azide, une aziridine, un acide carboxylique, un diazoalkane, une haloacétamide, une halotriazine, telle que monochlorotriazine, la dichlorotriazine, une hydrazine (y compris les hydrazides), un imido ester, un isocyanate, un isothiocyanate, un maléimide, un halogénure de sulfonyle, ou thiol, une cétone, une amine, un halogénure d'acide, un hydroxysuccinimidyl ester, un hydroxysulfosuccinimidyl ester, un azidonitrophényl, un azidophényl, une 3-(2-pyridyl dithio)-propionamide, glyoxal et en particulier les groupes de formule : 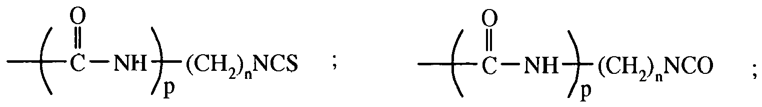 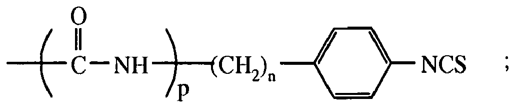 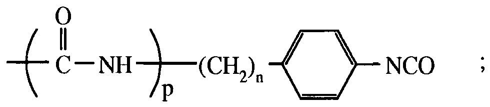 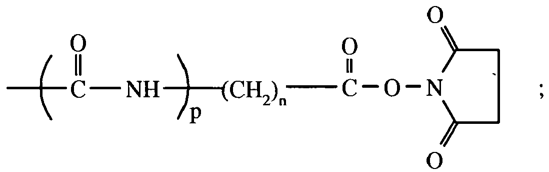 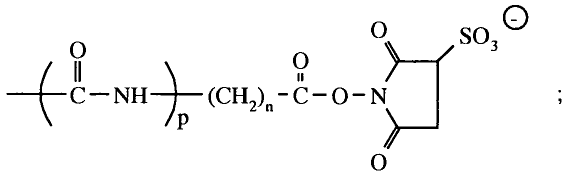 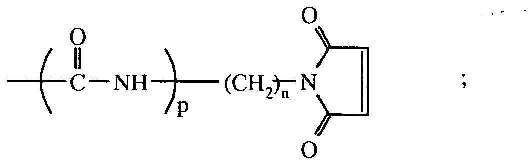 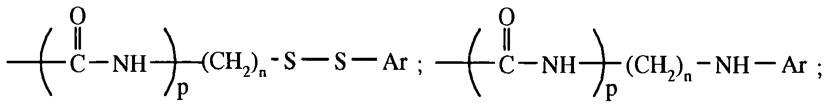 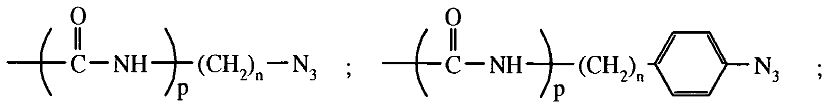 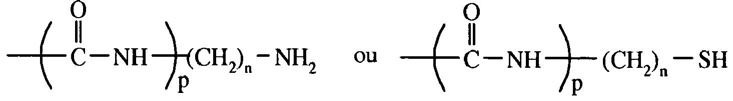 où n varie de 0 à 8 et p est égal à 0 ou 1, et Ar est un hétérocycle à 5 ou 6 chaînons comprenant 1 à 3 hétéroatomes, éventuellement substitué par un atome d'halogène.

14. Composé selon la revendication 1 à 9 **caractérisé en ce que** L est un alkylényle en C₃-C₁₀, et **en ce que** G est un groupe amine.

15. Composé selon la revendication 1, de formule :

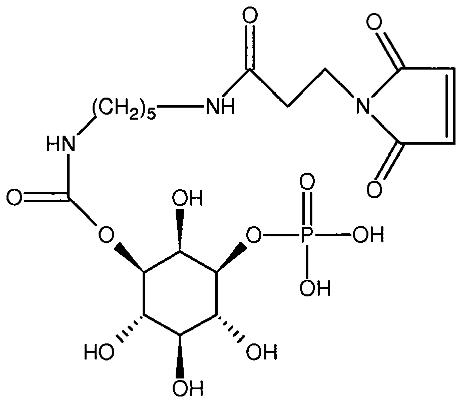

16. Composé selon l'une quelconque des revendications 1 à 14, **caractérisé en ce que** la substance ou molécule conjuguée M est un traceur.

17. Composé selon la revendication 16, **caractérisé en ce que** la substance ou molécule conjuguée M est un traceur choisi parmi : un radioisotope, une molécule radiomarquée, un composé fluorescent, un composé luminescent, une enzyme, un chromophore fluorescent, un chromophore absorbant la lumière, ou tout autre molécule ou substance permettant une mesure quantitative directe ou indirecte, sous réserve que lorsque M est un radioélément et que L est une simple liaison, alors M est différent du tritium.

18. Composé selon la revendications 17, **caractérisé en ce que** la substance ou molécule conjuguée M est un radioisotope choisi parmi : ¹²⁵I, ³²P, ³⁵S ou une molécule marquée par l'un de des isotopes suivants : ¹²⁵I, ³²P, ³⁵S ou ³H, à l'exception d'un groupe phosphate marqué au ³²P.

19. Composé selon la revendication 17, **caractérisé en ce que** la substance ou molécule conjuguée M est une enzyme ou un composé fluorescent choisi parmi : les rhodamines, les cyanines, les squaraines, les BODIPYs, les fluorescéines, les composés de la famille des AlexaFluors, les chélates de terre rare, les cryptates de terre rare, les quantum dots, les phycobiliprotéines telles que la B-phycoérythrine, la R-phycoérythrine, la C-phycocyanine, l'allophycocyanine, la GFP et ses dérivés, une protéine fluorescente de corail, une peroxydase, une luciférase.

20. Composé selon l'une quelconque des revendications 1 à 14, **caractérisé en ce que** la substance ou molécule conjuguée M est un composé immunogène.

21. Composé selon la revendication 20, **caractérisé en ce que** la substance ou molécule conjuguée M est un composé immunogène choisi parmi : la serum albumine bovine (BSA), la BSA cationique (cBSA), la KLH (keyhole Limpets Hémocyanine), la thyroglobuline, l'ovalbumine, un liposome, un polymère de L-Lysine, ou d'acide L-glutamique, le ficoll, le dextran, ou encore le polyéthylène glycol.

22. Composé selon l'une quelconque des revendications 1 à 14, **caractérisé en ce que** la substance ou molécule conjuguée M est un support solide.

23. Composé selon la revendication 22, **caractérisé en ce que** la substance ou molécule conjuguée M est un support solide choisi parmi : microbilles magnétiques ou non, des puits de microplaque, des tubes, une phase solide, une microsphère fluorescente.

24. Composé de formule : 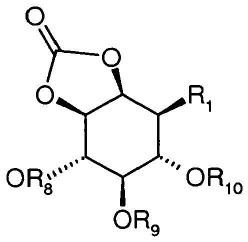 dans laquelle :
R₁ est un groupement -OPO(OR₇)₂;
R₇, R₈, R₉, R₁₀ sont identiques ou différents et sont des groupes protecteurs non-acido sensibles.

25. Composé de formule : 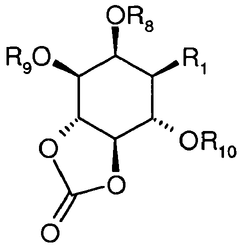 dans laquelle :
R₁ est un groupement -OPO(OR₇)₂;
R₇, R₈, R₉, R₁₀ sont identiques ou différents et sont des groupes protecteurs non-acido sensibles.

26. Composé selon l'une des revendications 24 ou 25, **caractérisé en ce que** R₈, R₉, R₁₀ sont des groupes protecteurs choisis parmi les groupes les résidus d'esters, tels que le pivaloyle, le benzoyle, le chloroacétyle, le phénylacétyle, le benzyloxycarbonyle, les résidus de silyl éthers, tels que le triméthylsilyloxy, le triéthylsilyloxy, le tert-butyldiméthylsilyloxy, le tert-butyldiphenylsilyloxy, le benzyloxy, le p-méthoxybenzyloxy, le 3,4-dimethoxybenzyloxy, les allyloxy, les allyloxycarboxy, et R₇, est un groupe benzyle ou bien les deux groupes R₇ forment ensemble un groupe o-xylylène.

27. Anticorps polyclonal ou monoclonal anti-IP1 obtenu par immunisation d'un mammifère avec un composé selon l'une des revendications 20 ou 21.

28. Trousse de dosage de l'IP1 comprenant :
un analogue d'IP1 selon les revendications 1 à 9, et
un ligand spécifique de l'IP1,
l'un au moins de ces éléments étant marqué de manière directe ou indirecte par un traceur.

29. Trousse selon la revendication 28, **caractérisée en ce qu'**elle comprend en outre un agent bloquant certaines enzymes du cycle de l'inositol, en particulier du chlorure de lithium.

30. Trousse selon la revendication 28, **caractérisée en ce que** le ligand spécifique de l'IP1 est un anticorps monoclonal ou polyclonal spécifique de l'IP1.

31. Trousse de dosage de l'IP1 selon la revendication 28, **caractérisée en ce que** le traceur est choisi parmi : un radioélément, un composé fluorescent, un composé luminescent, une enzyme, un chromophore fluorescent, un chromophore absorbant la lumière, ou tout autre molécule ou substance permettant une mesure quantitative directe ou indirecte.

32. Trousse selon la revendication 28, **caractérisée en ce qu'**elle contient un composé donneur et un composé accepteur émettant un signal résultant d'un transfert de proximité avec le composé donneur, le composé donneur étant lié de manière directe ou indirecte à l'analogue de l'IP1, et le composé accepteur étant lié de manière directe ou indirecte au ligand spécifique de l'IP1.

33. Trousse selon la revendication 28, **caractérisée en ce qu'**elle contient un composé donneur et un composé accepteur émettant un signal résultant d'un transfert de proximité avec le composé donneur, le composé accepteur étant lié de manière directe ou indirecte à l'analogue de l'IP1, et le composé donneur étant lié de manière directe ou indirecte au ligand spécifique de l'IP1.

34. Trousse selon l'une des revendications 28 ou 29, **caractérisée en ce que** le composé donneur et le composé accepteur sont des composés fluorescents, **en ce que** le transfert de proximité est un transfert d'énergie et **en ce que** le signal émis est un signal fluorescent.

35. Procédé de détection de l'IP1 contenu dans un échantillon **caractérisé en ce qu'**il comprend les étapes suivantes :
mise en contact de l'échantillon avec un ligand spécifique de l'IP1 détection des complexes formés entre ledit ligand et l'IP1 présent dans l'échantillon.

36. Procédé selon la revendication 35, **caractérisé en ce que** le ligand spécifique de l'IP1 est marqué de manière directe ou indirecte par un traceur.

37. Procédé selon la revendication 35, comprenant en outre une étape d'introduction dans l'échantillon d'une quantité connue d'IP1 tritié ou d'IP1 marqué de manière directe ou indirecte par un traceur.

38. Procédé selon l'une des revendications 36 ou 37 **caractérisé en ce que** le traceur est choisi parmi : un radioélément, un composé fluorescent, un composé luminescent, une enzyme, un chromophore fluorescent, un chromophore absorbant la lumière, ou tout autre molécule ou substance permettant une mesure quantitative directe ou indirecte.

39. Procédé selon la revendication 35, **caractérisé en ce que** le ligand spécifique de l'IP1 est conjugué de manière directe ou indirecte avec un composé donneur, **en ce qu'**on l'on met en contact l'échantillon avec de l'IP1 conjugué de manière directe ou indirecte avec un composé accepteur, et **en ce que** l'on mesure le signal émis par le composé accepteur, ce signal résultant d'un transfert de proximité entre le donneur et l'accepteur et étant inversement proportionnel à la quantité d'IP1 présent dans l'échantillon.

40. Procédé selon la revendication 35, **caractérisé en ce que** le ligand spécifique de l'IP1 est conjugué de manière directe ou indirecte avec un composé accepteur, **en ce qu'**on l'on met en contact l'échantillon avec de l'IP1 conjugué de manière directe ou indirecte avec un composé donneur, et **en ce que** l'on mesure le signal émis par le composé accepteur, ce signal résultant d'un transfert de proximité entre le donneur et l'accepteur et étant inversement proportionnel à la quantité d'IP1 présent dans l'échantillon.

41. Procédé selon l'une des revendications 35 à 40, **caractérisé en ce que** le composé donneur et le composé accepteur sont des composés fluorescents, **en ce que** le transfert de proximité est un transfert d'énergie et **en ce que** le signal émis est un signal fluorescent.

42. Procédé selon la revendication 41, **caractérisé en ce que** le composé fluorescent donneur est un cryptate ou un chélate de terre rare et le composé fluorescent accepteur est choisi parmi : les cyanines, les rhodamines, les squaraines, les BODIPYs, les fluorescéines, les AlexaFluors, les quantum dots, les phycobiliprotéines telles que la B-phycoérythrine, la R-phycoérythrine, la C-phycocyanine, l'allophycocyanine, la GFP et ses dérivés, une protéine fluorescente de corail.

43. Procédé de détection de l'IP1 selon l'une quelconque des revendications 35 à 42, **caractérisé en ce que** le ligand spécifique de l'IP1 est un anticorps monoclonal ou polyclonal, un fragment d'anticorps, une protéine, un peptide ou un aptamère.

44. Procédé selon la revendication 35, **caractérisé en ce que** l'échantillon est mis en contact avec un anticorps spécifique de l'IP1 et un analogue de l'IP1 fixé sur un support solide, et comprenant en outre les étapes suivantes :
lavage du support solide,
ajout d'un anticorps anti-espèce reconnaissant l'anticorps anti-IP1, le dit anticorps anti-espèce étant marqué par un traceur,
détection de l'anticorps anti-espèce,
la quantité d'anticorps anti-espèce étant inversement proportionnelle à la quantité de complexe anticorps anti-IP1 / IP1 présent dans l'échantillon.

45. Procédé selon la revendication 35, **caractérisé en ce que** l'échantillon est mis en contact avec anticorps spécifique de l'IP1 fixé à un support solide et avec un analogue de l'1P1 marqué par un traceur, et comprenant en outre les étapes suivantes :
- mise en contact de l'échantillon avec un anticorps anti-IP1 fixé sur un support solide et avec un analogue de l'IP1 marqué par un traceur, et comprenant en outre les étapes suivantes :
- lavage du support solide,
- détection de l'IP1 marqué, la quantité d'IP1 marqué étant inversement proportionnelle à la quantité de complexe anticorps anti-IP1 / IP1 présent dans l'échantillon.

46. Procédé de criblage de composés agonistes d'un récepteur membranaire dont l'activation entraîne la production d'IP1 dans la cellule, ce procédé comprenant les étapes suivantes :
(i) Ajout du composé à tester dans une milieu de culture comprenant des cellules exprimant un récepteur dont l'activation entraîne la production d'IP1,
(ii) Détermination de la quantité d'IP1 à l'aide d'un procédé selon l'une quelconque des revendications 35 à 43,
(iii) Comparaison de la quantité d'IP1 déterminée en présence et en l'absence de ce composé, une augmentation de la quantité d'IP1 permettant d'identifier le composé à tester en tant qu'agoniste dudit récepteur.

47. Procédé selon la revendication 46, **caractérisé en ce que** l'étape (ii) comprend l'ajout dans le milieu d'un anticorps anti-IP1 marqué par un composé fluorescent donneur ou accepteur ainsi que l'ajout d'IP1 marqué par un composé fluorescent accepteur ou, respectivement donneur, et la détermination de la quantité d'IP1 consiste à mesurer le signal lumineux résultant du transfert d'énergie entre les deux composés fluorescents, et l'étape (iii) comprend la comparaison du signal mesuré en présence et en l'absence de composé à tester, une diminution du signal mesuré en présence de composé à tester permettant d'identifier ce composé comme un agoniste dudit récepteur.

48. Procédé de criblage de composés antagonistes d'un récepteur membranaire dont l'activation entraîne la production d'IP1 dans la cellule, ce procédé comprenant les étapes suivantes :
(i) Ajout du composé à tester dans un milieu de culture comprenant des cellules exprimant un récepteur dont l'activation entraîne la production d'IP1,
(ii) Ajout d'un agoniste connu dudit récepteur,
(iii) Détermination de la quantité d'IP1 à l'aide d'un procédé selon l'une quelconque des revendications 36 à 44,
(vi) Comparaison de la quantité d'IP1 déterminée en présence et en l'absence du composé à tester, une diminution de la quantité d'IP1 permettant d'identifier le composé à tester en tant qu'antagoniste dudit récepteur.

49. Procédé selon la revendication 48, **caractérisé en ce que** l'étape (iii) comprend l'ajout dans le milieu d'un anticorps anti-IP1 marqué par un composé fluorescent donneur ou accepteur ainsi que l'ajout d'IP1 marqué par un composé fluorescent accepteur ou, respectivement, donneur, et la détermination de la quantité d'IP1 consiste à mesurer le signal lumineux résultant du transfert d'énergie entre les deux composés fluorescents, et l'étape (iv) comprend la comparaison du signal mesuré en présence et en l'absence de composé à tester, une augmentation du signal mesuré en présence de composé à tester permettant d'identifier ce composé comme un antagoniste dudit récepteur.

50. Procédé de criblage de composés agonistes inverses d'un récepteur membranaire constitutivement actif, ce procédé les étapes suivantes :
(i) Ajout du composé à tester dans une milieu de culture comprenant des cellules exprimant un récepteur constitutivement actif, et dont l'activité entraîne la production d'IP1,
(ii) Détermination de la quantité d'IP1 à l'aide d'un procédé selon l'une quelconque des revendications 36 à 44,
(iii) Comparaison de la quantité d'IP1 déterminée en présence et en l'absence du composé à tester, une diminution de la quantité d'IP1 permettant d'identifier le composé à tester en tant qu'agoniste inverse dudit récepteur.

51. Procédé selon la revendication 50, **caractérisé en ce que** l'étape (ii) comprend l'ajout dans le milieu d'un anticorps anti-IP1 marqué par un composé fluorescent donneur ou accepteur ainsi que l'ajout d'IP1 marqué par un composé fluorescent accepteur ou, respectivement, donneur, et la détermination de la quantité d'IP1 consiste à mesurer le signal lumineux résultant du transfert d'énergie entre les deux composés fluorescents, et l'étape (iii) comprend la comparaison du signal mesuré en présence et en l'absence de composé à tester, une augmentation du signal mesuré en présence de composé à tester permettant d'identifier ce composé comme un agoniste inverse dudit récepteur.

## Patentansprüche

1. Funktionelles Analog von IP1, der Formel (I): 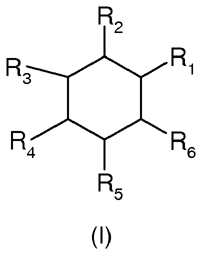 worin:
die Substituenten R₁, R₂, R₃, R₄, R₅, R₆ ausgewählt sind aus: -OH, -OPO₃²⁻, -OPO(OH)₂, -OPO(OH)O⁻, -(OCONH)q-L-G oder -(OCONH)q-L-M, unter der Bedingung, daß einer der Substituenten R₁ bis R₆ eine Gruppe -OPO₃⁻², -OPO(OH)₂ oder -OPO(OH)O⁻ und einer der anderen Substituenten R₁ bis R₆ eine der Gruppen -(OCONH)q-L-G oder -(OCONH)q -L-M ist, wobei die anderen Substituenten R₁ bis R₆ -OH-Gruppen sind,
wobei
q gleich 1 ist,
L eine Bindungsgruppe ist,
G eine Reaktionsgruppe ist,
M ein(e) konjugierte(s) Substanz oder Molekül, ausgewählt aus der folgenden Gruppe ist: ein Tracer, ein Immunogen, ein fester Träger, ein Glied eines Paares von Bindungspartnern, ausgewählt aus den Gliedern der folgenden Paare: Avidin oder Streptavidin/Biotin, Hapten/Antikörper, einsträngiges Oligonukleotid/komplementäres einsträngiges Oligonukleotid.

2. Verbindung nach Anspruch 1, der Formel (II): 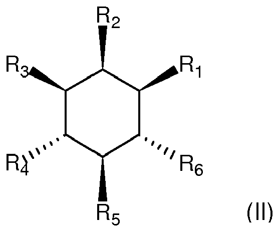 worin:
einer der Substituenten R₁, R₃, R₄ oder R₅ aus den Gruppen -OPO₃²⁻, -OPO(OH)₂ oder -OPO(OH)O⁻ ausgewählt ist,
einer der anderen Substituenten R₁-R₆ aus den Gruppen -(OCONH)q-L-G oder -(OCONH)q -L-M ausgewählt ist,
die anderen Substituenten OH-Gruppen sind,
wobei
q gleich 1 ist,
L eine Bindungsgruppe ist,
G eine Reaktionsgruppe ist,
M ein(e) konjugierte(s) Substanz oder Molekül, ausgewählt aus der folgenden Gruppe ist: ein Tracer, ein Immunogen, ein fester Träger, ein Glied eines Paares von Bindungspartnern, ausgewählt aus den Gliedern der folgenden Paare: Avidin oder Streptavidin/Biotin, Hapten/Antikörper, einsträngiges Oligonukleotid/komplementäres einsträngiges Oligonukleotid.

3. Verbindung nach Anspruch 1, der Formel (III): 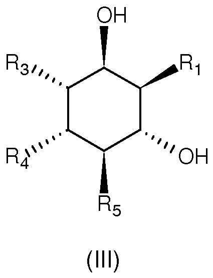 worin:
einer der Substituenten R₁, R₄, R₅ ausgewählt ist aus: -OPO₃²⁻, -OPO(OH)₂ oder -OPO(OH)O⁻,
R₃ ausgewählt ist aus: -(OCONH)q-L-G oder -(OCONH)q -L-M,
die anderen Substituenten R₁, R₄ und R₅ OH-Gruppen sind,
wobei
q gleich 1 ist,
L eine Bindungsgruppe ist,
G eine Reaktionsgruppe ist,
M ein(e) konjugierte(s) Substanz oder Molekül, ausgewählt aus der folgenden Gruppe ist: ein Tracer, ein Immunogen, ein fester Träger, ein Glied eines Paares von Bindungspartnern, ausgewählt aus den Gliedern der folgenden Paare: Avidin oder Streptavidin/Biotin, Hapten/Antikörper, einsträngiges Oligonukleotid/komplementäres einsträngiges Oligonukleotid.

4. Verbindung nach Anspruch 1, der Formel (IV): 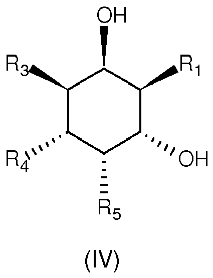 worin:
einer der Substituenten R₁, R₃, R₄ ausgewählt ist aus: -OPO₃²⁻, -OPO(OH)₂ oder -OPO(OH)O⁻,
R₅ ausgewählt ist aus: -(OCONH)q-L-G oder -(OCONH)q -L-M,
die anderen Substituenten R₁, R₃, R₄ OH-Gruppen sind,
wobei
q gleich 1 ist,
L eine Bindungsgruppe ist,
G eine Reaktionsgruppe ist,
M ein(e) konjugierte(s) Substanz oder Molekül, ausgewählt aus der folgenden Gruppe ist: ein Tracer, ein Immunogen, ein fester Träger, ein Glied eines Paares von Bindungspartnern, ausgewählt aus den Gliedern der folgenden Paare: Avidin oder Streptavidin/Biotin, Hapten/Antikörper, einsträngiges Oligonukleotid/komplementäres einsträngiges Oligonukleotid.

5. Verbindung nach Anspruch 1, der Formel (V): 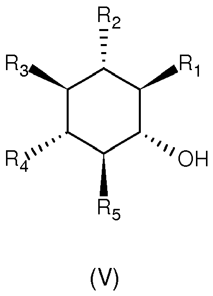 worin:
einer der Substituenten R₁, R₃, R₄, R₅ ausgewählt ist aus: -OPO₃²⁻, -OPO(OH)₂ oder -OPO(OH)O⁻,
R₂ ausgewählt ist aus: -(OCONH)q-L-G oder -(OCONH)q -L-M,
die anderen Substituenten R₁, R₃, R₄, R₅ OH-Gruppen sind,
wobei
q gleich 1 ist,
L eine Bindungsgruppe ist,
G eine Reaktionsgruppe ist,
M ein(e) konjugierte(s) Substanz oder Molekül, ausgewählt aus der folgenden Gruppe ist: ein Tracer, ein Immunogen, ein fester Träger, ein Glied eines Paares von Bindungspartnern, ausgewählt aus den Gliedern der folgenden Paare: Avidin oder Streptavidin/Biotin, Hapten/Antikörper, einsträngiges Oligonukleotid/komplementäres einsträngiges Oligonukleotid.

6. Verbindung nach Anspruch 1, der Formel (VI): 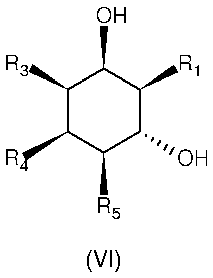 worin:
einer der Substituenten R₁, R₃, R₅ ausgewählt ist aus: -OPO₃²⁻, -OPO(OH)₂ oder -OPO(OH)O⁻,
R₄ ausgewählt ist aus: -(OCONH)q-L-G oder -(OCONH)q -L-M,
die anderen Substituenten R₁, R₃, R₅ OH-Gruppen sind,
wobei
q gleich 1 ist,
L eine Bindungsgruppe ist,
G eine Reaktionsgruppe ist,
M ein(e) konjugierte(s) Substanz oder Molekül, ausgewählt aus der folgenden Gruppe ist: ein Tracer, ein Immunogen, ein fester Träger, ein Glied eines Paares von Bindungspartnern, ausgewählt aus den Gliedern der folgenden Paare: Avidin oder Streptavidin/Biotin, Hapten/Antikörper, einsträngiges Oligonukleotid/komplementäres einsträngiges Oligonukleotid.

7. Verbindung nach einem der Ansprüche 1 bis 6, **dadurch gekennzeichnet, daß** das Paar Hapten/Antikörper aus den Paaren 6HIS / anti-6HIS-Antikörper, FLAG / anti-FLAG-Antikörper, DNP / anti-DNP-Antikörper, GST / anti-GST-Antikörper, Cmyc / anti-Cmyc-Antikörper, HA / anti-HA-Antikörper ausgewählt ist.

8. Verbindung nach einem der Ansprüche 1 bis 7, **dadurch gekennzeichnet, daß** die Gruppe R₁ aus den Gruppen -OPO₃²⁻, -OPO(OH)₂ oder -OPO(OH)O⁻ ausgewählt ist.

9. Verbindung nach einem der Ansprüche 1 bis 7, **dadurch gekennzeichnet, daß** die Gruppe R₄ aus den Gruppen -OPO₃²⁻, -OPO(OH)₂ oder -OPO(OH)O⁻ ausgewählt ist.

10. Verbindung nach einem der Ansprüche 1 bis 9, **dadurch gekennzeichnet, daß** die Bindungsgruppe L eine kovalente Einfachbindung oder ein Spacerarm mit 1 bis 20 von Wasserstoff verschiedenen Atomen, ausgewählt aus den Kohlenstoff-, Stickstoff-, Phosphor-, Sauerstoff- und Schwefelatomen, ist, wobei diese Bindungsgruppe linear oder verzweigt, zyklisch oder heterozyklisch, gesättigt oder ungesättigt ist und von einer Kombination aus Bindungen gebildet ist, die ausgewählt sind aus: den Kohlenstoff-Kohlenstoff-Bindungen, die einfach, doppelt, dreifach oder aromatisch sein können; den Kohlenstoff-Stickstoff-Bindungen; den Stickstoff-Stickstoff-Bindungen; den Kohlenstoff-Sauerstoff-Bindungen; den Kohlenstoff-Schwefel-Bindungen; den Phosphor-Sauerstoff-Bindungen; den Phosphor-Stickstoff-Bindungen; den Etherbindungen; den Esterbindungen; den Thioetherbindungen; den Aminbindungen; den Amidbindungen; den Carboxamidbindungen; den Sulfonamidbindungen; den Harnstoffbindungen; den Urethanbindungen; den Hydrazinbindungen; den Carbamoylbindungen.

11. Verbindung nach Anspruch 10, **dadurch gekennzeichnet, daß** die Bindungsgruppe L 1 bis 20 von Wasserstoff verschiedene Atome, die aus den Kohlenstoff-, Stickstoff-, Phosphor-, Sauerstoff- und Schwefelatomen ausgewählt sind, umfaßt und ferner wenigstens eine Bindung, die aus den Ether-, Thioether-, Carboxamid-, Sulfonamid-, Hydrazin-, Amin-, Esterbindungen ausgewählt ist, sowie aromatische oder heteroaromatische Bindungen umfaßt.

12. Verbindung nach Anspruch 10, **dadurch gekennzeichnet, daß** die Bindungsgruppe L aus den folgenden substituierten oder nicht substituierten Ketten ausgewählt ist: Polymethylen, Arylen, Alkylarylen, Arylenalkyl oder Arylthio.

13. Verbindung nach den Ansprüchen 1 bis 9, **dadurch gekennzeichnet, daß** die Reaktionsgruppe G aus den von den folgenden Verbindungen abgeleiteten Gruppen ausgewählt ist: einem Acrylamid, einem aktivierten Amin (beispielsweise einem Cadaverin oder einem Ethylendiamin), einem aktivierten Ester, einem Aldehyd, einem Alkylhalogenid, einem Anhydrid, einem Anilin, einem Azid, einem Aziridin, einer Carbonsäure, einem Diazoalkan, einem Haloacetamid, einem Halotriazin, wie Monochlortriazin, Dichlortriazin, einem Hydrazin (einschließlich Hydraziden), einem Imidoester, einem Isocyanat, einem Isothiocyanat, einem Maleimid, einem Sulfonylhalogenid, oder Thiol, einem Keton, einem Amin, einem Säurehalogenid, einem Hydroxysuccinimidylester, einem Hydroxysulfosuccinimidylester, einem Azidonitrophenyl, einem Azidophenyl, einem 3-(2-Pyridyldithio)-propionamid, Glyoxal, und insbesondere aus den Gruppen der Formel: 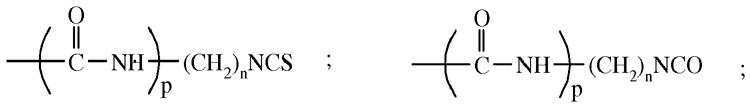 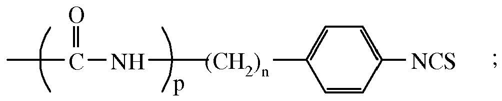 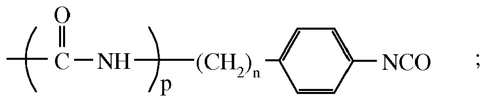 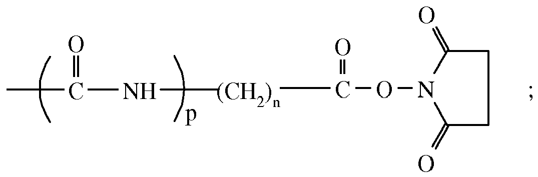 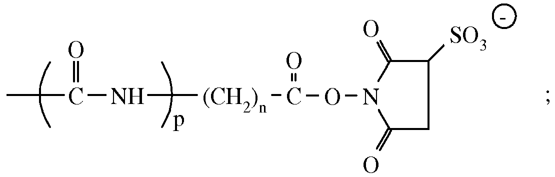 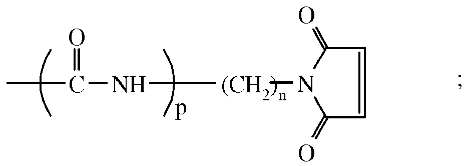 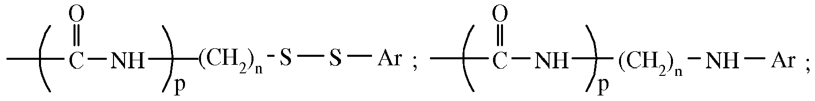 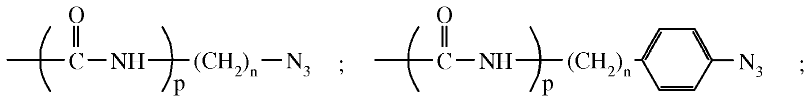 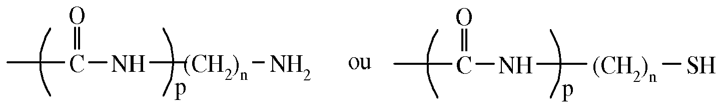 wobei n von 0 bis 8 variiert und p gleich 0 oder 1 ist und Ar ein 5- oder 6-gliedriger Heterocyclus mit 1 bis 3 Heteroatomen ist, eventuell substituiert durch ein Halogenatom.

14. Verbindung nach Anspruch 1 bis 9, **dadurch gekennzeichnet, daß** L ein C₃-C₁₀-Alkylenyl ist und daß G ein Amingruppe ist.

15. Verbindung nach Anspruch 1, der Formel:

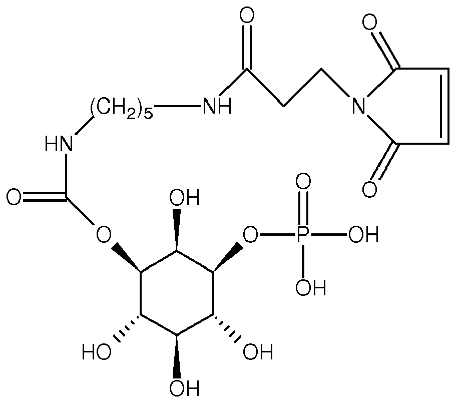

16. Verbindung nach einem der Ansprüche 1 bis 14, **dadurch gekennzeichnet, daß** die/das konjugierte Substanz oder Molekül M ein Tracer ist.

17. Verbindung nach Anspruch 16, **dadurch gekennzeichnet, daß** die/das konjugierte Substanz oder Molekül M ein Tracer ist, der ausgewählt ist aus: einem Radioisotop, einem radiomarkierten Molekül, einer fluoreszierenden Verbindung, einer lumineszierenden Verbindung, einem Enzym, einem fluoreszierenden Chromophor, einem lichtabsorbierenden Chromophor, oder jedem/jeder anderen Molekül oder Substanz, das/die eine direkte oder indirekte quantitative Messung ermöglicht, unter dem Vorbehalt, daß wenn M ein Radioelement ist und L eine Einfachbindung ist, dann M von Tritium verschieden ist.

18. Verbindung nach Anspruch 17, **dadurch gekennzeichnet, daß** die/das konjugierte Substanz oder Molekül M ein Radioisotop, ausgewählt aus: ¹²⁵I, ³²P, ³⁵S oder ein Molekül, markiert mit einem der folgenden Isotope: ¹²⁵I, ³²P, ³⁵S oder ³H, mit Ausnahme einer ³²P-markierten Phosphatgruppe, ist.

19. Verbindung nach Anspruch 17, **dadurch gekennzeichnet, daß** die/das konjugierte Substanz oder Molekül M ein Enzym oder eine fluoreszierende Verbindung ist, welche ausgewählt ist aus: den Rhodaminen, den Cyaninen, den Squarainen, den BODIPYs, den Fluoresceinen, den Verbindungen der Familie der AlexaFluor, den Chelaten der Seltenerde, den Cryptaten der Seltenerde, den Quantenpunkten, den Phycobiliproteinen, wie B-Phycoerythrin, R- Phycoerythrin, C-Phycocyanin, Allophycocyanin, GFP und seinen Derivaten, einem fluoreszierenden Korallenprotein, einer Peroxidase, einer Luciferase.

20. Verbindung nach einem der Ansprüche 1 bis 14, **dadurch gekennzeichnet, daß** die/das konjugierte Substanz oder Molekül M eine immunogene Verbindung ist.

21. Verbindung nach Anspruch 20, **dadurch gekennzeichnet, daß** die/das konjugierte Substanz oder Molekül M eine immunogene Verbindung ist, welche ausgewählt ist aus: dem Rinderserumalbumin (BSA), dem kationischen BSA (cBSA), dem KLH (Keyhole Limpet Hemocyanin), dem Thyroglobulin, dem Ovalbumin, einem Liposom, einem L-Lysin- oder L-Glutaminsäure-Polymer, Ficoll, Dextran oder aber Polyethylenglykol.

22. Verbindung nach einem der Ansprüche 1 bis 14, **dadurch gekennzeichnet, daß** die/das konjugierte Substanz oder Molekül M ein fester Träger ist.

23. Verbindung nach Anspruch 22, **dadurch gekennzeichnet, daß** die/das konjugierte Substanz oder Molekül M ein fester Träger ist, welcher ausgewählt ist aus: magnetischen oder nicht magnetischen Mikrokügelchen, Mikroplatten-Wells, Röhrchen, einer festen Phase, einer fluoreszierenden Mikrosphäre.

24. Verbindung der Formel: 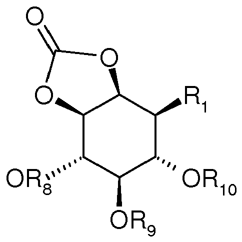 worin:
R₁ eine Gruppe -OPO(OR₇)₂ ist ;
R₇, R₈, R₉, R₁₀ identisch oder unterschiedlich sowie nicht-säureempfindliche Schutzgruppen sind.

25. Verbindung der Formel: 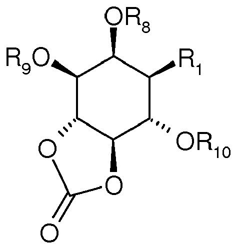 worin:
R₁ eine Gruppe -OPO(OR₇)₂ ist;
R₇, R₈, R₉, R₁₀ identisch oder unterschiedlich sowie nicht-säureempfindliche Schutzgruppen sind.

26. Verbindung nach einem der Ansprüche 24 oder 25, **dadurch gekennzeichnet, daß** R₈, R₉, R₁₀ Schutzgruppen sind, die aus den Gruppen: Esterreste, wie Pivaloyl, Benzoyl, Chloracetyl, Phenylacetyl, Benzyloxycarbonyl, Silylether-Reste, wie Trimethylsilyloxy, Triethylsilyloxy, tert-Butyldimethylsilyloxy, tert-Butyldiphenylsilyloxy, Benzyloxy, p-Methoxybenzyloxy, 3,4-Dimethoxybenzyloxy, Allyloxy, Allyloxycarboxy ausgewählt sind, und R₇ eine Benzylgruppe ist oder aber die beiden Gruppen R₇ gemeinsam eine o-Xylylen-Gruppe bilden.

27. Polyklonaler oder monoklonaler Antikörper anti-IP1, der durch Immunisieren eines Säugetiers mit einer Verbindung nach einem der Ansprüche 20 oder 21 erhalten wird.

28. Kit zur quantitativen Bestimmung von IP1, umfassend:
ein Analog von IP1 nach den Ansprüchen 1 bis 9 und
einen spezifischen Liganden von IP1,
wobei wenigstens eines dieser Elemente direkt oder indirekt mit einem Tracer markiert ist.

29. Kit nach Anspruch 28, **dadurch gekennzeichnet, daß** er ferner ein einige Enzyme des Inositol-Rings blockierendes Agens, insbesondere Lithiumchlorid umfaßt.

30. Kit nach Anspruch 28, **dadurch gekennzeichnet, daß** der spezifische Ligand von 1P1 ein spezifischer monoklonaler oder polyklonaler Antikörper von IP1 ist.

31. Kit zur quantitativen Bestimmung von IP1, nach Anspruch 28, **dadurch gekennzeichnet, daß** der Tracer ausgewählt ist aus: einem Radioelement, einer fluoreszierenden Verbindung, einer lumineszierenden Verbindung, einem Enzym, einem fluoreszierenden Chromophor, einem lichtabsorbierenden Chromophor, oder jedem/jeder anderen Molekül oder Substanz, das/die eine direkte oder indirekte quantitative Messung ermöglicht.

32. Kit nach Anspruch 28, **dadurch gekennzeichnet, daß** er eine Donor-Verbindung und eine Akzeptor-Verbindung, die ein aus einem Nahbereichstransfer mit der Donor-Verbindung resultierendes Signal aussendet, enthält, wobei die Donor-Verbindung direkt oder indirekt an das Analog von IP1 gebunden ist und wobei die Akzeptor-Verbindung direkt oder indirekt an den spezifischen Liganden von IP1 gebunden ist.

33. Kit nach Anspruch 28, **dadurch gekennzeichnet, daß** er eine Donor-Verbindung und eine Akzeptor-Verbindung, die ein aus einem Nahbereichstransfer mit der Donor-Verbindung resultierendes Signal aussendet, enthält, wobei die Akzeptor-Verbindung direkt oder indirekt an das Analog von IP1 gebunden ist und wobei die Donor-Verbindung direkt oder indirekt an den spezifischen Liganden von IP1 gebunden ist.

34. Kit nach einem der Ansprüche 28 oder 29, **dadurch gekennzeichnet, daß** die Donor-Verbindung und die Akzeptor-Verbindung fluoreszierende Verbindungen sind, daß der Nahbereichstransfer ein Energietransfer ist und daß das ausgesandte Signal ein fluoreszierendes Signal ist.

35. Verfahren zum Detektieren des in einer Probe enthaltenen IP1, **dadurch gekennzeichnet, daß** es die folgenden Schritte umfaßt:
Inkontaktbringen der Probe mit einem spezifischen Liganden von IP1
Detektieren der zwischen dem Liganden und dem in der Probe vorhandenen IP1 gebildeten Komplexe.

36. Verfahren nach Anspruch 35, **dadurch gekennzeichnet, daß** der spezifische Ligand von IP1 direkt oder indirekt mit einem Tracer markiert ist.

37. Verfahren nach Anspruch 35, ferner umfassend einen Schritt zum Einbringen einer bekannten Menge von tritiiertem IP1 oder von direkt oder indirekt mit einem Tracer markiertem IP1 in die Probe.

38. Verfahren nach einem der Ansprüche 36 oder 37, **dadurch gekennzeichnet, daß** der Tracer ausgewählt ist aus: einem Radioelement, einer fluoreszierenden Verbindung, einer lumineszierenden Verbindung, einem Enzym, einem fluoreszierenden Chromophor, einem lichtabsorbierenden Chromophor, oder jedem/jeder anderen Molekül oder Substanz, das/die eine direkte oder indirekte quantitative Messung ermöglicht.

39. Verfahren nach Anspruch 35, **dadurch gekennzeichnet, daß** der spezifische Ligand von IP1 direkt oder indirekt mit einer Donor-Verbindung konjugiert ist, daß die Probe mit direkt oder indirekt mit einer Akzeptor-Verbindung konjugiertem IP1 in Kontakt gebracht wird und daß das durch die Akzeptor-Verbindung ausgesandte Signal gemessen wird, wobei dieses Signal aus einem Nahbereichstransfer zwischen dem Donor und dem Akzeptor resultiert und zu der Menge an in der Probe vorhandenem IP1 umgekehrt proportional ist.

40. Verfahren nach Anspruch 35, **dadurch gekennzeichnet, daß** der spezifische Ligand von IP1 direkt oder indirekt mit einer Akzeptor-Verbindung konjugiert ist, daß die Probe mit direkt oder indirekt mit einer Donor-Verbindung konjugiertem IP1 in Kontakt gebracht wird und daß das durch die Akzeptor-Verbindung ausgesandte Signal gemessen wird, wobei dieses Signal aus einem Nahbereichstransfer zwischen dem Donor und dem Akzeptor resultiert und zu der Menge an in der Probe vorhandenem IP1 umgekehrt proportional ist.

41. Verfahren nach einem der Ansprüche 35 bis 40, **dadurch gekennzeichnet, daß** die Donor-Verbindung und die Akzeptor-Verbindung fluoreszierende Verbindungen sind, daß der Nahbereichstransfer ein Energietransfer ist und daß das ausgesandte Signal ein fluoreszierendes Signal ist.

42. Verfahren nach Anspruch 41, **dadurch gekennzeichnet, daß** die fluoreszierende Donor-Verbindung ein Cryptat oder ein Chelat der Seltenerde ist und die fluoreszierende Akzeptor-Verbindung ausgewählt ist aus: den Cyaninen, den Rhodaminen, den Squarainen, den BODIPYs, den Fluoresceinen, den AlexaFluors, den Quantenpunkten, den Phycobiliproteinen, wie B-Phycoerythrin, R- Phycoerythrin, C-Phycocyanin, Allophycocyanin, GFP und seinen Derivaten, einem fluoreszierenden Korallenprotein.

43. Verfahren zum Detektieren des IP1, nach einem der Ansprüche 35 bis 42, **dadurch gekennzeichnet, daß** der spezifische Ligand von IP1 ein monoklonaler oder polyklonaler Antikörper, ein Antikörperfragment, ein Protein, ein Peptid oder ein Aptamer ist.

44. Verfahren nach Anspruch 35, **dadurch gekennzeichnet, daß** die Probe mit einem spezifischen Antikörper von IP1 und einem Analog von IP1, das an einem festen Träger fixiert ist, in Kontakt gebracht wird, sowie ferner umfassend die folgenden Schritte:
Waschen des festen Trägers,
Zugeben eines den Antikörper anti-IP1 erkennenden anti-Spezies-Antikörpers, wobei der anti-Spezies-Antikörper mit einem Tracer markiert ist,
Detektieren des anti-Spezies-Antikörpers,
wobei die Menge an anti-Spezies-Antikörper zu der Menge an in der Probe vorhandenem Komplex Antikörper anti-IP1 / IP1 umgekehrt proportional ist.

45. Verfahren nach Anspruch 35, **dadurch gekennzeichnet, daß** die Probe mit einem spezifischen Antikörper von IP1, der an einem festen Träger fixiert ist, und mit einem Analog des mit einem Tracer markierten IP1 in Kontakt gebracht wird, sowie ferner umfassend die folgenden Schritte:
- Inkontaktbringen der Probe mit einem Antikörper anti-IP1, der an einem festen Träger fixiert ist, und mit einem Analog des mit einem Tracer markierten IP1, sowie ferner umfassend die folgenden Schritte:
- Waschen des festen Trägers,
- Detektieren des markierten IP1, wobei die Menge an markiertem IP1 zu der Menge an in der Probe vorhandenem Komplex Antikörper anti-IP1 / IP1 umgekehrt proportional ist.

46. Verfahren zum Screening von Agonisten-Verbindungen eines Membranrezeptors, dessen Aktivierung die Produktion von IP1 in der Zelle zur Folge hat, wobei dieses Verfahren die folgenden Schritte umfaßt:
(i) Zugeben der zu testenden Verbindung zu einem Kulturmedium, das Zellen enthält, die einen Rezeptor exprimieren, dessen Aktivierung die Produktion von IP1 zur Folge hat,
(ii) Bestimmen der Menge an IP1 mit Hilfe eines Verfahrens nach einem der Ansprüche 35 bis 43,
(iii) Vergleichen der in Gegenwart und in Abwesenheit dieser Verbindung bestimmten Menge an IP1, wobei eine Erhöhung der Menge an IP1 ermöglicht, die zu testende Verbindung als Agonisten des Rezeptors zu identifizieren.

47. Verfahren nach Anspruch 46, **dadurch gekennzeichnet, daß** der Schritt (ii) die Zugabe eines mit einer fluoreszierenden Donor- oder Akzeptor-Verbindung markierten Antikörpers anti-IP1 zu dem Medium sowie die Zugabe von mit einer fluoreszierenden Akzeptor- bzw. Donor-Verbindung markierten IP1 umfaßt und die Bestimmung der Menge an IP1 darin besteht, das aus dem Energietransfer zwischen den beiden fluoreszierenden Verbindungen resultierende Lichtsignal zu messen, und der Schritt (iii) den Vergleich des in Gegenwart und in Abwesenheit einer zu testenden Verbindung gemessenen Signals umfaßt, wobei eine Verringerung des in Gegenwart einer zu testenden Verbindung gemessenen Signals ermöglicht, diese Verbindung als einen Agonisten des Rezeptors zu identifizieren.

48. Verfahren zum Screening von Antagonisten-Verbindungen eines Membranrezeptors, dessen Aktivierung die Produktion von IP1 in der Zelle zur Folge hat, wobei dieses Verfahren die folgenden Schritte umfaßt:
(i) Zugeben der zu testenden Verbindung zu einem Kulturmedium, das Zellen enthält, die einen Rezeptor exprimieren, dessen Aktivierung die Produktion von IP1 zur Folge hat,
(ii) Zugeben eines bekannten Agonisten des Rezeptors,
(iii) Bestimmen der Menge an IP1 mit Hilfe eines Verfahrens nach einem der Ansprüche 36 bis 44,
(iv) Vergleichen der in Gegenwart und in Abwesenheit der zu testenden Verbindung bestimmten Menge an IP1, wobei eine Verringerung der Menge an IP1 ermöglicht, die zu testende Verbindung als Antagonisten des Rezeptors zu identifizieren.

49. Verfahren nach Anspruch 48, **dadurch gekennzeichnet, daß** der Schritt (iii) die Zugabe eines mit einer fluoreszierenden Donor- oder Akzeptor-Verbindung markierten Antikörpers anti-IP1 zu dem Medium sowie die Zugabe von mit einer fluoreszierenden Akzeptor- bzw. Donor-Verbindung markierten IP1 umfaßt und die Bestimmung der Menge an IP1 darin besteht, das aus dem Energietransfer zwischen den beiden fluoreszierenden Verbindungen resultierende Lichtsignal zu messen, und der Schritt (iv) den Vergleich des in Gegenwart und in Abwesenheit einer zu testenden Verbindung gemessenen Signals umfaßt, wobei eine Erhöhung des in Gegenwart einer zu testenden Verbindung gemessenen Signals ermöglicht, diese Verbindung als einen Antagonisten des Rezeptors zu identifizieren.

50. Verfahren zum Screening von inversen Agonisten-Verbindungen eines konstitutiv-aktiven Membranrezeptors, wobei dieses Verfahren die folgenden Schritte umfaßt:
(i) Zugeben der zu testenden Verbindung zu einem Kulturmedium, das Zellen enthält, die einen konstitutiv-aktiven Rezeptor exprimieren, dessen Aktivität die Produktion von IP1 zur Folge hat,
(ii) Bestimmen der Menge an IP1 mit Hilfe eines Verfahrens nach einem der Ansprüche 36 bis 44,
(iii) Vergleichen der in Gegenwart und in Abwesenheit der zu testenden Verbindung bestimmten Menge an IP1, wobei eine Verringerung der Menge an IP1 ermöglicht, die zu testende Verbindung als inversen Agonisten des Rezeptors zu identifizieren.

51. Verfahren nach Anspruch 50, **dadurch gekennzeichnet, daß** der Schritt (ii) die Zugabe eines mit einer fluoreszierenden Donor- oder Akzeptor-Verbindung markierten Antikörpers anti-IP1 zu dem Medium sowie die Zugabe von mit einer fluoreszierenden Akzeptor- bzw. Donor-Verbindung markierten IP1 umfaßt und die Bestimmung der Menge an IP1 darin besteht, das aus dem Energietransfer zwischen den beiden fluoreszierenden Verbindungen resultierende Lichtsignal zu messen, und der Schritt (iii) den Vergleich des in Gegenwart und in Abwesenheit einer zu testenden Verbindung gemessenen Signals umfaßt, wobei eine Erhöhung des in Gegenwart einer zu testenden Verbindung gemessenen Signals ermöglicht, diese Verbindung als einen inversen Agonisten des Rezeptors zu identifizieren.

## Claims

1. A functional analog of IP1, of formula (I): 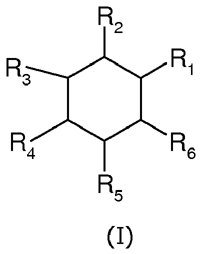 in which:
the substituents R₁, R₂, R₃, R₄, R₅, R₆ are chosen from: -OH, -OPO₃²⁻, -OPO(OH)₂, -OPO(OH)O⁻, -(OCONH)q-L-G or -(OCONH)q-L-M, provided that one of the substituents R₁ to R₆ is a group -OPO₃²⁻, -OPO(OH)₂ or -OPO(OH)O⁻ and one of the other substituents R₁ to R₆ is a group -(OCONH)q-L-G or -(OCONH)q-L-M, the other substituents R₁ to R₆ being -OH groups;
where:
q is 1,
L is a linkage group,
G is a reactive group,
M is a conjugated substance or molecule chosen from the following group: a tracer, an immunogen, a solid support, a member of a pair of binding partners chosen from members of the following pairs: avidin or streptavidin/biotin, haptene/antibodies, single-stranded oligonucleotide/complementary single-stranded oligonucleotide.

2. The compound according to claim 1, of formula (II): 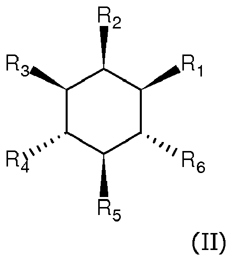 in which:
one of the substituents R₁, R₃, R₄ or R₅ is chosen from the groups -OPO₃²⁻, -OPO(OH)₂ or -OPO(OH)O⁻,
one of the other substituents R₁-R₆ is chosen from the groups -(OCONH)q-L-G or -(OCONH)_{q}-L-M,
the other substituents are OH groups,
where:
q is 1;
L is a linkage group;
G is a reactive group;
M is a conjugated substance or molecule chosen from the following group: a tracer, an immunogen, a solid support, a member of a pair of binding partners chosen from members of the following pairs: avidin or streptavidin/biotin, haptene/antibodies, single-stranded oligonucleotide/complementary single-stranded oligonucleotide.

3. The compound according to claim 1, of formula (III): 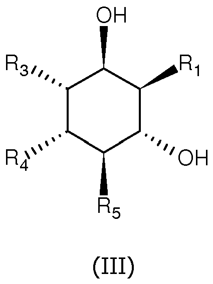 in which:
one of the substituents R₁, R₄, R₅ is chosen from: -OPO₃²⁻, -OPO(OH)₂ or -OPO(OH)O⁻,
R₃ is chosen from: -(OCONH)q-L-G or -(OCONH)q-L-M,
the other substituents R₁, R₄ and R₅ are OH groups,
where:
q is 1;
L is a linkage group;
G is a reactive group;
M is a conjugated substance or molecule chosen from the following group: a tracer, an immunogen, a solid support, a member of a pair of binding partners chosen from members of the following pairs: avidin or streptavidin/biotin, haptene/antibodies, single-stranded oligonucleotide/complementary single-stranded oligonucleotide.

4. The compound according to claim 1, of formula (IV): 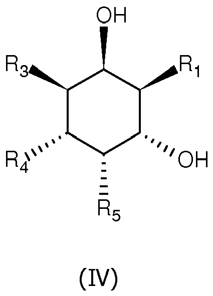 in which:
one of the substituents R₁, R₃, R₄ is chosen from: -OPO₃²⁻, -OPO(OH)₂ or -OPO(OH)O⁻;
R₅ is chosen from: -(OCONH)q-L-G or -(OCONH)q-L-M,
the other substituents R₁, R₃ and R₄ are OH groups,
where:
q is 1;
L is a linkage group;
G is a reactive group;
M is a conjugated substance or molecule chosen from the following group: a tracer, an immunogen, a solid support, a member of a pair of binding partners chosen from members of the following pairs: avidin or streptavidin/biotin, haptene/antibodies, single-stranded oligonucleotide/complementary single-stranded oligonucleotide.

5. The compound according to claim 1, of formula (V): 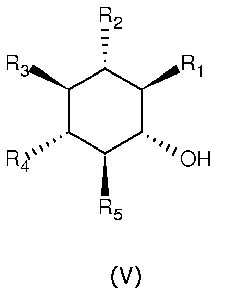 in which:
one of the substituents R₁, R₃, R₄, R₅ is chosen from: -OPO₃²⁻, -OPO(OH)₂ or -OPO(OH)O⁻,
R₂ is chosen from: -(OCONH)q-L-G or -(OCONH)q-L-M,
the other substituents R₁, R₃, R₄ and R₅ are OH groups,
where:
q is 1;
L is a linkage group;
G is a reactive group;
M is a conjugated substance or molecule chosen from the following group: a tracer, an immunogen, a solid support, a member of a pair of binding partners chosen from members of the following pairs: avidin or streptavidin/biotin, haptene/antibodies, single-stranded oligonucleotide/complementary single-stranded oligonucleotide.

6. The compound according to claim 1, of formula (VI): 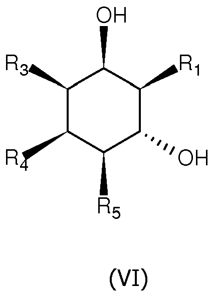 in which:
one of the substituents R₁, R₃, R₅ is chosen from: -OPO₃²⁻, -OPO(OH)₂ or -OPO(OH)O⁻,
R₄ is chosen from: -(OCONH)q-L-G or -(OCONH)q-L-M,
the other substituents R₁, R₃ and R₅ are OH groups,
where:
q is 1;
L is a linkage group;
G is a reactive group;
M is a conjugated substance or molecule chosen from the following group: a tracer, an immunogen, a solid support, a member of a pair of binding partners chosen from members of the following pairs: avidin or streptavidin/biotin, haptene/antibodies, single-stranded oligonucleotide/complementary single-stranded oligonucleotide.

7. The compound according to any one of claims 1 to 6, **characterized in that** the haptene/antibodies pair is chosen from the pairs 6HIS/anti-6HIS antibodies, FLAG/anti-FLAG antibodies, DNP/anti-DNP antibodies, GST/anti-GST antibodies, Cmyc/anti-Cmyc antibodies, and HA/anti-HA antibodies.

8. The compound according to any one of claims 1 to 7, **characterized in that** the group R₁ is chosen from the groups -OPO₃²⁻, -OPO(OH)₂ or -OPO(OH)O⁻.

9. The compound according to any one of claims 1 to 7, **characterized in that** the group R₄ is chosen from the groups -OPO₃²⁻, -OPO(OH)₂ or -OPO(OH)O⁻.

10. The compound according to any one of claims 1 to 9, **characterized in that** the linkage group L is a single covalent bond or a spacer arm comprising from 1 to 20 atoms, different from hydrogen, chosen from carbon, nitrogen, phosphorus, oxygen and sulfur atoms, this linkage group being linear or branched, cyclic or heterocyclic, saturated or unsaturated, and consisting of a combination of bonds chosen from: carbon-carbon bonds which may be single, double, triple or aromatic; carbon-nitrogen bonds; nitrogen-nitrogen bonds; carbon-oxygen bonds; carbon-sulfur bonds; phosphorus-oxygen bonds; phosphorus-nitrogen bonds; ether bonds; ester bonds; thioether bonds; amine bonds; amide bonds; carboxamide bonds; sulfonamide bonds; urea bonds; urethane bonds; hydrazine bonds; carbamoyl bonds.

11. The compound according to claim 10, **characterized in that** the linkage group L comprises from 1 to 20 atoms, different from hydrogen, chosen from carbon, nitrogen, phosphorus, oxygen and sulfur atoms and additionally comprises at least one bond chosen from ether, thioether, carboxamide, sulfonamide, hydrazine, amine and ester bonds, and aromatic or heteroaromatic bonds.

12. The compound according to claim 10, **characterized in that** the linkage group L is chosen from the following substituted or unsubstituted chains: polymethylene, arylene, alkylarylene, arylenealkyl, or arylthio.

13. The compound according to claims 1 to 9, **characterized in that** the reactive group G is chosen from the groups derived from the following compounds: an acrylamide, an activated amine (for example a cadaverine or an ethylenediamine), an activated ester, an aldehyde, an alkyl halide, an anhydride, an aniline, an azide, an aziridine, a carboxylic acid, a diazoalkane, a haloacetamide, a halotriazine, such as monochlorotriazine, dichlorotriazine, a hydrazine (including hydrazides), an imido ester, an isocyanate, an isothiocyanate, a maleimide, a sulfonyl halide, or a thiol, a ketone, an amine, an acid halide, a hydroxysuccinimidyl ester, a hydroxysulfosuccinimidyl ester, an azidonitrophenyl, an azidophenyl, a 3-(2-pyridyldithio)-propionamide, glyoxal and in particular the groups of formula: 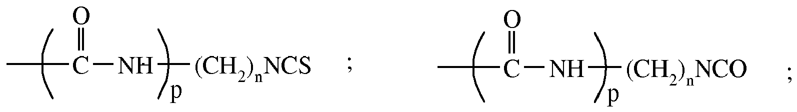 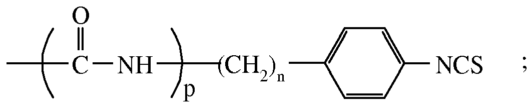 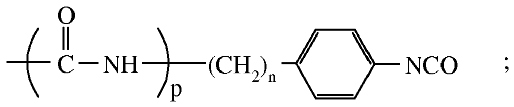 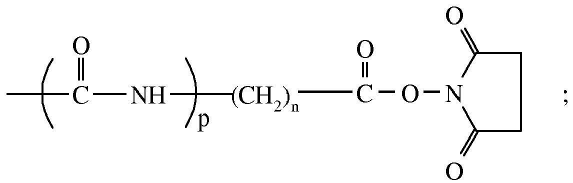 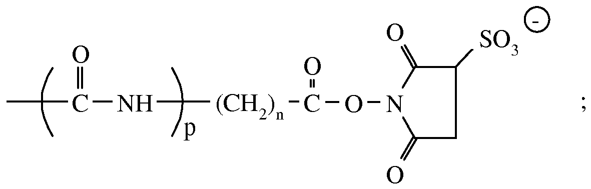 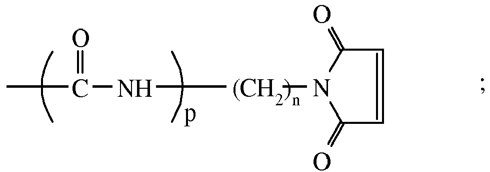 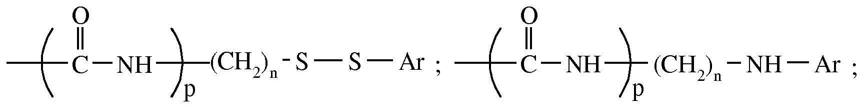 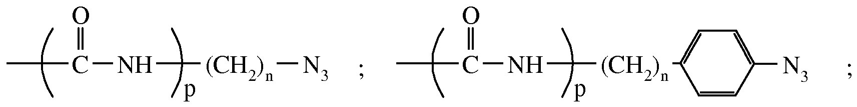 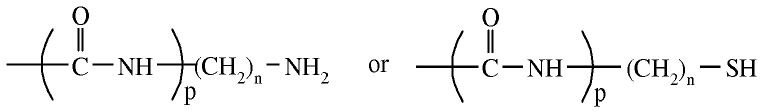
where n varies from 0 to 8 and p is equal to 0 or 1, and Ar is a 5- or 6-membered heterocycle comprising 1 to 3 heteroatoms, optionally substituted with a halogen atom.

14. The compound according to claims 1 to 9, **characterized in that** L is a C₃-C₁₀ alkylenyl, and **in that** G is an amine group.

15. The compound according to claim 1, of formula:

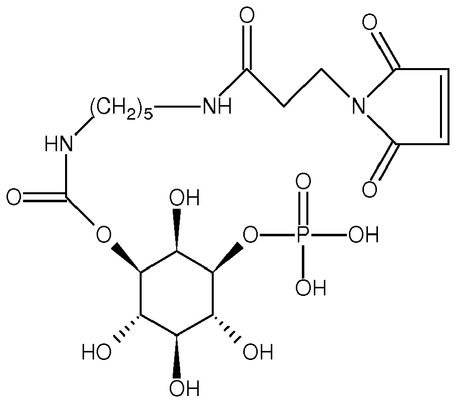

16. The compound according to any one of claims 1 to 14, **characterized in that** the conjugated substance or molecule M is a tracer.

17. The compound according to claim 16, **characterized in that** the conjugated substance or molecule M is a tracer chosen from: a radioisotope, a radiolabeled molecule, a fluorescent compound, a luminescent compound, an enzyme, a fluorescent chromophore, a light-absorbing chromophore, or any other molecule or substance allowing direct or indirect quantitative measurement, provided that when M is a radioelement and L is a single bond, then M is different from tritium.

18. The compound according to claim 17, **characterized in that** the conjugated substance or molecule M is a radioisotope chosen from: ¹²⁵I, ³²P, ³⁵S or a molecule labeled with one of the following isotopes: ¹²⁵I, ³²P, ³⁵S or ³H, with the exception of a phosphate group labeled with ³²P.

19. The compound according to claim 17, **characterized in that** the conjugated substance or molecule M is an enzyme or a fluorescent compound chosen from: rhodamines, cyanines, squaraines, BODIPYs, fluoresceins, compounds of the AlexaFluor family, rare-earth chelates, rare-earth cryptates, quantum dots, phycobiliproteins such as B-phycoerythrin, R-phycoerythrin, C-phycocyanin, allophycocyanin, GFP and its derivatives, a coral fluorescent protein, a peroxidase, a luciferase.

20. The compound according to any one of claims 1 to 14, **characterized in that** the conjugated substance or molecule M is an immunogenic compound.

21. The compound according to claim 20, **characterized in that** the conjugated substance or molecule M is an immunogenic compound chosen from: bovine serum albumin (BSA), cationic BSA (cBSA), KLH (keyhole limpet hemocyanin), thyroglobulin, ovalbumin, a liposome, a polymer of L-lysine or of L-glutamic acid, ficoll, dextran, or else polyethylene glycol.

22. The compound according to any one of claims 1 to 14, **characterized in that** the conjugated substance or molecule M is a solid support.

23. The compound according to claim 22, **characterized in that** the conjugated substance or molecule M is a solid support chosen from: magnetic or nonmagnetic microbeads, microplate wells, tubes, a solid phase, a fluorescent microsphere.

24. A compound of formula: 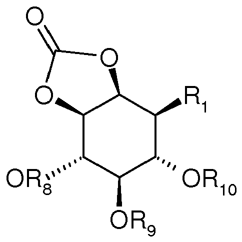 in which:
R₁ is a group -OPO(OR₇)₂;
R₇, R₈, R₉, R₁₀ are identical or different and are non-acid-sensitive protecting groups.

25. A compound of formula: 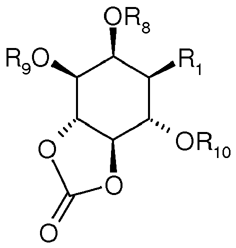 in which:
R₁ is a group -OPO(OR₇)₂;
R₇, R₈, R₉, R₁₀ are identical or different and are non-acid-sensitive protecting groups.

26. The compound according to one of claims 24 and 25, **characterized in that** R₈, R₉, R₁₀ are protecting groups chosen from the groups: ester residues, such as pivaloyl, benzoyl, chloroacetyl, phenylacetyl, benzyloxycarbonyl, silyl ether residues, such as trimethylsilyloxy, triethylsilyloxy, tert-butyldimethylsilyloxy, tert-butyldiphenylsilyloxy, benzyloxy, p-methoxybenzyloxy, 3,4-dimethoxybenzyloxy, allyloxy, allyloxycarboxy, and R₇ is a benzyl group or alternatively the two groups R₇ form together an o-xylylene group.

27. An anti-IP1 polyclonal or monoclonal antibody obtained by immunizing a mammal with a compound according to one of claims 20 and 21.

28. A kit for assaying IP1 comprising:
an IP1 analog according to claims 1 to 9, and
a ligand specific for IP1,
at least one of these components being directly or indirectly labeled with a tracer.

29. The kit according to claim 28, **characterized in that** it additionally comprises an agent blocking certain enzymes of the inositol cycle, in particular lithium chloride.

30. The kit according to claim 28, **characterized in that** the ligand specific for IP1 is a monoclonal or polyclonal antibody specific for IP1.

31. The kit for assaying IP1 according to claim 28, **characterized in that** the tracer is chosen from: a radioelement, a fluorescent compound, a luminescent compound, an enzyme, a fluorescent chromophore, a light-absorbing chromophore, or any other molecule or substance allowing a direct or indirect quantitative measurement.

32. The kit according to claim 28, **characterized in that** it contains a donor compound and an acceptor compound emitting a signal resulting from a proximity transfer with the donor compound, the donor compound being directly or indirectly linked to the IP1 analog, and the acceptor compound being directly or indirectly linked to the ligand specific for IP1.

33. The kit according to claim 28, **characterized in that** it contains a donor compound and an acceptor compound emitting a signal resulting from a proximity transfer with the donor compound, the acceptor compound being directly or indirectly linked to the IP1 analog, and the donor compound being directly or indirectly linked to the ligand specific for IP1.

34. The kit according to one of claims 28 and 29, **characterized in that** the donor compound and the acceptor compound are fluorescent compounds, **in that** the proximity transfer is an energy transfer and **in that** the emitted signal is a fluorescent signal.

35. A method for detecting the IP1 contained in a sample, **characterized in that** it comprises the following steps:
bringing the sample into contact with a ligand specific for IP1 detecting the complexes formed between said ligand and the IP1 present in the sample.

36. The method according to claim 35, **characterized in that** the ligand specific for IP1 is directly or indirectly labeled with a tracer.

37. The method according to claim 35, additionally comprising a step for introducing into the sample a known quantity of tritiated IP1 or of IP1 directly or indirectly labeled with a tracer.

38. The method according to one of claims 36 and 37, **characterized in that** the tracer is chosen from: a radioelement, a fluorescent compound, a luminescent compound, an enzyme, a fluorescent chromophore, a light-absorbing chromophore, or any other molecule or substance allowing a direct or indirect quantitative measurement.

39. The method according to claim 35, **characterized in that** the ligand specific for IP1 is directly or indirectly conjugated with a donor compound, **in that** the sample is brought into contact with IP1 directly or indirectly conjugated with an acceptor compound, and the signal emitted by the acceptor compound is measured, this signal resulting from a proximity transfer between the donor and the acceptor and being inversely proportional to the quantity of IP1 present in the sample.

40. The method according to claim 35, **characterized in that** the ligand specific for IP1 is directly or indirectly conjugated with an acceptor compound, **in that** the sample is brought into contact with IP1 directly or indirectly conjugated with a donor compound, and the signal emitted by the acceptor compound is measured, this signal resulting from a proximity transfer between the donor and the acceptor and being inversely proportional to the quantity of IP1 present in the sample.

41. The method according to one of claims 35 to 40, **characterized in that** the donor compound and the acceptor compound are fluorescent compounds, **in that** the proximity transfer is an energy transfer and **in that** the emitted signal is a fluorescent signal.

42. The method according to claim 41, **characterized in that** the fluorescent donor compound is a rare-earth cryptate or chelate and the fluorescent acceptor compound is chosen from: cyanines, rhodamines, squaraines, BODIPYs, fluoresceins, AlexaFluors, quantum dots, phycobiliproteins, such as B-phycoerythrin, R-phycoerythrin, C-phycocyanin, allophycocyanin, GFP and its derivatives, a coral fluorescent protein.

43. The method for detecting IP1 according to any one of claims 35 to 42, **characterized in that** the ligand specific for IP1 is a monoclonal or polyclonal antibody, an antibody fragment, a protein, a peptide or an aptamer.

44. The method according to claim 35, **characterized in that** the sample is brought into contact with an antibody specific for IP1 and an IP1 analog attached to a solid support, and additionally comprising the following steps:
washing the solid support;
adding an anti-species antibody recognizing the anti-IP1 antibody, said anti-species antibody being labeled with a tracer;
detecting the anti-species antibody,
the quantity of anti-species antibody being inversely proportional to the quantity of anti-IP1 antibody/IP1 complex present in the sample.

45. The method according to claim 35, **characterized in that** the sample is brought into contact with an antibody specific for IP1 attached to a solid support and with an IP1 analog labeled with a tracer, and additionally comprising the following steps:
- bringing the sample into contact with an anti-IP1 antibody attached to a solid support and with an IP1 analog labeled with a tracer, and additionally comprising the following steps:
- washing the solid support;
- detecting the labeled IP1; the quantity of labeled IP1 being inversely proportional to the quantity of anti-IP1 antibody/IP1 complex present in the sample.

46. A method for screening compounds which are agonists of a membrane receptor whose activation causes the production of IP1 in the cell, this method comprising the following steps:
(i) addition of a test compound to a culture medium comprising cells expressing a receptor whose activation causes the production of IP1,
(ii) determination of the quantity of IP1 using a method according to any one of claims 35 to 43,
(iii) comparison of the quantity of IP1 determined in the presence and in the absence of this compound, an increase in the quantity of IP1 making it possible to identify the test compound as an agonist of said receptor.

47. The method according to claim 46, **characterized in that** step (ii) comprises the addition, to the medium, of an anti-IP1 antibody labeled with a fluorescent donor or acceptor compound and the addition of IP1 labeled with a fluorescent acceptor or, respectively donor, compound, and the determination of the quantity of IP1 consists in measuring the light signal resulting from the energy transfer between the two fluorescent compounds, and step (iii) comprises the comparison of the signal measured in the presence and in the absence of the test compound, a reduction in the signal measured in the presence of a test compound making it possible to identify this compound as an agonist of said receptor.

48. A method for screening compounds that are antagonists of a membrane receptor whose activation causes the production of IP1 in the cell, this method comprising the following steps:
(i) addition of the test compound to a culture medium comprising cells expressing a receptor whose activation causes the production of IP1,
(ii) addition of a known agonist of said receptor,
(iii) determination of the quantity of IP1 using a method according to any one of claims 36 to 44,
(iv) comparison of the quantity of IP1 determined in the presence and in the absence of the test compound, a reduction in the quantity of IP1 making it possible to identify the test compound as an antagonist of said receptor.

49. The method according to claim 48, **characterized in that** step (iii) comprises the addition, to the medium, of an anti-IP1 antibody labeled with a fluorescent donor or acceptor compound and the addition of IP1 labeled with a fluorescent acceptor or, respectively donor, compound, and the determination of the quantity of IP1 consists in measuring the light signal resulting from the energy transfer between the two fluorescent compounds, and step (iv) comprises the comparison of the signal measured in the presence and in the absence of the test compound, an increase in the signal measured in the presence of the test compound making it possible to identify this compound as an antagonist of said receptor.

50. A method of screening compounds that are inverse agonists of a constitutively active membrane receptor, this method comprising the following steps:
(i) addition of a test compound to a culture medium comprising cells expressing a constitutively active receptor, and whose activity causes the production of IP1,
(ii) determination of the quantity of IP1 using a method according to any one of claims 36 to 44,
(iii) comparison of the quantity of IP1 determined in the presence and in the absence of the test compound, a reduction in the quantity of IP1 making it possible to identify the test compound as an inverse agonist of said receptor.

51. The method according to claim 50, **characterized in that** step (ii) comprises the addition, to the medium, of an anti-IP1 antibody labeled with a fluorescent donor or acceptor compound and the addition of IP1 labeled with a fluorescent acceptor or, respectively donor, compound, and the determination of the quantity of IP1 consists in measuring the light signal resulting from the energy transfer between the two fluorescent compounds, and step (iii) comprises the comparison of the signal measured in the presence and absence of the test compound, an increase in the signal measured in the presence of the test compound making it possible to identify this compound as an inverse agonist of said receptor.
